# EUROPEAN PATENT APPLICATION

(11) **EP 4 831 713 A1**
(43) Date of publication of application: **28.10.2026**
(21) Application number: 24914861.0
(22) Date of filing: 29.08.2024
(51) Int. Cl.: G02B 13/00, G02B 13/18, G03B 17/17, G03B 30/00, G02B 15/14

(54) **OPTICAL LENS, CAMERA MODULE AND ELECTRONIC DEVICE**

(30) Priority: 07.01.2024 CN 202410023387
(71) Applicant: Huawei Technologies Co., Ltd., Shenzhen, Guangdong 518129 (CN)
(72) Inventor: WANG, Wei, Shenzhen, Guangdong 518129 (CN); YE, Haishui, Shenzhen, Guangdong 518129 (CN)
(74) Representative: Gill Jennings & Every LLP
(86) International application number: PCT/CN2024/115582
(87) International publication number: WO 2025/145639

(57) **Abstract**

This application relates to the field of optical lens assembly technologies, and provides an optical lens assembly, a camera module, and an electronic device, to resolve a problem of large design difficulty of a focusing motor of a camera module in a related technology. The optical lens assembly includes a front lens group and a rear lens group located on an image side of the front lens group. The front lens group includes a first turning element and at least one positive lens located on an object side of the first turning element, where the first turning element has a first reflective surface, the first reflective surface is configured to reflect a light beam passing through the at least one positive lens to the rear lens group, and the rear lens group is a focusing lens group, and is movable relative to the front lens group along an optical axis of the rear lens group; and an effective focal length f_{g0} of the front lens group and an effective focal length f_{A} of the optical lens assembly in a state of focusing on a distant scene satisfy: f_{A}/f_{g0}<1.0. This application may be applied to an electronic device like a mobile phone.

## Description

This application claims priority to Chinese Patent Application No. 202410023387.6, filed with the China National Intellectual Property Administration on January 7, 2024 and entitled "OPTICAL LENS ASSEMBLY, CAMERA MODULE, AND ELECTRONIC DEVICE", which is incorporated herein by reference in its entirety.

### TECHNICAL FIELD

This application relates to the field of optical lens assembly technologies, and in particular, to an optical lens assembly, a camera module, and an electronic device.

### BACKGROUND

Currently, camera modules have become one of important components of electronic devices such as mobile phones or tablet computers. Through the camera modules in the electronic devices, users can easily capture desired photos to meet their photographing needs. Therefore, how to design camera modules has become a key topic in the industry.

For an optical lens assembly of a camera module in a related technology, during focusing, the entire optical lens assembly usually moves along an optical axis to cause an imaging surface of the optical lens assembly to coincide with a photosensitive surface of a photosensitive element. However, when switching between a state of focusing on a distant scene and a state of focusing on a near scene, the optical lens assembly has a shorter focusing stroke and requires a focusing motor to have extremely high focusing precision. This leads to large design difficulty of the focusing motor and is unfavorable for reducing costs of the camera module.

### SUMMARY

Embodiments of this application provide an optical lens assembly, a camera module, and an electronic device, to resolve a problem of large design difficulty of a focusing motor of a camera module in a related technology.

To achieve the foregoing objectives, the following technical solutions are used in embodiments of this application.

According to a first aspect, an embodiment of this application provides an optical lens assembly, including a front lens group and a rear lens group located on an image side of the front lens group, where the front lens group includes a first turning element and at least one positive lens located on an object side of the first turning element, the first turning element has a first reflective surface, the first reflective surface is configured to reflect a light beam passing through the at least one positive lens to the rear lens group, and the rear lens group is a focusing lens group, and is movable relative to the front lens group along an optical axis of the rear lens group; and an effective focal length f_{g0} of the front lens group and an effective focal length f_{A} of the optical lens assembly in a state of focusing on a distant scene satisfy: f_{A}/f_{g0}<1.0.

According to the optical lens assembly in this embodiment of this application, a range of a ratio of the effective focal length f_{A} of the optical lens assembly to the effective focal length f_{g0} of the front lens group G0 is properly set, that is, f_{A}/f_{g0}<1.0. In this way, a focusing stroke compression ratio of the optical lens assembly is small, that is, a minimum value of the focusing stroke compression ratio of the optical lens assembly is less than 1. This can make the optical lens assembly have a long focusing stroke while switching between a state of focusing on a near scene and a state of focusing on a distant scene, and can reduce requirements for focusing precision of a focusing motor, thereby reducing design difficulty of the focusing motor, and further reducing costs of the camera module.

In some embodiments, f_{A}/f_{g0}≤0.38. In this way, when the optical lens assembly is in the state of focusing on a near scene, a smaller object distance (namely, a smaller minimum macro distance) can be implemented.

In some embodiments, f_{A}/f_{g0}≥0.392. In this way, a total track length of the optical lens assembly may be small.

In some embodiments, a minimum value of the focusing stroke compression ratio of the rear lens group is ξₘᵢₙ=|1-(f_{A}/f_{g0})²|, and ξₘᵢₙ satisfies: ξₘᵢₙ<1.0. This helps improve focusing precision of the optical lens assembly.

In some embodiments, ξₘᵢₙ≥0.855. This helps shorten a focusing stroke of the rear lens group while ensuring focusing precision of the optical lens assembly.

In some embodiments, ξₘᵢₙ≤0.846. This helps further improve the focusing precision of the optical lens assembly.

In some embodiments, the focusing stroke compression ratio ξ of the rear lens group satisfies: 0.74≤ξ≤1.15. This helps shorten a focusing stroke of the rear lens group while ensuring focusing precision of the optical lens assembly.

In some embodiments, when the optical lens assembly is in the state of focusing on a near scene, ξ satisfies: ξ≥0.9. This helps shorten the focusing stroke in the state of focusing on a near scene while ensuring the focusing precision.

In some embodiments, an effective focal length f_{g1} of the rear lens group and the effective focal length f_{A} of the optical lens assembly in the state of focusing on a distant scene satisfy: f_{A}/f_{g1}≥0.47. This can avoid an excessively small value of ξₘᵢₙ, so that a focusing stroke of the optical lens assembly can be small.

In some embodiments, f_{A}/f_{g1}≤1.5. This can avoid an excessively large value of ξₘᵢₙ, thereby helping ensure focusing precision requirements of the optical lens assembly.

In some embodiments, the effective focal length f_{A} of the optical lens assembly in the state of focusing on a distant scene and an effective focal length f_{B} of the optical lens assembly in the state of focusing on a near scene satisfy: (f_{A}-f_{B})/f_{A}<0.09. In this way, a total track length of the optical lens assembly may be small.

In some embodiments, both the front lens group and the rear lens group have positive focal powers. This helps reduce an effective focal length of the optical lens assembly, thereby reducing a total track length of the optical lens assembly.

In some embodiments, the rear lens group includes a first lens, a second lens, a third lens, a fourth lens, and a fifth lens in a direction from an object side to an image side, where the first lens has a positive focal power, the second lens has a negative focal power, one of the third lens and the fourth lens has a positive focal power, the other of the third lens and the fourth lens has a negative focal power, and the fifth lens has a negative focal power or a positive focal power. This helps reduce an aberration of the optical lens assembly.

In some embodiments, the second lens includes a positive lens and a negative lens that are spaced apart. This helps increase a quantity of lens surfaces in the rear lens group, thereby helping correct an aberration of the optical lens assembly.

In some embodiments, the first turning element is a reflector. This can further reduce a weight of the first turning element, thereby reducing a weight of the optical lens assembly. In addition, a medium around the reflector is air, with a refractive index lower than that of a prism. In this way, a total track length of the optical lens assembly may be small.

In some embodiments, the first turning element is a prism and has a first light entrance surface and a first light exit surface, the first light entrance surface is disposed facing a side on which the at least one positive lens is located, and the first light exit surface is disposed facing a side on which the rear lens group is located; and in the at least one positive lens, a positive lens adjacent to the first turning element and the first light entrance surface are spaced apart. This increases a design freedom of the front lens group, thereby helping correct an aberration of the optical lens assembly.

In some embodiments, the optical lens assembly further includes a second turning element, the second turning element is disposed on an image side of the rear lens group, the second turning element has a second reflective surface, and the second reflective surface is configured to reflect a light beam passing through the rear lens group to a side of the optical axis of the rear lens group. This can fold an optical path of the optical lens assembly, to reduce a size of the optical lens assembly in a direction along the optical axis of the rear lens group.

In some embodiments, the second turning element is a reflector. This can further reduce a weight of the second turning element, thereby reducing a weight of the optical lens assembly.

In some embodiments, the second turning element is a prism and has a second light entrance surface and a second light exit surface, the second light entrance surface is disposed facing the side on which the rear lens group is located, and the second light exit surface is located on the side of the optical axis of the rear lens group. In this way, the prism can refract stray light out of a photosensitive surface of the photosensitive element, thereby avoiding formation of a ghost image when the stray light is directly incident on the photosensitive surface of the photosensitive element.

According to a second aspect, an embodiment of this application provides a camera module, including a photosensitive element and the optical lens assembly according to the first aspect. The photosensitive element is disposed on an image side of the optical lens assembly.

Beneficial effects of the camera module in this embodiment of this application are the same as beneficial effects of the optical lens assembly in the first aspect. Details are not described herein again.

According to a third aspect, an embodiment of this application provides an electronic device, including a housing and the camera module according to the second aspect. The camera module is mounted on the housing.

Beneficial effects of the electronic device in this embodiment of this application are the same as beneficial effects of the optical lens assembly in the first aspect. Details are not described herein again.

### BRIEF DESCRIPTION OF DRAWINGS

FIG. 1a is a diagram of definitions of an image-space principal plane and an image-space principal point of an optical system;
FIG. 1b is a diagram of definitions of an object-space principal plane and an object-space principal point of an optical system;
FIG. 1c is a diagram of definitions of an object distance and an image distance of an optical system;
FIG. 2 is a diagram of a back of an electronic device (a mobile phone) according to some embodiments of this application;
FIG. 3 is an A-A sectional view of the electronic device in FIG. 2;
FIG. 4 is a diagram of an optical system of a camera module according to Embodiment 1 of this application;
FIG. 5A to FIG. 5D are principle diagrams in which an optical lens assembly uses internal focusing and the optical lens assembly uses overall movement focusing according to some embodiments of this application;
FIG. 6a is a diagram of a relationship among f_{A}/f_{g0}, ξₘᵢₙ, and ξ of an optical lens assembly according to some embodiments of this application;
FIG. 6b is a diagram of a relationship among f_{A}/f_{g0}, ξₘᵢₙ, ξ, and a total track length/effective focal length of an optical lens assembly according to some embodiments of this application;
FIG. 7 is a diagram of an optical system of a camera module according to Embodiment 2 of this application;
FIG. 8 is a diagram of an optical system of a camera module according to Embodiment 3 of this application;
FIG. 9a is a state diagram of an optical system of a camera module during focusing on a distant scene according to Embodiment 4 of this application;
FIG. 9b is a state diagram of an optical system of a camera module during focusing on a near scene according to Embodiment 4 of this application;
FIG. 9c(a) and FIG. 9c(b) are paraxial model diagrams of an optical system of a camera module according to Embodiment 4 of this application in a focusing process;
FIG. 9d is a simulation effect diagram of an optical system of a camera module according to Embodiment 4 of this application when an object distance is infinite;
FIG. 9e is a simulation effect diagram of an optical system of a camera module according to Embodiment 4 of this application when an object distance is 250 mm;
FIG. 9f shows a curve of a relationship between an effective focal length and a distance between an image-space principal plane of a front lens group and an object-space principal plane of a rear lens group in a focusing process of an optical lens assembly according to Embodiment 4 of this application;
FIG. 9g shows a curve of a relationship between an object distance and an effective focal length in a focusing process of an optical lens assembly according to Embodiment 4 of this application;
FIG. 9h shows a curve of a relationship between a distance between an image-space principal plane of a rear lens group and an image plane and a distance between an image-space principal plane of a front lens group and an object-space principal plane of the rear lens group in a focusing process of an optical lens assembly according to Embodiment 4 of this application;
FIG. 9i shows a curve of a relationship between a focusing stroke compression ratio and an object distance in a focusing process of an optical lens assembly according to Embodiment 4 of this application;
FIG. 10a is a diagram of an optical system of a camera module according to Embodiment 5 of this application;
FIG. 10b is a simulation effect diagram of an optical system of a camera module according to Embodiment 5 of this application when an object distance is infinite;
FIG. 10c is a simulation effect diagram of an optical system of a camera module according to Embodiment 5 of this application when an object distance is 250 mm;
FIG. 10d shows a curve of a relationship between an effective focal length and a distance between an image-space principal plane of a front lens group and an object-space principal plane of a rear lens group in a focusing process of an optical lens assembly according to Embodiment 5 of this application;
FIG. 10e shows a curve of a relationship between an object distance and an effective focal length in a focusing process of an optical lens assembly according to Embodiment 5 of this application;
FIG. 10f shows a curve of a relationship between a distance between an image-space principal plane of a rear lens group and an image plane and a distance between an image-space principal plane of a front lens group and an object-space principal plane of the rear lens group in a focusing process of an optical lens assembly according to Embodiment 5 of this application;
FIG. 10g shows a curve of a relationship between a focusing stroke compression ratio and an object distance in a focusing process of an optical lens assembly according to Embodiment 5 of this application;
FIG. 11a is a diagram of an optical system of a camera module according to Embodiment 6 of this application;
FIG. 11b shows a curve of a relationship between an effective focal length and a distance between an image-space principal plane of a front lens group and an object-space principal plane of a rear lens group in a focusing process of an optical lens assembly according to Embodiment 6 of this application;
FIG. 11c shows a curve of a relationship between an object distance and an effective focal length in a focusing process of an optical lens assembly according to Embodiment 6 of this application;
FIG. 11d shows a curve of a relationship between a distance between an image-space principal plane of a rear lens group and an image plane and a distance between an image-space principal plane of a front lens group and an object-space principal plane of the rear lens group in a focusing process of an optical lens assembly according to Embodiment 6 of this application;
FIG. 11e shows a curve of a relationship between a focusing stroke compression ratio and an object distance in a focusing process of an optical lens assembly according to Embodiment 6 of this application;
FIG. 12a is a diagram of an optical system of a camera module according to Embodiment 7 of this application;
FIG. 12b shows a curve of a relationship between an effective focal length and a distance between an image-space principal plane of a front lens group and an object-space principal plane of a rear lens group in a focusing process of an optical lens assembly according to Embodiment 7 of this application;
FIG. 12c shows a curve of a relationship between an object distance and an effective focal length in a focusing process of an optical lens assembly according to Embodiment 7 of this application;
FIG. 12d shows a curve of a relationship between a distance between an image-space principal plane of a rear lens group and an image plane and a distance between an image-space principal plane of a front lens group and an object-space principal plane of the rear lens group in a focusing process of an optical lens assembly according to Embodiment 7 of this application;
FIG. 12e shows a curve of a relationship between a focusing stroke compression ratio and an object distance in a focusing process of an optical lens assembly according to Embodiment 7 of this application;
FIG. 13a is a diagram of an optical system of a camera module according to Embodiment 8 of this application;
FIG. 13b shows a curve of a relationship between an effective focal length and a distance between an image-space principal plane of a front lens group and an object-space principal plane of a rear lens group in a focusing process of an optical lens assembly according to Embodiment 8 of this application;
FIG. 13c shows a curve of a relationship between an object distance and an effective focal length in a focusing process of an optical lens assembly according to Embodiment 8 of this application;
FIG. 13d shows a curve of a relationship between a distance between an image-space principal plane of a rear lens group and an image plane and a distance between an image-space principal plane of a front lens group and an object-space principal plane of the rear lens group in a focusing process of an optical lens assembly according to Embodiment 8 of this application;
FIG. 13e shows a curve of a relationship between a focusing stroke compression ratio and an object distance in a focusing process of an optical lens assembly according to Embodiment 8 of this application;
FIG. 14a is a diagram of an optical system of a camera module according to Embodiment 9 of this application;
FIG. 14b shows a curve of a relationship between an effective focal length and a distance between an image-space principal plane of a front lens group and an object-space principal plane of a rear lens group in a focusing process of an optical lens assembly according to Embodiment 9 of this application;
FIG. 14c shows a curve of a relationship between an object distance and an effective focal length in a focusing process of an optical lens assembly according to Embodiment 9 of this application;
FIG. 14d shows a curve of a relationship between a distance between an image-space principal plane of a rear lens group and an image plane and a distance between an image-space principal plane of a front lens group and an object-space principal plane of the rear lens group in a focusing process of the optical lens assembly according to Embodiment 9 of this application;
FIG. 14e shows a curve of a relationship between a focusing stroke compression ratio and an object distance in a focusing process of an optical lens assembly according to Embodiment 9 of this application;
FIG. 15a is a diagram of an optical system of a camera module according to Embodiment 10 of this application;
FIG. 15b shows a curve of a relationship between an effective focal length and a distance between an image-space principal plane of a front lens group and an object-space principal plane of a rear lens group in a focusing process of an optical lens assembly according to Embodiment 10 of this application;
FIG. 15c shows a curve of a relationship between an object distance and an effective focal length in a focusing process of an optical lens assembly according to Embodiment 10 of this application;
FIG. 15d shows a curve of a relationship between a distance between an image-space principal plane of a rear lens group and an image plane and a distance between an image-space principal plane of a front lens group and an object-space principal plane of the rear lens group in a focusing process of an optical lens assembly according to Embodiment 10 of this application; and
FIG. 15e shows a curve of a relationship between a focusing stroke compression ratio and an object distance in a focusing process of an optical lens assembly according to Embodiment 10 of this application.

### DESCRIPTION OF EMBODIMENTS

The following explains and describes related technical terms in embodiments of this application.

A focal power (focal power) is represented as a reciprocal of an image-space focal length (it is approximately considered that a refractive index of air is 1), and represents a capability of an optical lens assembly to refract a light ray. For a lens or a lens group with a positive focal power, the lens or lens group has a positive focal length, and has an effect of converging light rays. For a lens or a lens group with a negative focal power, the lens or lens group has a negative focal length, and has an effect of diverging light rays.

A positive lens is also referred to as a convergent lens or a convex lens. The convex lens is capable of converging light rays. The convex lens is classified into a biconvex lens, a planoconvex lens, a concave-convex lens (or a positive meniscus lens), and the like.

A negative lens is also referred to as a divergent lens or a concave lens. The concave lens has an effect of diverging light. The concave lens is classified into a biconcave lens, a planoconcave lens, a convex-concave lens, and the like.

An optical axis is an axis of symmetry of an optical system. For example, an optical axis of the optical lens assembly is an axis passing through a center of each optical element of the optical lens assembly. The optical axis is also a center line of a light beam (light column). The light beam rotates around the axis, and an optical characteristic does not change.

A focal length is a measurement manner for measuring light convergence or divergence in an optical system. The focal length is classified into an image-space focal length and an object-space focal length. The image-space focal length is a distance from an image-space principal plane to an image-space focus. Similarly, the object-space focal length is a distance from an object-space principal plane to an object-space focus. A focal length, an effective focal length (effective focal length, EFL), and a combined focal length described in embodiments of this application all are image-space focal lengths.

A principal plane of a lens (lens group), also referred to as a principal plane, includes an image-space principal plane and an object-space principal plane. Parallel light is irradiated on the lens (lens group), the light ray is refracted and then passes through an image-space focus, and after the refraction, the light ray is reversely extended and intersects with an incident light ray at a point. A plane that is perpendicular to an optical axis through this point is an image-space principal plane, and an intersection between the image-space principal plane and the optical axis of the optical lens assembly is an image-space principal point. Similarly, light emitted from an object-space focus is refracted by the lens and then becomes parallel light, and an incident ray is extended and intersects with the parallel light at a point. A plane that is perpendicular to an optical axis through this point is an object-space principal plane, and an intersection between the object-space principal plane and the optical axis of the optical lens assembly is an object-space principal point.

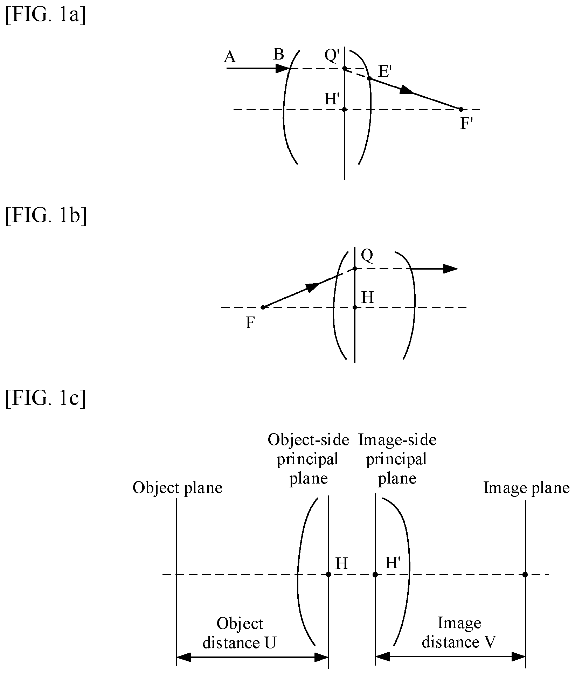

As shown in FIG. 1a, AB is an incident light ray parallel to an optical axis, and after the incident light ray passes through an optical system (the optical system may be a single lens, may be a lens group including a plurality of lenses, or the like), an emergent light ray E'F' intersects with the optical axis at F'. It can be learned from an imaging theory of an ideal optical system that F' is an image point of an object point on an infinite axis, and is referred to as an image-space focus. If the incident light ray AB and the emergent light ray E'F' are reversely extended, the two light rays will intersect at a point. It is assumed that the point is Q', and a plane perpendicular to the optical axis is drawn through Q' and intersects with the optical axis at a point H'. In this case, H' is referred to as an image-space principal point, a plane Q'H' is referred to as an image-space principal plane, and a distance from the principal point H' to the focus F' is referred to as an image-space focal length.

As shown in FIG. 1b, F is referred to as an object-space focus. It is assumed that an extension line of an incident light ray emitted by the focus F intersects with an extension line of a corresponding emergent light ray parallel to an optical axis at a point Q, and a plane that is perpendicular to the optical axis through the point Q intersects with the optical axis at a point H. In this case, the point H is referred to as an object-space principal point of an optical system, a plane QH is referred to as an object-space principal plane, and a distance from the object-space principal point H to the object-space focus F is referred to as an object-space focal length of the optical system.

An object distance is, as shown in FIG. 1c, a distance from an object plane to an object-space principal plane of an optical system, and is represented by an English letter U. The optical system may be a single lens, or may be a lens group including a plurality of lenses.

An image distance is, as shown in FIG. 1c, a distance from an image plane of an optical system to an image-space principal plane, and is represented by an English letter V. The optical system may be a single lens, or may be a lens group including a plurality of lenses.

Focusing specifically means adjusting a position of a lens group (namely, a focusing lens group) in an optical lens assembly to control an image distance, so that an image plane of the optical lens assembly falls on a photosensitive element, making imaging of the optical lens assembly clearest.

Internal focusing (Internal Focusing, IF for short) means that when an optical lens assembly performs focusing, a focusing lens group inside the optical lens assembly moves to complete focusing, and a total track length (TTL) of the optical lens assembly remains unchanged during focusing.

A focusing stroke is a movement distance of a focusing lens group in a focusing process of an optical lens assembly. For example, in a process in which the optical lens assembly switches from focusing on a long shot to focusing on a close shot, a distance by which the focusing lens group moves in a direction of an optical axis is a focusing stroke.

An image plane is located on an image side of all lenses in an optical lens assembly, and is a position at which an image is formed after a light ray passes through the lenses in the optical lens assembly in sequence.

An aperture is an entity that limits a light beam in an optical system. The stop may be an edge of a lens, a frame, or a specially designed aperture screen. The stop may function in two aspects: limiting a light beam or limiting a field of view (an imaging range) size. In the optical system, a stop that limits a light beam the most is referred to as an aperture stop, and a stop that limits a field of view (size) the most is referred to as a field stop.

A pupil is an image of an aperture stop. A conjugate image of the aperture stop passing through an optical system in front of the aperture stop is referred to as an entrance pupil, which is referred to as an entrance pupil for short. An entrance pupil diameter is a diameter of the entrance pupil.

A relative aperture is a ratio of an entrance pupil diameter D to an image-space focal length f', and is denoted as RA, that is, RA=D/f'.

An F number (Fno or F/#) is a reciprocal of a relative aperture, that is, F=f'/D. A smaller F number indicates a larger aperture and a smaller depth of field. On the contrary, a larger F number indicates a smaller aperture and a larger depth of field.

A total track length (total track length, TTL) is a distance from a surface of an optical lens assembly (or an optical system) closest to an object side to an image plane.

ImgH (Image Height) represents half of a diagonal length of an effective photosensitive region on a photosensitive element, namely, an image height.

An Abbe (Abbe) number, namely a dispersion coefficient, is a difference ratio of refractive indexes of an optical material at different wavelengths, and represents a degree of dispersion of the material.

An aberration (Aberration) is a deviation between an image formed by an uncorrected optical system and an image formed by an ideal optical system. The aberration includes a spherical aberration, a coma, a field curvature, astigmatism, a distortion, and a chromatic aberration.

The spherical aberration (Spherical aberration) is an aberration of a wide light beam. After passing through an optical system, a concentric light beam emitted from an on-axis point is no longer a concentric light beam. Light rays with different incident heights pass through the optical system and then intersect with an optical axis at different positions, and deviate from a paraxial image point (ideal image point) to different degrees. This deviation is referred to as a longitudinal spherical aberration, which is referred to as a spherical aberration for short. Due to the spherical aberration, an image point on a Gaussian image plane is no longer a point, but a circular blur spot. A radius of the blur spot is referred to as a transverse spherical aberration.

The coma (coma) is an aberration of a wide light beam at an off-axis point. In an optical system with a coma, an image point formed by an off-axis object point on an ideal image plane is similar to a comet-shaped light spot, a fine light beam close to a principal light ray intersects with the principal light ray to form a bright spot, and image points formed by light beams with different apertures away from the principal light ray are different rings away from the principal light ray. Therefore, this imaging defect is referred to as a coma.

The chromatic aberration (Chromatic Aberration, CA for short) is as follows: An optical material has different refractive indexes for colors of light of different wavelengths. Therefore, light rays of different colors of light of a same aperture have different intersections with an optical axis after passing through an optical system. Light rays of different colors of light of different apertures also have different intersections with the optical axis. As a result, at any image plane position, an image of an object point is a colored blur spot. A difference between imaging positions and imaging sizes of various colors of light is referred to as a chromatic aberration. There are two types of chromatic aberrations: an axial chromatic aberration and a transverse chromatic aberration.

The axial chromatic aberration is as follows: A difference between imaging positions of two colors of light on an on-axis point is referred to as a position chromatic aberration, and is also referred to as an axial chromatic aberration.

The transverse chromatic aberration is as follows: One medium has different refractive indexes for different colors of light. Therefore, for an off-axis object point, transverse magnifications of different colors of light are not equal. This difference is referred to as a transverse chromatic aberration, and is also referred to as a magnification chromatic aberration.

The distortion (distortion) is also referred to as an aberration. After principal light rays of different fields of view pass through an optical lens assembly, a height of an intersection between the principal light rays and a Gaussian image plane is not equal to an ideal image height, and a difference between the two is a distortion.

The field curvature (field curvature) represents a difference in a direction of an optical axis between a position of a clearest image point in a non-central field of view after light passes through an optical lens assembly group and a position of a clearest image point in a central field of view. When a field curvature exists, image points beyond a paraxial region on a Gaussian plane all become blurred, a plane object image becomes a rotational curved surface, and no perfect object plane image is obtained on an image plane.

The astigmatism (astigmatism) is an axial distance between a meridian image point and a sagittal image point of a fine light beam that do not overlap.

A meridian plane is a plane including a principal light ray emitted by an object point outside a principal axis of an optical system and the principal axis of the optical system. Light rays on the meridian plane are collectively referred to as a meridian light beam. A point formed by the meridian light beam is referred to as a meridian image point. An image plane on which the meridian image point is located is referred to as a meridian image plane.

A sagittal plane is a plane that passes through a principal light ray emitted by an object point outside a principal axis of an optical system and that is perpendicular to a meridian plane. Light rays on the sagittal plane are collectively referred to as a sagittal light beam. A point formed by the sagittal light beam is referred to as a sagittal image point. An image plane on which the sagittal image point is located is referred to as a sagittal image plane.

Technical solutions in some embodiments of this application are clearly and completely described below with reference to accompanying drawings.

This application provides an optical lens assembly, a camera, and an electronic device. The optical lens assembly includes a front lens group and a rear lens group, and the rear lens group is a focusing lens group. Focusing precision of the optical lens assembly can be improved by properly allocating a focal power of the front lens group.

The electronic device in embodiments of this application may be an electronic device that has a camera module, like a mobile phone, a tablet computer, a notebook computer, or a wearable device (for example, a smartwatch). The following specifically describes the electronic device in embodiments of this application by using a mobile phone as an example. For another type of electronic device, refer to a structure of the mobile phone embodiment for specific setting. Details are not described herein again.

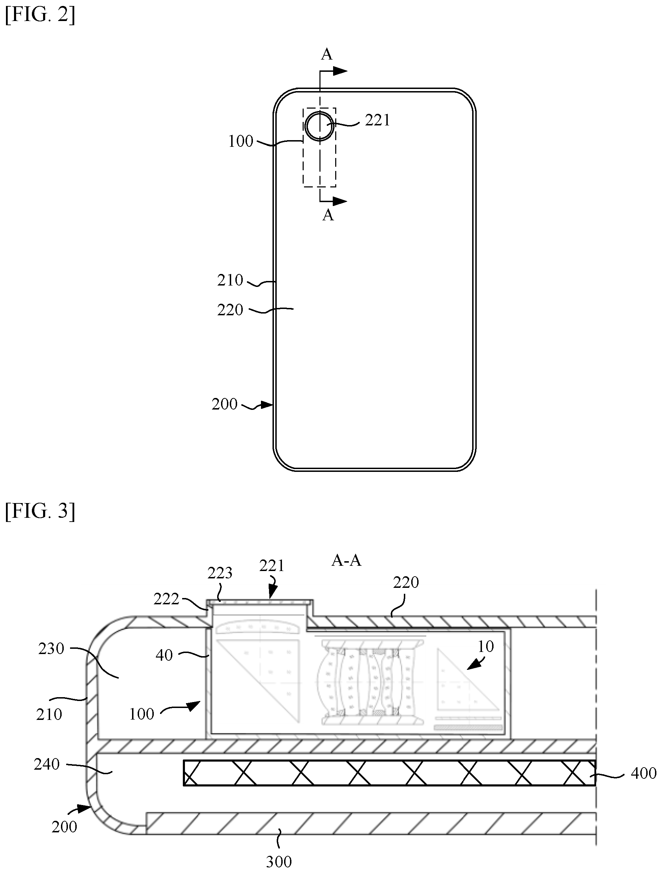

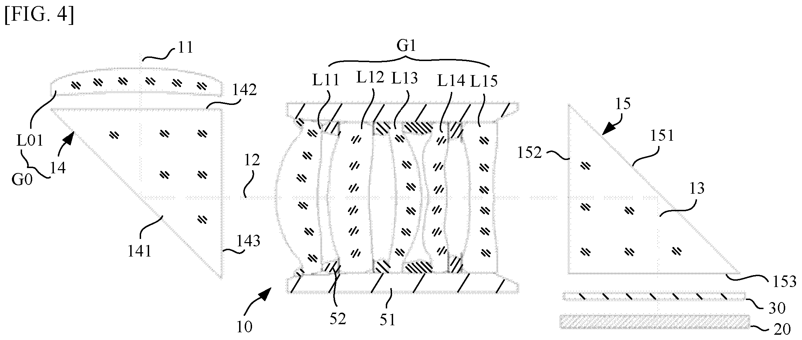

FIG. 2 is a diagram of a back of an electronic device (a mobile phone) according to some embodiments of this application. FIG. 3 is an A-A sectional view of the electronic device in FIG. 2. FIG. 4 is a diagram of an optical system of a camera module 100 according to Embodiment 1 of this application. As shown in FIG. 2 to FIG. 4, the electronic device includes a housing 200, a display 300, and a camera module 100, and the camera module 100 is mounted on the housing 200.

In some embodiments, as shown in FIG. 3, the housing 200 includes a middle frame 210 (also referred to as a front housing or a front frame) and a rear cover 220 (also referred to as a battery cover). The display 300 and the rear cover 220 are respectively mounted on two opposite sides of the middle frame 210. The rear cover 220 and the middle frame 210 enclose first accommodating space 230. The camera module 100 is a rear-facing camera module and is disposed in the first accommodating space 230. A light inlet of the camera module 100 is provided opposite to a camera window 221 disposed on the rear cover 220, to ensure that the camera module 100 can receive light rays emitted by ato-be-photographed scene outside the housing 200.

The camera window 221 may be directly disposed on the rear cover 220. As shown in FIG. 3, the camera window 221 may alternatively be disposed on a camera decoration part 222. Specifically, the camera decoration part 222 is disposed on the rear cover 220, an opening is provided on a side of the camera decoration part 222, a protection cover 223 is disposed at the opening, and a clear aperture region of the protection cover 223 is the camera window 221. As shown in FIG. 3, the camera decoration part 222 may be integrated with the rear cover 220, but this is not limited thereto. Alternatively, the camera decoration part 222 and the rear cover 220 may be designed in a split manner.

The display 300 and the middle frame 210 enclose second accommodating space 240. An electronic component like a mainboard 400 is disposed in the second accommodating space 240. The mainboard 400 is separately connected to the display 300 and the camera module 100 through a flexible circuit board. A processor (not shown in the figure) is disposed on the mainboard 400. The processor is configured to: obtain image data from the camera module 100, process the image data, and then transmit a processed signal to the display 300.

The middle frame 210 and the rear cover 220 may be detachably connected, or may be of an integrated structure. This is not specifically limited herein. The display 300 may be a liquid crystal display, or may be an OLED (Organic Light-Emitting Diode, organic light-emitting diode) display. This is not specifically limited herein.

The camera module 100 in embodiments of this application may be mounted in an upper left corner, a middle upper part, or an upper right corner of a back of the electronic device. This is not specifically limited herein. The camera module 100 may be mounted on the back of the electronic device and used as a rear-facing camera module, or may be used as a front-facing camera module of the electronic device.

In some embodiments, as shown in FIG. 3 and FIG. 4, the camera module 100 includes an optical lens assembly 10, a photosensitive element 20, and a light filter 30. The photosensitive element 20 is located on an image side of the optical lens assembly 10. The light filter 30 is located between the optical lens assembly 10 and the photosensitive element 20, so that a light ray can pass through the optical lens assembly 10 and be irradiated to a photosensitive surface of the photosensitive element 20.

The optical lens assembly 10 mainly performs imaging by using a lens refraction principle. To be specific, a light ray of a to-be-photographed scene passes through the optical lens assembly 10 to form a clear image on a focal plane of the optical lens assembly 10, the image of the scene is recorded through the photosensitive element 20 located on the focal plane, the photosensitive element 20 converts an optical image into an electrical signal and transmits the electrical signal to a processor, and the processor transmits the electrical signal to the display 300, to display the image of the to-be-photographed scene on the display 300.

The photosensitive element 20 (also referred to as an image sensor) is a semiconductor chip, includes hundreds of thousands to millions of photodiodes on a surface, and generates a charge when exposed to light. The photosensitive element 20 may be a charge coupled device (charge coupled device, CCD), or may be a complementary metal-oxide-semiconductor (complementary metal-oxide semiconductor, CMOS). This is not specifically limited herein.

The light filter 30 is configured to: filter out undesired bands in light rays, and prevent the photosensitive element 20 from generating a false color or a ripple, to improve effective resolution and color reproduction of the photosensitive element 20. In some embodiments, as shown in FIG. 3, the light filter 30 is an infrared light filter.

As shown in FIG. 3, the light filter 30 may be independently disposed, or the light filter 30 may be attached to a surface of a lens or a prism of the optical lens assembly 10, to implement light filtering. This is not specifically limited herein.

In some embodiments, as shown in FIG. 3, the camera module 100 includes a camera housing 40, and the optical lens assembly 10, the photosensitive element 20, and the light filter 30 are disposed in the camera housing 40.

As shown in FIG. 4, the optical lens assembly includes a front lens group G0 and a rear lens group G1 located on an image side of the front lens group G0. The front lens group G0 includes a first turning element 14, and a positive lens (a positive lens L01 in FIG. 4) located on an object side of the first turning element 14. The first turning element 14 has a first reflective surface 141, where the first reflective surface 141 is configured to reflect a light beam passing through a positive lens to the rear lens group G1, and the rear lens group G1 is a focusing lens group, and is movable relative to the front lens group G0 along an optical axis (a second optical axis 12 shown in the figure) of the rear lens group G1. An effective focal length f_{g0} of the front lens group G0 and an effective focal length f_{A} of the optical lens assembly in a state of focusing on a distant scene satisfy: f_{A}/f_{g0}<1.0.

Certainly, an object side of the first turning element 14 is not limited to being provided with one positive lens, or may be provided with two or more positive lenses, or may be provided with a combination of a positive lens and a negative lens. This may be specifically determined based on an actual situation.

According to the optical lens assembly in this embodiment of this application, a range of a ratio of the effective focal length f_{A} of the optical lens assembly to the effective focal length f_{g0} of the front lens group G0 is properly set, that is, f_{A}/f_{g0}<1.0. In this way, a focusing stroke compression ratio of the optical lens assembly is small, that is, a minimum value of the focusing stroke compression ratio of the optical lens assembly is less than 1. This can make the optical lens assembly have a long focusing stroke while switching between a state of focusing on a near scene and a state of focusing on a distant scene, and can reduce requirements for focusing precision of a focusing motor, thereby reducing design difficulty of the focusing motor, and further reducing costs of the camera module.

The following specifically describes a concept of the focusing stroke compression ratio of the optical lens assembly.

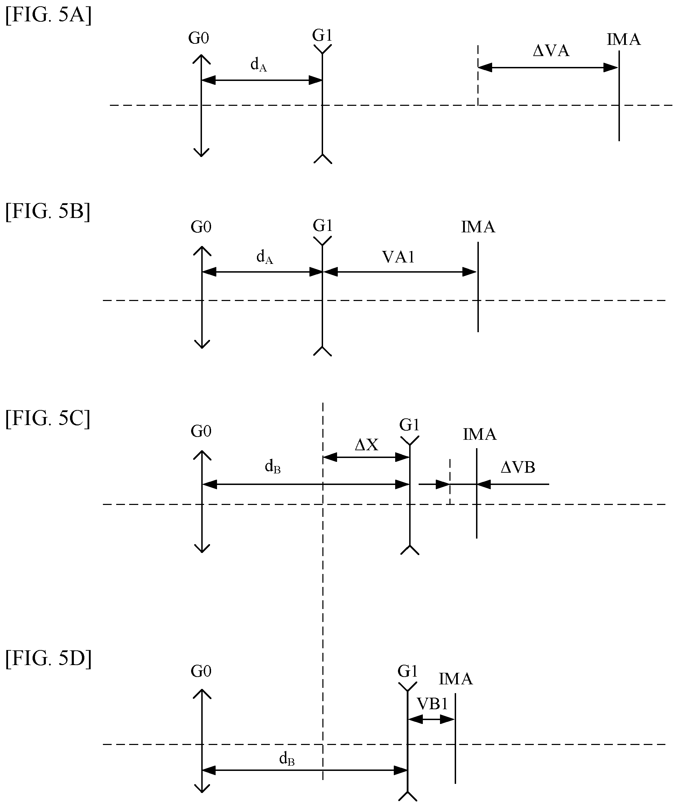

As shown in FIG. 5A to FIG. 5D, FIG. 5 A to FIG. 5D show diagrams of a calculation principle of a focusing stroke compression ratio of an optical lens assembly according to some embodiments of this application. FIG. 5B shows a state diagram of the optical lens assembly during focusing on a distant scene according to an embodiment of this application, and FIG. 5C shows a state diagram of the optical lens assembly during focusing on a near scene according to an embodiment of this application. The optical lens assembly in this embodiment of this application performs focusing through internal focusing.

As shown in FIG. 5B, d_{A} is a distance between an image-space principal plane of the front lens group G0 and an object-space principal plane of the rear lens group G1 when the optical lens assembly in this embodiment of this application is in a state of focusing on a distant scene. As shown in FIG. 5C, d_{B} is a distance between an image-space principal plane of the front lens group G0 and an object-space principal plane of the rear lens group G1 when the optical lens assembly in this embodiment of this application is in a state of focusing on a near scene.

Herein, d_{A} satisfies: ${d}_{A} = {f}_{g 0} + {f}_{g 1} - \left({f}_{g 0}∗{f}_{g 1}/{f}_{A}\right)$ (1)

As shown in FIG. 5A, it is assumed that the optical lens assembly in FIG. 5B uses an overall movement focusing manner. When the optical lens assembly is switched to the state of focusing on a near scene, a focusing stroke ΔV_{A} of the optical lens assembly satisfies:
${ΔV}_{A} = {{f}_{A}}^{2} / \left({U}_{A 0}′-{f}_{A}\right)$ (2)

It is assumed that the optical lens assembly in FIG. 5C uses an overall movement focusing manner. When the optical lens assembly is switched to the state of focusing on a distant scene, as shown in FIG. 5D, a focusing stroke ΔV_{B} of the optical lens assembly satisfies:
${ΔV}_{B} = {{f}_{B}}^{2} / \left({U}_{B 0}′-{f}_{B}\right)$ (3)

Herein, f_{B} in formula (3) is an effective focal length of the optical lens assembly in this embodiment of this application in the state of focusing on a near scene. U_{A0}' in formula (2) represents an object distance (namely, a shortest macro distance) of the optical lens assembly in the state of focusing on a near scene if the optical lens assembly uses the overall movement focusing manner when the distance between the image-space principal plane of the front lens group G0 and the object-space principal plane of the rear lens group G1 is d_{A}. U_{B0}' in formula (3) represents an object distance (namely, a shortest macro distance) of the optical lens assembly in the state of focusing on a near scene if the optical lens assembly uses the overall movement focusing manner when the distance between the image-space principal plane of the front lens group G0 and the object-space principal plane of the rear lens group G1 is d_{B}. Generally, when U_{A0}'≠U_{B0}' and a difference between effective focal lengths of the optical lens assembly is small, U_{A0}' is close to U_{B0}'.

As shown in FIG. 5C, when the optical lens assembly enters the state of focusing on a near scene, a movement amount (namely, the focusing stroke) of the rear lens group G1 is ΔX. In this case, a focusing stroke compression ratio ξ of the rear lens group G1 is defined as follows:
$ξ = \left|{ΔV}_{A}/ΔX\right|$ (4)

As shown in FIG. 5B, a distance V_{A1} from the image plane IMA to the image-space principal plane of the rear lens group G1 satisfies:
${V}_{A 1} = \left[\left({d}_{A}-{f}_{g 0}\right)*{f}_{g 1}\right] / \left[\left({d}_{A}-{f}_{g 0}\right)-{f}_{g 1}\right] = {f}_{g 1} - \left({f}_{g 1}*{f}_{A}/{f}_{g 0}\right)$ (5)

As shown in FIG. 5D, a distance V_{B1} from the image plane IMA to the image-space principal plane of the rear lens group G1 satisfies:
${V}_{B 1} = \left[\left({d}_{B}-{f}_{g 0}\right)*{f}_{g 1}\right] / \left[\left({d}_{B}-{f}_{g 0}\right)-{f}_{g 1}\right] = {f}_{g 1} - \left({f}_{g 1}*{f}_{B}/{f}_{g 0}\right)$ (6)

According to a principle of keeping the image plane unchanged in a focusing process from a distant scene to a near scene of the optical lens assembly using internal focusing, the movement amount ΔX of the rear lens group G1 may be calculated as follows:
$ΔX = {V}_{A 1} - {V}_{B 1} - ΔVB$ (7)

According to the foregoing formulas (1) to (7), approximation processing and simplified calculation may be performed to obtain:
A minimum value of the focusing stroke compression ratio of the rear lens group G1 is ${ξ}_{min} = \left|1-{\left({f}_{A}/{f}_{g 0}\right)}^{2}\right|$ (8)

It can be seen from formula (8) that the minimum value ξₘᵢₙ of the focusing stroke compression ratio of the rear lens group G1 has a specific association with f_{A}/f_{g0}. When f_{A}/f_{g0}<1.0, a smaller f_{A}/f_{g0} indicates a larger ξₘᵢₙ and a larger ξ.

A larger focusing stroke compression ratio ξ of the rear lens group G1 indicates a smaller focusing stroke of the rear lens group G1 when the optical lens assembly is switched between the state of focusing on a distant scene and the state of focusing on a near scene. This helps a focusing motor (for example, a voice coil motor VCM, a piezoelectric ceramic motor, or a memory metal motor SMA) of the rear lens group G1 shorten a designed maximum movement stroke (Stroke). In addition, such an optical lens assembly has a more compact structure, which helps miniaturize the optical lens assembly. On the contrary, a smaller focusing stroke compression ratio ξ of the rear lens group G1 indicates a larger focusing stroke of the rear lens group G1 when the optical lens assembly is switched between the state of focusing on a distant scene and the state of focusing on a near scene. This can reduce requirements on focusing precision of the focusing motor, thereby helping reduce design difficulty of the focusing motor.

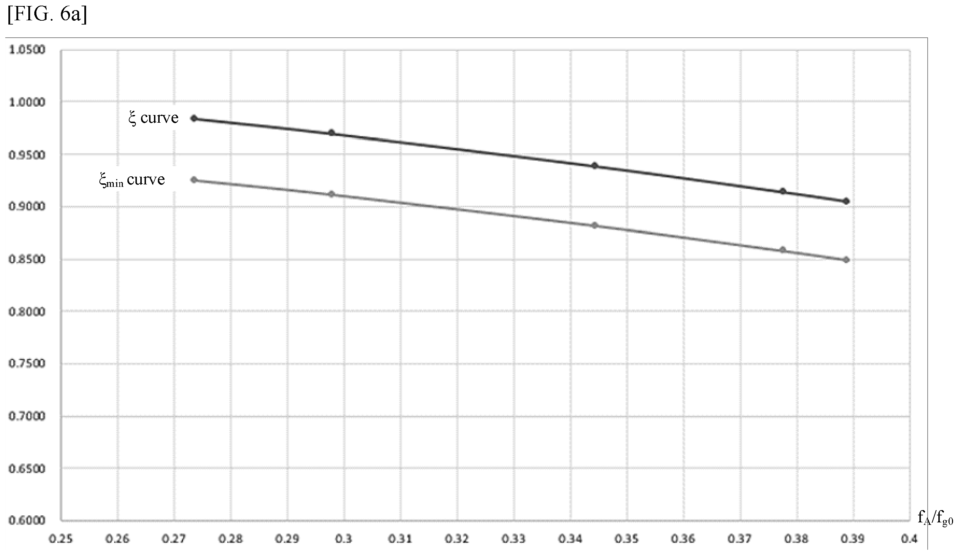

In some embodiments, f_{A}/f_{g0}≤0.38. In this way, the minimum value ξₘᵢₙ of the focusing stroke compression ratio of the rear lens group G1 may be large, thereby helping shorten the focusing stroke of the rear lens group G1. In this way, when the optical lens assembly is in the state of focusing on a near scene, a smaller object distance (namely, a smaller shortest macro distance) can be implemented. Specifically, as shown in FIG. 6a, FIG. 6a is a diagram of a relationship among f_{A}/f_{g0}, ξₘᵢₙ, and ξ of the optical lens assembly according to some embodiments of this application. It can be learned from FIG. 6a that when f_{A}/f_{g0} is less than 0.38, ξₘᵢₙ and ξ curves ascend, and left ends of the ξₘᵢₙ and ξ curves gradually approach 1. It can be learned that when f_{A}/f_{g0} is less than 0.38, ξₘᵢₙ is large.

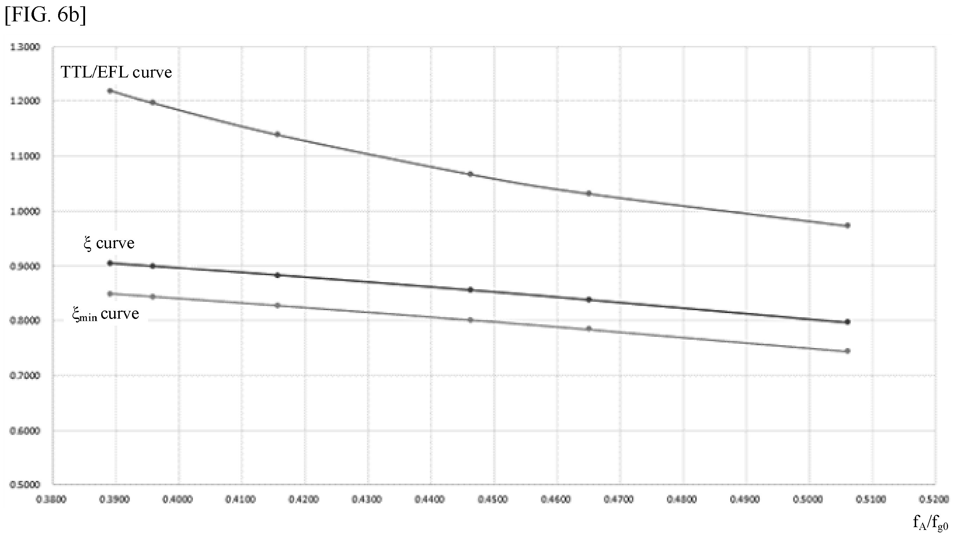

In some embodiments, 1>f_{A}/f_{g0}≥0.392. In this way, the TTL/EF curve descends, so that a total track length of the optical lens assembly may be small. This makes a structure of the optical lens assembly more compact, thereby helping miniaturize the optical lens assembly and the camera module. Specifically, as shown in FIG. 6b, FIG. 6b is a diagram of a relationship among f_{A}/f_{g0}, ξₘᵢₙ, ξ, and a total track length (TTL)/effective focal length (EFL) of the optical lens assembly according to some embodiments of this application. It can be learned from FIG. 6b that a total track length/effective focal length ratio curve of the optical lens assembly gradually descend as f_{A}/f_{g0} increases. It can be learned that when 1>f_{A}/f_{g0}≥0.392, a total track length/effective focal length ratio of the optical lens assembly is small, and the total track length of the optical lens assembly is small.

In some embodiments, the minimum value ξₘᵢₙ of the focusing stroke compression ratio of the rear lens group G1 satisfies: ξₘᵢₙ<1.0. This can reduce ξₘᵢₙ and avoid excessively large ξ in a focusing process of the optical lens assembly, thereby helping improve focusing precision of the optical lens assembly.

In some embodiments, ξₘᵢₙ≤0.846. This can further reduce ξₘᵢₙ and avoid excessively large ξ in the focusing process of the optical lens assembly, thereby further improving focusing precision of the optical lens assembly.

In some embodiments, 1>ξₘᵢₙ≥0.855. This can make ξₘᵢₙ closer to 1, thereby helping shorten the focusing stroke of the rear lens group G1 while ensuring the focusing precision of the optical lens assembly.

In some embodiments, the focusing stroke compression ratio ξ of the rear lens group G1 satisfies: 0.74≤ξ≤1.15. This can make ξ neither excessively large nor excessively small, thereby helping shorten the focusing stroke of the rear lens group G1 while ensuring the focusing precision of the optical lens assembly.

In some embodiments, when the optical lens assembly is in the state of focusing on a near scene, ξ satisfies: ξ≥0.9. This not only helps shorten the focusing stroke during focusing on a near scene, but also ensures the focusing precision of the optical lens assembly during focusing on a near scene, thereby helping improve imaging quality and focusing efficiency of a camera during shooting of the near scene.

In some embodiments, an effective focal length f_{g1} of the rear lens group G1 and the effective focal length f_{A} of the optical lens assembly in the state of focusing on a distant scene satisfy: f_{A}/f_{g1}≥0.47. This can avoid an excessively small value of f_{A}/f_{g1}, thereby avoiding an excessively small value of ξₘᵢₙ, and further making the optical lens assembly have a small focusing stroke.

Herein, f_{A}/f_{g1} has a specific association with f_{A}/f_{g0}. A larger f_{A}/f_{g1} indicates a smaller f_{A}/f_{g0}, and a larger ξₘᵢₙ.

In some embodiments, f_{A}/f_{g1}≤1.5. This can avoid an excessively large value of f_{A}/f_{g1}, thereby avoiding an excessively large value of ξₘᵢₙ, and helping ensure focusing precision of the optical lens assembly.

In some embodiments, the effective focal length f_{A} of the optical lens assembly in the state of focusing on a distant scene and an effective focal length f_{B} of the optical lens assembly in the state of focusing on a near scene satisfy: (f_{A}-f_{B})/f_{A}<0.09. In this way, a difference between the effective focal length f_{A} of the optical lens assembly in the state of focusing on a distant scene and the effective focal length f_{B} of the optical lens assembly in the state of focusing on a near scene can be small, thereby helping control the total track length of the optical lens assembly and making the total track length of the optical lens assembly small.

In some embodiments, as shown in FIG. 4, both the front lens group G0 and the rear lens group G1 have positive focal powers. Focal powers of the front lens group G0 and the rear lens group G1 are set to positive and positive respectively. In this way, both the front lens group G0 and the rear lens group G1 converge light beams. This helps reduce an effective focal length of the optical lens assembly, thereby reducing a total track length of the optical lens assembly, and further helping miniaturize the camera module 100.

Certainly, in addition to both the front lens group G0 and the rear lens group G1 having positive focal powers, focal powers of the front lens group G0 and the rear lens group G1 may also be set as follows: The front lens group G0 has a positive focal power, and the rear lens group G1 has a negative focal power.

In some embodiments, as shown in FIG. 4, the rear lens group G1 includes a first lens L11, a second lens L12, a third lens L13, a fourth lens L14, and a fifth lens L15 in a direction from an object side to an image side. The first lens L11 has a positive focal power, the second lens L12 has a negative focal power, the third lens L13 has a positive focal power, the fourth lens L14 has a negative focal power, and the fifth lens L15 has a negative focal power.

Setting focal powers of lenses in the rear lens group G1 to positive and negative respectively can balance some aberrations, thereby helping reduce aberrations of the optical lens assembly and ensuring imaging quality of the optical lens assembly. In addition, this avoids an excessive quantity of lenses in the rear lens group G1, thereby helping reduce a weight of the optical lens assembly.

The rear lens group G1 is not limited to the foregoing structure. The rear lens group G1 may alternatively include more than five lenses. The third lens L13, the fourth lens L14, and the fifth lens L15 are not limited to the foregoing focal power settings, and may alternatively be: the third lens L13 has a negative focal power, and the fourth lens L14 has a positive focal power. The fifth lens L15 is not limited to having a negative focal power, and the fifth lens L15 may also have a positive focal power.

In some embodiments, as shown in FIG. 4, the first turning element 14 is a prism and has a first light entrance surface 142 and a first light exit surface 143. The first light entrance surface 142 is disposed on a side on which the positive lens L01 is located, and the first light exit surface 143 is disposed facing a side on which the rear lens group G1 is located.

A material of the prism may be a transparent material such as glass or resin, which is not specifically limited herein.

In some embodiments, as shown in FIG. 4, the first turning element 14 is a right-angle triangular prism, the first light entrance surface 142 and the first light exit surface 143 are respectively right-angle surfaces of the right-angle triangular prism, and the first reflective surface 141 is an oblique surface of the right-angle triangular prism. In addition to the right-angle triangular prism, the first turning element 14 may also be disposed as a prism of another shape.

In some embodiments, as shown in FIG. 4, an included angle between the first reflective surface 141 and the optical axis (the second optical axis 12 shown in the figure) of the rear lens group G1 is 45°. In this case, an optical axis (a first optical axis 11 shown in the figure) of the positive lens L01 is perpendicular to the optical axis of the rear lens group G1. However, this is not limited thereto. Alternatively, the included angle between the first reflective surface 141 and the optical axis of the rear lens group G1 may be set to another angle according to an actual requirement.

In some embodiments, as shown in FIG. 4, in at least one positive lens of the front lens group G0, a positive lens adjacent to the prism and the first light entrance surface 142 are spaced apart, that is, the positive lens L01 and the first light entrance surface 142 are spaced apart.

Compared with designing an image-side surface of the positive lens L01 as a plane and attaching the image-side surface to the first light entrance surface 142, disposing the positive lens L01 and the first light entrance surface 142 apart can increase a quantity of surfaces of the lens in the front lens group G0, and increase design freedom of the front lens group G0, thereby helping correct an aberration of the optical lens assembly.

In some embodiments, as shown in FIG. 4, there is an air gap between the positive lens L01 and the first light entrance surface 142. Certainly, in addition to air, a medium between the positive lens and the first light entrance surface 142 may also be another medium, such as nitrogen or a transparent adhesive layer. This is not specifically limited herein.

In some embodiments, the optical lens assembly further includes a second turning element 15, the second turning element 15 is disposed on the image side of the rear lens group G1, the second turning element 15 has a second reflective surface 151, and the second reflective surface 151 is configured to reflect a light beam passing through the rear lens group G1 to a side of the optical axis of the rear lens group G1. In this case, the optical lens assembly has three optical axes: an optical axis (a first optical axis 11) of the positive lens L01 on an object side of the first turning element 14, an optical axis (a second optical axis 12) of the rear lens group G1, and an optical axis (a third optical axis 13) of an emergent light beam of the second turning element 15. The second optical axis 12 and the second optical axis 12 intersect with each other on the second reflective surface 151, and the photosensitive element 20 and the second turning element 15 are arranged along the third optical axis 13.

The second turning element 15 is disposed, so that an optical path of the optical lens assembly can be folded, to reduce a size of the optical lens assembly in a direction of the second optical axis 12, thereby reducing space occupied by the optical lens assembly in the electronic device. In addition, this helps control a size of a photosensitive surface (namely, an image plane) of the photosensitive element 20 in a direction parallel to the second optical axis 12, and the photosensitive surface of the photosensitive element 20 can be designed to be larger, thereby reducing space occupied by the photosensitive element in a thickness direction of the electronic device.

In some embodiments, as shown in FIG. 4, the second turning element 15 is a prism and has a second light entrance surface 152 and a second light exit surface 153. The second light entrance surface 152 is disposed facing the side on which the rear lens group G1 is located, and the second light exit surface 153 is located on the side of the optical axis of the rear lens group G1 (for example, the second light exit surface 153 shown in FIG. 4 is located on a lower side of the second optical axis 12). The second turning element 15 is disposed as a prism, so that the prism can deflect stray light out of the photosensitive surface of the photosensitive element 20, thereby avoiding formation of a ghost image when the stray light is directly incident on the photosensitive surface of the photosensitive element 20.

A material of the prism may be a transparent material such as glass or resin, which is not specifically limited herein.

In some embodiments, as shown in FIG. 4, the second turning element 15 is a right-angle triangular prism, the second light entrance surface 152 and the second light exit surface 153 are respectively right-angle surfaces of the right-angle triangular prism, and the second reflective surface 151 is an oblique surface of the right-angle triangular prism. In addition to the right-angle triangular prism, the second turning element 15 may also be disposed as a prism of another shape.

In some embodiments, as shown in FIG. 4, an included angle between the second reflective surface 151 and the second optical axis 12 is 45°. In this case, the second optical axis 12 is perpendicular to the second optical axis 12. However, this is not limited thereto. Alternatively, the included angle between the second reflective surface 151 and the second optical axis 12 may be set to another angle according to an actual requirement.

Certainly, the second turning element 15 may alternatively be a reflector. The second turning element 15 is disposed as a reflector and the reflector has a lighter weight, so that the weight of the entire optical lens assembly can be reduced.

In some embodiments, as shown in FIG. 4, the optical lens assembly further includes a fixed tube 51, the rear lens group G1 is disposed in the fixed tube 51, and a spacer ring 52 is disposed between every two adjacent lenses of the first lens L11, the second lens L12, the third lens L13, the fourth lens L14, and the fifth lens L15.

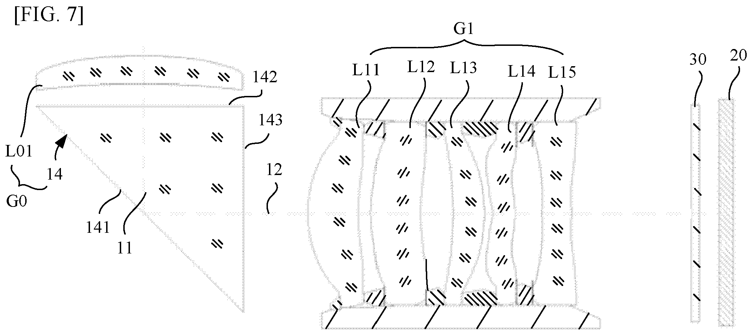

FIG. 7 is a diagram of an optical system of a camera module 100 according to Embodiment 2 of this application. A main difference between the optical lens assembly shown in FIG. 7 and the optical lens assembly shown in FIG. 4 lies in that: the second turning element 15 is not disposed in the optical lens assembly in FIG. 7. In this way, the optical lens assembly has two optical axes: the second optical axis 12 and the first optical axis 11, and the photosensitive element 20 and the optical lens assembly are arranged along the second optical axis 12.

For settings of other components shown in FIG. 7, refer to FIG. 4 for specific settings. Details are not described herein again.

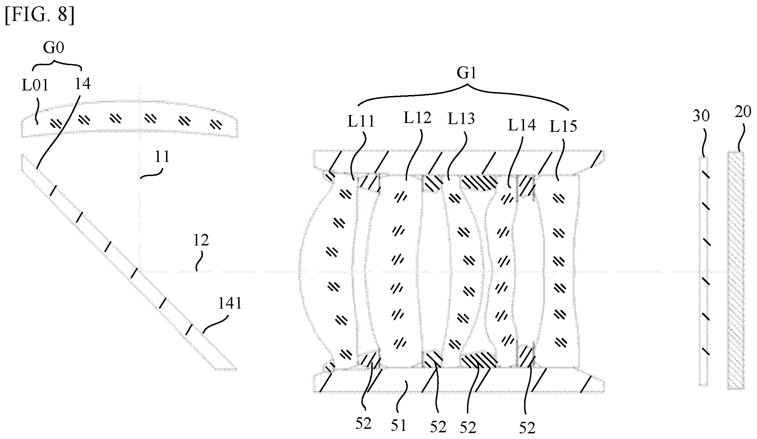

FIG. 8 is a diagram of an optical system of a camera module according to Embodiment 3 of this application. A main difference between the optical lens assembly shown in FIG. 8 and the optical lens assembly shown in FIG. 7 lies in that: the first turning element 14 in FIG. 7 is a prism, and the first turning element 14 in FIG. 8 is a reflector. Details are as follows:

As shown in FIG. 8, the first turning element 14 is a reflector. The first turning element 14 is disposed as a reflector and the reflector has a lighter weight, so that the weight of the entire optical lens assembly can be reduced. In addition, the first turning element 14 is disposed as a reflector, a medium around the reflector is air, with a refractive index lower than that of a prism. In this way, a total track length of the optical lens assembly may be small.

The reflector includes a mirror body and a reflective film covering a surface on a side of the mirror body. A material of the mirror body may be glass, but is not limited thereto. Another material may also be used. The reflective film may be a metal film, for example, a silver film, an aluminum film, or a gold film. Alternatively, a highly-reflective film layer of a dielectric may be used in the reflective film to achieve an ultra-high reflectivity. The reflective film may also be a hybrid reflective film of metal and a dielectric.

In some embodiments, as shown in FIG. 8, both the included angle between the first reflective surface 141 and the second optical axis 12 and the included angle between the first reflective surface 141 and the first optical axis 11 are 45°. However, this is not limited thereto. Alternatively, the included angle between the first reflective surface 141 and the second optical axis 12 and the included angle between the first reflective surface 141 and the first optical axis 11 may be set to other angles according to an actual requirement.

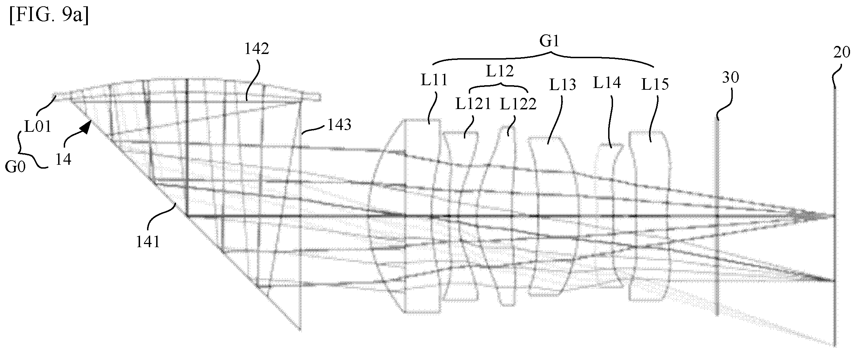

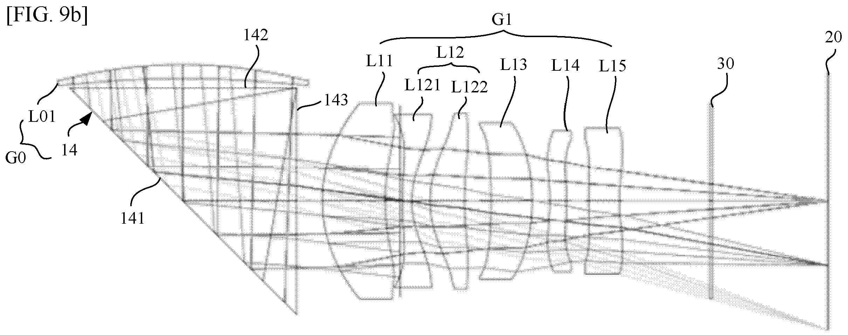

FIG. 9a is a state diagram of an optical system of a camera module during focusing on a distant scene according to Embodiment 4 of this application, and FIG. 9b is a state diagram of the optical system of the camera module during focusing on a near scene according to Embodiment 4 of this application. A main difference between the optical lens assembly shown in FIG. 9a and FIG. 9b and the optical lens assembly shown in FIG. 7 lies in that a composition of the rear lens group G1 is different. Details are as follows:

As shown in FIG. 9a and FIG. 9b, the second lens L12 includes a positive lens L122 and a negative lens L121 that are spaced apart. A combined focal power of the positive lens L122 and the negative lens L121 is negative. In this way, the second lens L12 is split into the positive lens L122 and the negative lens L121, so that a quantity of lens surfaces in the rear lens group G1 is increased, and a degree of freedom of design of the rear lens group G1 is increased, thereby helping correct an aberration of the optical lens assembly.

As shown in FIG. 9a and FIG. 9b, the negative lens L121 may be disposed between the first lens L11 and the positive lens L122, but this is not limited thereto. The negative lens L121 may be disposed between the positive lens L122 and the third lens L13.

In some embodiments, as shown in FIG. 9a and FIG. 9b, there is an air gap between the positive lens L122 and the negative lens L121. Certainly, a medium between the positive lens L122 and the negative lens L121 is not limited to air, and may alternatively be another medium, for example, nitrogen or an adhesive layer.

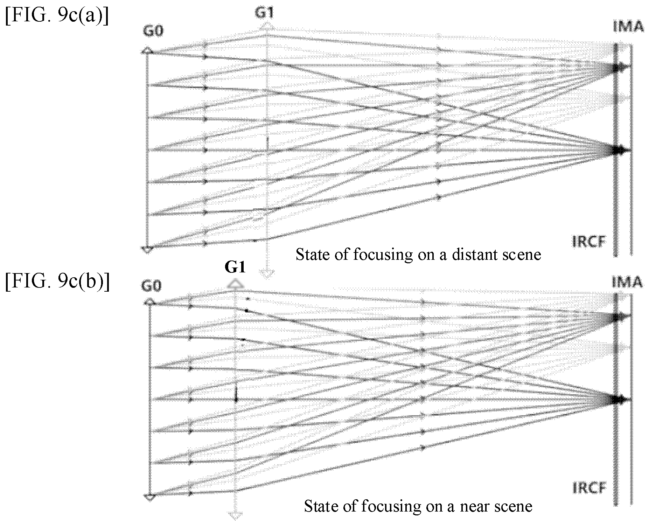

FIG. 9c(a) and FIG. 9c(b) are paraxial model diagrams of the optical system of the camera module in a focusing process according to Embodiment 4 of this application. As shown in FIG. 9c(a) and FIG. 9c(b), when the optical lens assembly is switched from a state of focusing on a distant scene to a state of focusing on a near scene, the rear lens group G1 moves in a direction close to the front lens group G0. When the optical lens assembly is switched from a state of focusing on a near scene to a state of focusing on a distant scene, the rear lens group G1 moves in a direction away from the front lens group G0.

The following specifically describes the optical system of the camera module shown in FIG. 9a and FIG. 9b in combination with specific parameters and simulation results.

As shown in Table 4.1 and Table 4.2, Table 4.1 shows some main parameters of the optical system of the camera module in Embodiment 4 of this application, and Table 4.2 shows aspheric coefficients of surfaces of the optical system of the camera module in Embodiment 4 of this application.

**Table 4.1**

| Surface number | Optical element | Surface type | Curvature radius | Thickness (INF) | Thickness (macro) | Material | Refractive index | Abbe number | Light transmission radius |
|---|---|---|---|---|---|---|---|---|---|
| OBJ | | | INFINITY | 1E+18 | 250.000 | | | | |
| S1 | L01 | Aspheric | 18.112 | 0.548 | | Resin | 1.525 | 56.276 | 4.500 |
| S2 | | Aspher ic | 35.701 | 0.371 | | | | | 4.482 |
| S3 | PRIS M | Spheri cal | 1E+18 | 4.502 | | Glass | 1.487 | 70.440 | 4.448 |
| S4 | | Spheri cal | 1E+18 | -4.502 | | | | | 6.273 |
| S5 (STO) | | Spheri cal | 1E+18 | -2.656 | -1.017 | | | | 4.087 |
| S6 | L11 | Aspher ic | -5.385 | -2.496 | | Resin | 1.535 | 55.709 | 3.854 |
| S7 | | Aspher ic | -7.979 | -0.685 | | | | | 3.461 |
| S8 | L121 | Aspher ic | -14.789 | -0.380 | | Resin | 1.671 | 30.271 | 3.395 |
| S9 | | Aspher ic | -3.729 | -0.714 | | | | | 3.249 |
| S10 | L122 | Aspher ic | -3.754 | -1.370 | | Resin | 1.590 | 61.996 | 3.500 |
| S11 | | Aspher ic | -10.887 | -1.053 | | | | | 3.128 |
| S12 | L13 | Aspher ic | 32.631 | -1.642 | | Resin | 1.669 | 34.760 | 2.978 |
| S13 | | Aspher ic | 7.113 | -0.694 | | | | | 3.100 |
| S14 | L14 | Aspher ic | 6.915 | -0.654 | | Resin | 1.670 | 30.000 | 2.814 |
| S15 | | Aspher ic | 8.834 | -0.876 | | | | | 2.608 |
| S16 | L15 | Aspher ic | -16.648 | -1.219 | | Resin | 1.545 | 56.041 | 2.603 |
| S17 | | Aspher ic | -6.641 | -1.936 | -3.576 | | | | 2.772 |
| S18 | IRCF | Spheri cal | INFINITY | -0.110 | | Resin/ glass | 1.513 | 55.706 | 2.859 |
| S19 | | Spheri cal | INFINITY | -0.300 | | | | | 2.862 |
| S20 | | Spheri cal | INFINITY | -4.291 | | | | | 2.876 |
| S21 | IMA | Spheri cal | INFINITY | -0.001 | | | | | 3.071 |

In the table, parameter values of the curvature radius, the thickness, and the light transmission radius all are in a unit of mm. OBJ represents an object plane. An object distance is set to 1e+18 mm in an infinite object distance state, and is set to 250 mm in a macro (Macro) state. STO represents a stop (STOP), which is disposed on the first light exit surface 143 of the first turning element 14, and is configured to: limit a size of an aperture through which a light beam enters, and control an amount of light entering the optical system.

S1 represents an object-side surface of the positive lens L01, and S2 represents an image-side surface of the positive lens L01. PRISM represents the first turning element 14, where the first turning element 14 is a prism and has a light deflection function. S3 represents the first light entrance surface 142 of the first turning element 14, S4 represents the first reflective surface 141 of the first turning element 14, and S5 represents the first light exit surface 143 of the first turning element 14. S6 represents an object-side surface of the first lens L11, and S7 represents an image-side surface of the first lens L11. S8 represents an object-side surface of the negative lens L121, and S9 represents an image-side surface of the negative lens L121. S10 represents an object-side surface of the positive lens L122, and S11 represents an image-side surface of the positive lens L122. S12 represents an object-side surface of the third lens L13, and S13 represents an image-side surface of the third lens L13. S14 represents an object-side surface of the fourth lens L14, and S15 represents an image-side surface of the fourth lens L14. S16 represents an object-side surface of the fifth lens L15, and S17 represents an image-side surface of the fifth lens L15. IRCF represents a light filter, where the light filter is an infrared light filter, S18 is an object-side surface of the light filter, and S19 is an image-side surface of the light filter. IMA represents an image plane IMAGE, and the image plane IMAGE may be a photosensitive surface of a photosensitive element.

In the "thickness" parameter column in the table, a value corresponding to a surface number Sₙ represents a distance between a surface with the surface number Sₙ and a surface with a surface number Sₙ₊₁ on an optical axis. Rules for positive and negative signs in front of the thickness parameter are as follows: A vertex (an intersection point with the optical axis) of the surface Sₙ is used as a calculation origin, and a vertex of the surface Sₙ₊₁ is positive on the left, negative on the right, positive on the bottom, and negative on the top.

The curvature radius in the table is a curvature radius of a surface corresponding to a surface number on the optical axis. A rule of positive and negative signs in front of the curvature radius parameter is as follows: A vertex of the surface Sₙ is used as a calculation origin, and a sphere center is positive on the left, negative on the right, positive on the bottom, and negative on the top. If the curvature radius is INF, it indicates that a surface corresponding to the parameter is a plane, and the curvature radius is infinite.

A thickness parameter "-2.656" of the stop represents a distance between the object-side surface S6 of the first lens L11 and the stop STOP on the optical axis when the object distance is 1e+18 mm. A thickness parameter "-1.017" of the stop represents a distance between the object-side surface S6 of the first lens L11 and the stop STOP on the optical axis when the object distance is 250 mm. A thickness parameter "-1.936" of the fifth lens L15 represents a distance between the image-side surface S17 of the fifth lens L15 and the object-side surface S18 of the light filter on the optical axis when the object distance is 1e+18 mm. A thickness parameter "-3.576" of the third lens L13 represents a distance between the image-side surface S17 of the fifth lens L15 and the object-side surface S18 of the light filter on the optical axis when the object distance is 250 mm.

It can be learned from Table 4.1 that, for the camera in Embodiment 4 of this application, when the optical lens assembly switches an object distance of ato-be-photographed scene from infinity (a distant scene) to a macro distance of 250 mm (a near scene), a focusing stroke of the rear lens group G1 is 1.639 mm.

In some embodiments, an aspheric surface in the optical lens assembly may be defined by using the following aspheric curve equation: $z = \frac{c {r}^{2}}{1 + \sqrt{1 - \left(1+K\right) {c}^{2} {r}^{2}}} + {\sum }_{i = 1}^{N} {A}_{i} {r}^{2 i} .$

Herein, z is a relative distance between a point on the aspheric surface at a distance of r from the optical axis and a tangent plane that is tangent to the aspheric surface at an intersection with the optical axis; r is a vertical distance between the point on the aspheric curve and the optical axis; c is a curvature; k is a cone coefficient; and Aᵢ is an i^{th}-order aspheric coefficient. For details, refer to Table 4.2.

**Table 4.2**

| Surface number | K | A₄ | A₆ | A₈ | A₁₀ |
|---|---|---|---|---|---|
| S1 | 0.000E+00 | -3.502E-04 | 4.926E-05 | -4.585E-06 | 2.462E-07 |
| S2 | 0.000E+00 | -3.965E-04 | 5.222E-05 | -4.567E-06 | 1.886E-07 |

| Surface number | K | A₄ | A₆ | A₈ | A₁₀ |
|---|---|---|---|---|---|
| S3 | / | / | / | / | / |
| S4 | / | / | / | / | / |
| STO | / | / | / | / | / |
| S6 | 0.000E+00 | 7.893E-04 | -8.814E-05 | 2.331E-05 | -3.458E-06 |
| S7 | 0.000E+00 | 2.913E-03 | -1.350E-03 | 4.990E-04 | -8.192E-05 |
| S8 | 0.000E+00 | 2.475E-03 | -1.199E-03 | 9.091E-04 | -2.140E-04 |
| S9 | 0.000E+00 | 2.775E-03 | 1.473E-03 | -8.319E-06 | -4.999E-05 |
| S10 | 0.000E+00 | 2.898E-03 | 2.475E-03 | -7.360E-04 | 1.254E-04 |
| S11 | 0.000E+00 | 1.644E-03 | 1.848E-03 | -4.369E-04 | 7.272E-06 |
| S12 | 0.000E+00 | 2.940E-03 | 8.017E-06 | 4.663E-05 | -4.917E-05 |
| S13 | 0.000E+00 | 3.436E-03 | -2.090E-03 | 6.244E-04 | -1.034E-04 |
| S14 | 0.000E+00 | -1.464E-02 | -2.811E-03 | 1.669E-03 | -3.782E-04 |
| S15 | 0.000E+00 | -1.720E-02 | -7.932E-04 | 7.244E-04 | -1.353E-04 |
| S16 | 0.000E+00 | 1.003E-02 | -1.415E-04 | 4.227E-05 | -5.502E-05 |
| S17 | 0.000E+00 | 1.460E-02 | -1.027E-03 | 1.889E-05 | 2.034E-05 |

| Surface number | A₁₂ | A₁₄ | A₁₆ | A₁₈ | A₂₀ |
|---|---|---|---|---|---|
| S1 | -6.967E-09 | 7.998E-11 | 0.000E+00 | 0.000E+00 | 0.000E+00 |
| S2 | 1.145E-09 | -4.748E-10 | 2.081E-11 | -4.105E-13 | 3.340E-15 |
| S3 | / | / | / | / | / |
| S4 | / | / | / | / | / |
| STO | / | / | / | / | / |
| S6 | 3.298E-07 | -1.985E-08 | 6.967E-10 | -1.063E-11 | 0.000E+00 |
| S7 | 7.289E-06 | -3.323E-07 | 6.017E-09 | 0.000E+00 | 0.000E+00 |
| S8 | 2.638E-05 | -1.830E-06 | 6.716E-08 | -1.014E-09 | 0.000E+00 |
| S9 | 1.058E-05 | -1.021E-06 | 4.900E-08 | -9.530E-10 | 0.000E+00 |
| S10 | -1.382E-05 | 1.142E-06 | -6.135E-08 | 1.435E-09 | 0.000E+00 |
| S11 | 1.069E-05 | -1.623E-06 | 9.661E-08 | -2.132E-09 | 0.000E+00 |
| S12 | 1.543E-05 | -2.134E-06 | 1.406E-07 | -3.589E-09 | 0.000E+00 |
| S13 | 1.080E-05 | -7.071E-07 | 2.692E-08 | -4.613E-10 | 0.000E+00 |
| S14 | 4.615E-05 | -3.200E-06 | 1.244E-07 | -2.316E-09 | 0.000E+00 |
| S15 | 8.230E-06 | -2.969E-07 | 7.592E-08 | -5.581E-09 | 0.000E+00 |
| S16 | 2.318E-05 | -5.696E-06 | 8.098E-07 | -6.123E-08 | 1.942E-09 |
| S17 | -5.217E-06 | 7.012E-07 | -5.435E-08 | 2.299E-09 | -4.095E-11 |

As shown in Table 4.3, Table 4.4, and Table 4.5, Table 4.3 shows other main parameters of the optical system of the camera module in Embodiment 4 of this application, Table 4.4 shows a focal length and a value of ξₘᵢₙ of the optical system of the camera module in Embodiment 4 of this application when an object distance is infinite, and Table 4.5 shows a focal length and a value of ξ of the optical system of the camera module in Embodiment 4 of this application when the object distance is 250 mm.

**Table 4.3**

| Parameter | TTL | ImgH | EFL | F/# | f1 | f2 | f3 | f4 | f5 | f6 | f7 | f34 |
|---|---|---|---|---|---|---|---|---|---|---|---|---|
| Value | 31.429 | 5.110 | 19.177 | 1.968 | 69.040 | 23.097 | - 7.493 | 9.036 | 13.190 | - 54.724 | - 21.136 | - 50.910 |
| Unit | mm | mm | mm | / | mm | mm | mm | mm | mm | mm | mm | mm |

**Table 4.4 Object distance: INFINITY**

| Parameter | f_{A} | f_{g0} | f_{g1} | d_{A} | ξₘᵢₙ | f_{A}/f_{g0} | f_{A}/f_{g1} |
|---|---|---|---|---|---|---|---|
| Value | 19.177 | 69.038 | 24.324 | 5.7982 | 0.922 | 0.278 | 0.788 |
| Unit | mm | mm | mm | mm | | | |

**Table 4.5 Object distance: Macro=250 mm**

| Parameter | f_{B} | f_{g0} | f_{g1} | d_{B} | ξ |
|---|---|---|---|---|---|
| Value | 18.8254 | 69.038 | 24.324 | 4.1591 | 0.974 |
| Unit | mm | mm | mm | mm | |

In Table 4.3 to Table 4.5, f1 is a focal length of the positive lens L01, f2 is a focal length of the first lens L11, f3 is a focal length of the negative lens L121, f4 is a focal length of the positive lens L122, f34 is a combined focal length of the negative lens L121 and the positive lens L122, f5 is a focal length of the third lens L13, f6 is a focal length of the fourth lens L14, f7 is a focal length of the fifth lens L15, and f_{A} is an effective focal length of the optical lens assembly in a state of focusing on a distant scene. f_{B} is an effective focal length of the optical lens assembly in a state of focusing on a near scene, f_{g0} is an effective focal length of the front lens group G0, and f_{g1} is an effective focal length of the rear lens group G1. d_{A} is a distance between an image-space principal plane of the front lens group G0 and an object-space principal plane of the rear lens group G1 when the optical lens assembly is in a state of focusing on a distant scene (the object distance is infinite); and d_{B} is a distance between the image-space principal plane of the front lens group G0 and the object-space principal plane of the rear lens group G1 when the optical lens assembly is in a state of focusing on a near scene (the object distance is 250 mm).

It can be learned from the data in Table 4.4 and Table 4.5 that (f_{A}-f_{B})/f_{A}=0.0183.

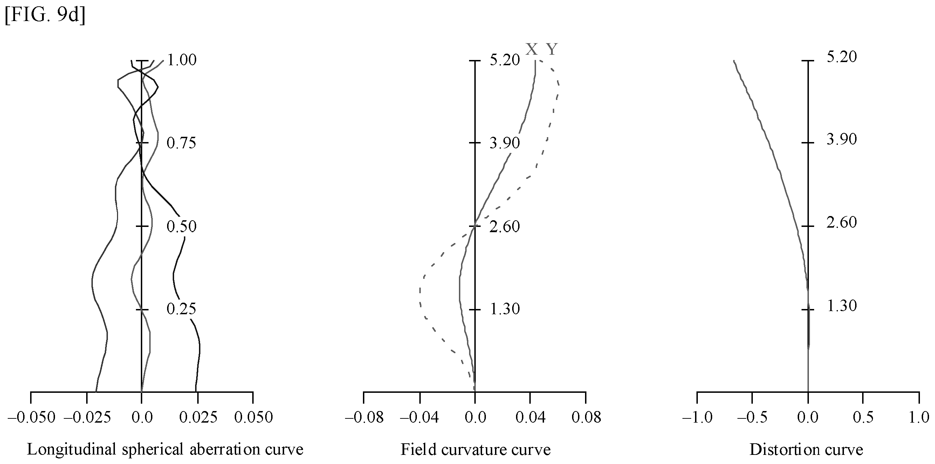

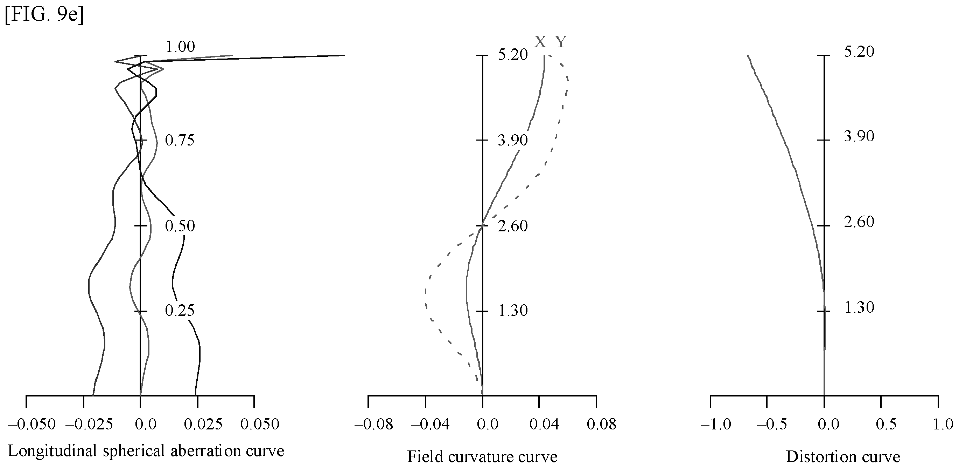

FIG. 9d is a simulation effect diagram of the optical system of the camera module in Embodiment 4 of this application when an object distance is infinite, and FIG. 9e is a simulation effect diagram of the optical system of the camera module in Embodiment 4 of this application when the object distance is 250 mm. FIG. 9d and FIG. 9e show longitudinal spherical aberration (LONGITUDINAL SPHERICAL ABERRATION) curves, astigmatism and field curvature curves for each image height, and optical distortion (DISTORTION) curves of the optical lens assembly. The longitudinal spherical aberration curve includes spherical aberration curves corresponding to different bands (including 656.2725 nm, 587.5618 nm, and 486.1327 nm in the figure) of the system. A physical meaning of the longitudinal spherical aberration curve is a deviation relative to an ideal image point after light of a corresponding wavelength emitted in a 0-degree field of view passes through the optical system. A horizontal coordinate of the longitudinal spherical aberration curve is a deviation value in a direction of an optical axis, and a vertical coordinate is a normalized coordinate at an optical pupil. The values shown in FIG. 9d and FIG. 9e are small, and a longitudinal spherical aberration of the optical lens assembly is well corrected. The astigmatism and field curvature curve diagram shows deviations between convergence points of fine light beams in different fields of view and an ideal imaging surface, where x is a light beam in a sagittal direction, and y is a light beam in a meridian direction. A horizontal coordinate of the astigmatism and field curvature curve diagram is a deviation value in a direction of an optical axis, and a vertical coordinate of the astigmatism and field curvature curve diagram is a corresponding field of view. When a value of a field of view is excessively large, image quality in the field of view is poor or a high-order aberration exists. As shown in FIG. 9d and FIG. 9e, field curvatures in the two directions are small, and the system has a good depth of focus. The distortion diagram is used to represent relative deviations of convergence points of light beams in different fields of view (actual image heights) from an ideal image height. The deviations shown in FIG. 9d and FIG. 9e are small, so that it can be ensured that there is no obvious picture deformation. Therefore, in the optical system of the camera module in Embodiment 4 of this application, a low light aberration is controlled by using a proper surface type and gap design, and the like, to obtain clear image quality.

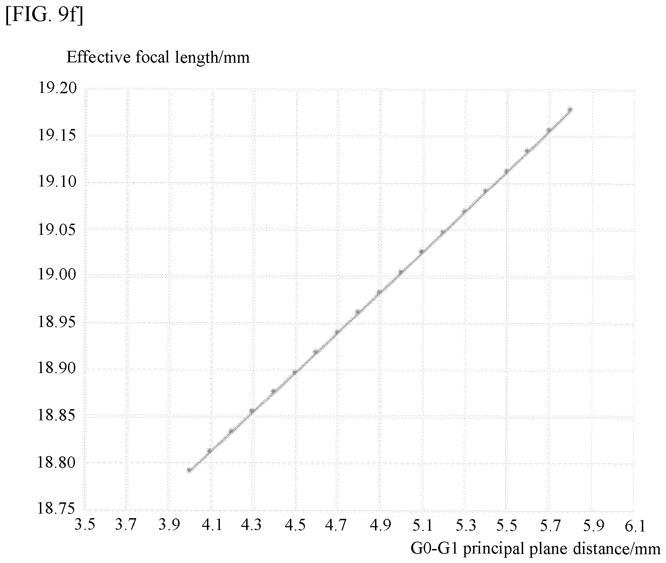

FIG. 9f shows a curve of a relationship between an effective focal length and a distance between the image-space principal plane of the front lens group G0 and the object-space principal plane of the rear lens group G1 in a focusing process of the optical lens assembly according to Embodiment 4 of this application. As shown in FIG. 9f, in a process in which the optical lens assembly is switched from a state of focusing on a near scene to a state of focusing on a distant scene, the distance between the image-space principal plane of the front lens group G0 and the object-space principal plane of the rear lens group G1 continuously increases, and the effective focal length of the optical lens assembly continuously increases. The distance between the image-space principal plane of the front lens group G0 and the object-space principal plane of the rear lens group G1 changes linearly with the effective focal length of the optical lens assembly.

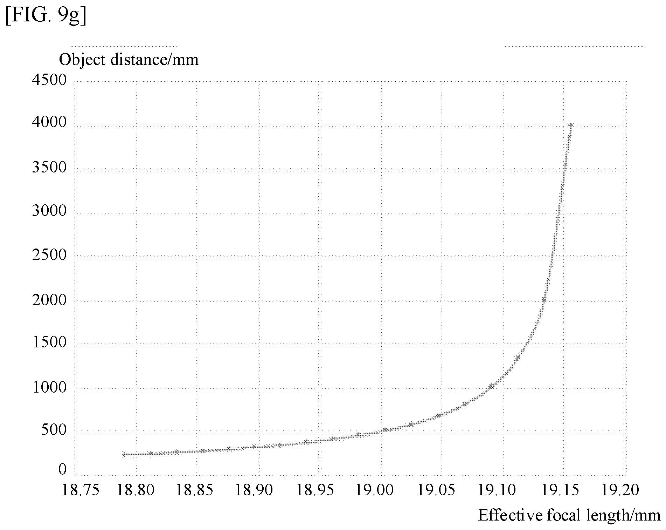

FIG. 9g shows a curve of a relationship between an object distance and an effective focal length in a focusing process of the optical lens assembly according to Embodiment 4 of this application. As shown in FIG. 9g, in a process in which the optical lens assembly switches from a state of focusing on a near scene to a state of focusing on a distant scene, the effective focal length of the optical lens assembly continuously increases as the object distance increases.

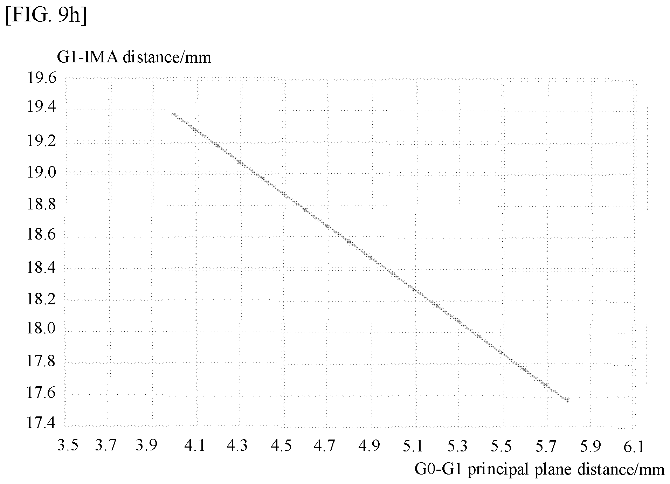

FIG. 9h shows a curve of a relationship between a distance between the image-space principal plane of the rear lens group G1 and an image plane IMA and a distance between the image-space principal plane of the front lens group G0 and the object-space principal plane of the rear lens group G1 in a focusing process of the optical lens assembly according to Embodiment 4 of this application. As shown in FIG. 9h, in a process in which the optical lens assembly is switched from a state of focusing on a near scene to a state of focusing on a distant scene, the image-space principal plane of the front lens group G0 and the object-space principal plane of the rear lens group G1 continuously increase, the distance from the image-space principal plane of the rear lens group G1 to the image plane IMA continuously decreases, and a total track length of the optical lens assembly remains unchanged.

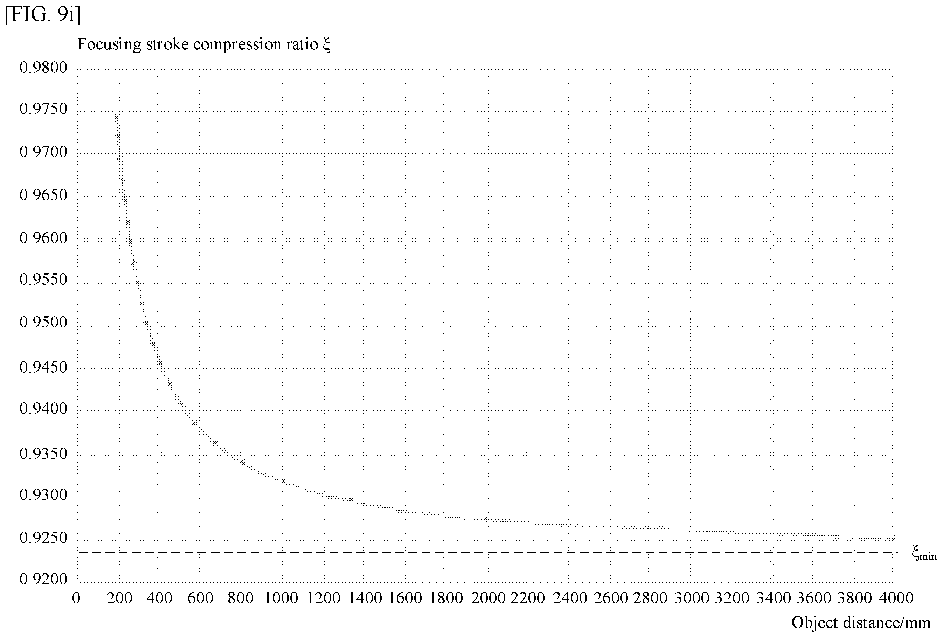

FIG. 9i shows a curve of a relationship between a focusing stroke compression ratio and an object distance in a focusing process of the optical lens assembly according to Embodiment 4 of this application. As shown in FIG. 9i, in a process in which the optical lens assembly is switched from a state of focusing on a near scene to a state of focusing on a distant scene, as the object distance increases, the focusing stroke compression ratio continuously decreases, and a lower side of the curve of the relationship between the focusing stroke compression ratio and the object distance approaches a line infinitely, where a value corresponding to an intersection point of the line and a vertical axis is the minimum value ξₘᵢₙ of the focusing stroke compression ratio.

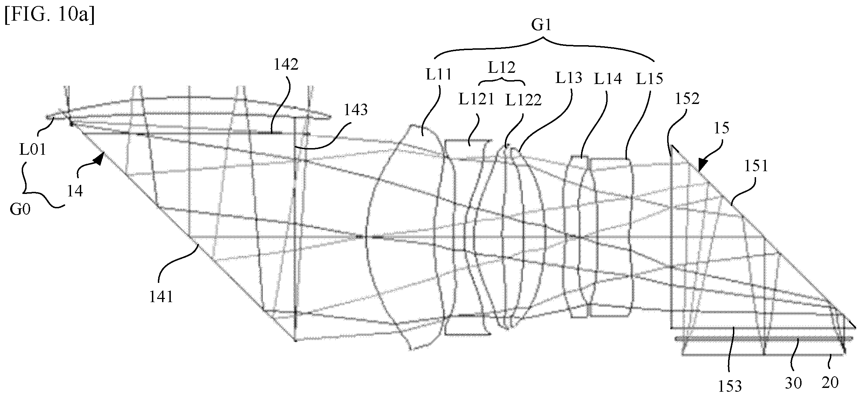

FIG. 10a is a diagram of an optical system of a camera module according to Embodiment 5 of this application. A main difference between the optical lens assembly shown in FIG. 10a and the optical lens assembly shown in FIG. 4 lies in that a composition of the rear lens group G1 is different. To be specific, as shown in FIG. 10a, the second lens L12 includes a positive lens L122 and a negative lens L121 that are spaced apart. This helps increase a quantity of surfaces of a lens in the rear lens group G1, and increases a degree of freedom of design of the rear lens group G1, thereby helping correct an aberration of the optical lens assembly.

The following specifically describes the optical system of the camera module shown in FIG. 10a in combination with specific parameters and simulation results.

As shown in Table 5.1 and Table 5.2, Table 5.1 shows some main parameters of the optical system of the camera module in Embodiment 5 of this application, and Table 5.2 shows aspheric coefficients of surfaces of the optical system of the camera in Embodiment 5 of this application.

**Table 5.1**

| Surface number | Optical element | Surface type | Curvature radius | Thickness (INF) | Thickness (macro) | Material | Refractive index | Abbe number | Light transmis sion radius |
|---|---|---|---|---|---|---|---|---|---|
| OBJ | | | INFINITY | 1E+18 | 250 | | | | |
| S1 | L01 | Aspheric | 18.486 | 0.611 | | Resin | 1.525 | 56.276 | 4.500 |
| S2 | | Aspheri c | 45.842 | 0.292 | | | | | 4.839 |
| S3 | PRISM1 | Spheric al | 1E+18 | 3.955 | | Glass | 1.487 | 70.440 | 4.762 |
| S4 | | Spheric al | 1E+18 | -3.955 | | | | | 6.300 |
| S5 (STO) | | Spheric al | 1E+18 | -2.709 | -1.017 | | | | 4.001 |
| S6 | L11 | Aspheri c | -5.359 | -2.545 | | Resin | 1.535 | 55.709 | 3.907 |
| S7 | | Aspheri c | -8.029 | -0.740 | | | | | 3.517 |
| S8 | L121 | Aspheric | -14.652 | -0.400 | | Resin | 1.671 | 30.271 | 3.381 |
| S9 | | Aspheric | -3.746 | -0.365 | | | | | 3.267 |
| S10 | L122 | Aspheric | -3.748 | -1.060 | | Resin | 1.590 | 61.996 | 3.225 |
| S11 | | Aspheric | -11.085 | -0.806 | | | | | 3.182 |
| S12 | L13 | Aspheric | 37.474 | -0.813 | | Resin | 1.669 | 34.760 | 3.072 |
| S13 | | Aspheri c | 7.036 | -0.757 | | | | | 3.116 |
| S14 | L14 | Aspheri c | 7.010 | -0.544 | | Resin | 1.670 | 30.000 | 2.814 |
| S15 | | Aspheri c | 9.281 | -0.634 | | | | | 2.566 |
| S16 | L15 | Aspheri c | -23.710 | -1.225 | | Resin | 1.545 | 56.041 | 2.560 |
| S17 | | Aspheri c | -6.568 | -1.555 | -3.248 | | | | 2.728 |
| S18 | PRISM2 | Spheric al | INFINITY | -3.500 | | Glass | 1.805 | 25.456 | 2.806 |
| S19 | | Spheric al | INFINITY | 3.500 | | | | | 4.232 |
| S20 | | Spheric al | INFINITY | 0.360 | | | | | 3.007 |
| S21 | IRCF | Spheric al | INFINITY | 0.110 | | Resin/glas s | 1.513 | 55.706 | 3.026 |
| S22 | | Spheric al | INFINITY | 0.300 | | | | | 3.030 |
| S23 | | Spheric al | INFINITY | 0.236 | | | | | 3.045 |
| S24 | IMA | Spheric al | INFINITY | 0.027 | | | | | 3.082 |

In the table, S1 represents an object-side surface of the positive lens L01, and S2 represents an image-side surface of the positive lens L01. PRISM1 represents the first turning element 14, where the first turning element 14 is a prism and has a light deflection function. S3 represents the first light entrance surface 142 of the first turning element 14, S4 represents the first reflective surface 141 of the first turning element 14, S5 represents the first light exit surface 143 of the first turning element 14, S6 represents an object-side surface of the first lens L11, and S7 represents an image-side surface of the first lens L11. S8 represents an object-side surface of the negative lens L121, and S9 represents an image-side surface of the negative lens L121. S10 represents an object-side surface of the positive lens L122, and S11 represents an image-side surface of the positive lens L122. S12 represents an object-side surface of the third lens L13, and S13 represents an image-side surface of the third lens L13. S14 represents an object-side surface of the fourth lens L14, and S15 represents an image-side surface of the fourth lens L14. S16 represents an object-side surface of the fifth lens L15, and S17 represents an image-side surface of the fifth lens L15. PRISM2 represents the second turning element 15, where the second turning element 15 is a prism and has a light deflection function. S18 represents the second light entrance surface 152 of the second turning element 15, S19 represents the second reflective surface 151 of the second turning element 15, and S20 represents the second light exit surface 153 of the second turning element 15. IRCF represents a light filter, where the light filter is an infrared light filter. S21 represents an object-side surface of the light filter, and S22 represents an image-side surface of the light filter. IMA represents an image plane IMAGE, and the image plane IMAGE may be a photosensitive surface of a photosensitive element.

In the "thickness" parameter column in the table, a value corresponding to a surface number Sₙ represents a distance between a surface with the surface number Sₙ and a surface with a surface number Sₙ₊₁ on an optical axis. Rules for positive and negative signs in front of the thickness parameter are as follows: A vertex (an intersection point with the optical axis) of the surface Sₙ is used as a calculation origin, and a vertex of the surface Sₙ₊₁ is positive on the left, negative on the right, positive on the bottom, and negative on the top.

The curvature radius in the table is a curvature radius of a surface corresponding to a surface number on the optical axis. A rule of positive and negative signs in front of the curvature radius parameter is as follows: A vertex of the surface Sₙ is used as a calculation origin, and a sphere center is positive on the left, negative on the right, positive on the bottom, and negative on the top. If the curvature radius is INF, it indicates that a surface corresponding to the parameter is a plane, and the curvature radius is infinite.

A thickness parameter "-2.709" of the stop represents a distance between the object-side surface S6 of the first lens L11 and the stop STOP on the optical axis when the object distance is 1e+18 mm. A thickness parameter "-1.017" of the stop represents a distance between the object-side surface S6 of the first lens L11 and the stop STOP on the optical axis when the object distance is 250 mm. A thickness parameter "-1.555" of the fifth lens L15 represents a distance between the image-side surface S17 of the fifth lens L15 and the object-side surface S18 of the light filter on the optical axis when the object distance is 1e+18 mm. A thickness parameter "-3.248" of the third lens L13 represents a distance between the image-side surface S17 of the fifth lens L15 and the second light entrance surface 152 of the second turning element 15 on the optical axis when the object distance is 250 mm.

It can be learned from Table 5.1 that, for the camera in Embodiment 5 of this application, when the optical lens assembly switches an object distance of ato-be-photographed scene from infinity (a distant scene) to a macro distance of 250 mm (a near scene), a focusing stroke of the rear lens group G1 is 1.699 mm.

**Table 5.2**

| No. | K | A₄ | A₆ | A₈ | A₁₀ |
|---|---|---|---|---|---|
| S1 | 0.000E+00 | -2.409E-04 | 2.381E-05 | -1.808E-06 | 8.797E-08 |
| S2 | 0.000E+00 | -2.824E-04 | 1.785E-05 | 1.474E-07 | -2.069E-07 |
| S3 | / | / | / | / | / |
| S4 | / | / | / | / | / |
| S5 (STO) | / | / | / | / | / |
| S6 | 0.000E+00 | 6.635E-04 | -2.197E-06 | -8.764E-06 | 2.901E-06 |
| S7 | 0.000E+00 | 3.185E-03 | -1.365E-03 | 4.448E-04 | -6.984E-05 |
| S8 | 0.000E+00 | 4.157E-03 | -2.563E-03 | 1.423E-03 | -3.205E-04 |
| S9 | 0.000E+00 | 2.855E-03 | 8.969E-04 | 2.423E-04 | -8.215E-05 |
| S10 | 0.000E+00 | 1.250E-03 | 4.202E-03 | -1.277E-03 | 1.921E-04 |
| S11 | 0.000E+00 | 1.218E-04 | 3.201E-03 | -7.898E-04 | 9.936E-06 |
| S12 | 0.000E+00 | 1.896E-03 | 5.029E-04 | -1.282E-04 | -3.201E-05 |
| S13 | 0.000E+00 | 3.259E-03 | -1.565E-03 | 3.602E-04 | -4.097E-05 |
| S14 | 0.000E+00 | -1.722E-02 | -5.169E-04 | 6.876E-04 | -1.304E-04 |
| S15 | 0.000E+00 | -1.998E-02 | 1.499E-03 | -2.185E-04 | 9.068E-05 |
| S16 | 0.000E+00 | 9.270E-03 | 1.910E-03 | -1.365E-03 | 5.395E-04 |
| S17 | 0.000E+00 | 1.427E-02 | -9.482E-04 | 3.338E-06 | 1.163E-05 |

| No. | A₁₂ | A₁₄ | A₁₆ | A₁₈ | A₂₀ |
|---|---|---|---|---|---|
| S1 | -2.439E-09 | 2.810E-11 | 0.000E+00 | 0.000E+00 | 0.000E+00 |
| S2 | 2.388E-08 | -1.419E-09 | 4.800E-11 | -8.795E-13 | 6.834E-15 |
| S3 | / | / | / | / | / |
| S4 | / | / | / | / | / |
| S5 (STO) | / | / | / | / | / |
| S6 | -4.143E-07 | 3.312E-08 | -1.403E-09 | 2.496E-11 | 0.000E+00 |
| S7 | 6.205E-06 | -2.866E-07 | 5.297E-09 | 0.000E+00 | 0.000E+00 |
| S8 | 3.897E-05 | -2.672E-06 | 9.697E-08 | -1.449E-09 | 0.000E+00 |
| S9 | 9.746E-06 | -4.905E-07 | 5.776E-09 | 1.937E-10 | 0.000E+00 |
| S10 | -1.243E-05 | -5.638E-08 | 5.059E-08 | -1.964E-09 | 0.000E+00 |
| S11 | 2.434E-05 | -4.120E-06 | 2.817E-07 | -7.256E-09 | 0.000E+00 |
| S12 | 2.011E-05 | -3.467E-06 | 2.620E-07 | -7.453E-09 | 0.000E+00 |
| S13 | 3.704E-06 | -4.160E-07 | 3.535E-08 | -1.192E-09 | 0.000E+00 |
| S14 | 5.745E-06 | 1.064E-06 | -1.381E-07 | 4.819E-09 | 0.000E+00 |
| S15 | -2.891E-05 | 4.263E-06 | -2.840E-07 | 6.925E-09 | 0.000E+00 |
| S16 | -1.465E-04 | 2.662E-05 | -3.064E-06 | 2.011E-07 | -5.720E-09 |
| S17 | -5.262E-07 | -2.283E-07 | 4.070E-08 | -2.741E-09 | 6.957E-11 |

As shown in Table 5.3, Table 5.4, and Table 5.5, Table 5.3 shows other main parameters of the optical system of the camera module in Embodiment 5 of this application, Table 5.4 shows a focal length and a value of ξₘᵢₙ of the optical system of the camera module in Embodiment 5 of this application when an object distance is infinite, and Table 5.5 shows a focal length and a value of ξ of the optical system of the camera module in Embodiment 5 of this application when the object distance is 250 mm.

**Table 5.3**

| Parameter | TTL | ImgH | EFL | F/# | f1 | f2 | f3 | f4 | f5 | f6 | f7 | f34 |
|---|---|---|---|---|---|---|---|---|---|---|---|---|
| Value | 31.508 | 5.110 | 19.112 | 1.950 | 58.350 | 22.520 | - 7.570 | 9.082 | 12.751 | - 47.042 | - 17.062 | - 44.294 |
| Unit | mm | mm | mm | / | mm | mm | mm | mm | mm | mm | mm | mm |

**Table 5.4 Object distance: INFINITY**

| Parameter | f_{A} | f_{g0} | f_{g1} | d_{A} | ξₘᵢₙ | f_{A}/f_{g0} | f_{A}/f_{g1} |
|---|---|---|---|---|---|---|---|
| Value | 19.002 | 58.353 | 28.225 | -0.0981 | 0.894 | 0.326 | 0.673 |
| Unit | mm | mm | mm | mm | | | |

**Table 5.5 Object distance: Macro=250 mm**

| Parameter | f_{B} | f_{g0} | f_{g1} | d_{B} | ξ |
|---|---|---|---|---|---|
| Value | 18.6366 | 58.353 | 28.225 | -1.7975 | 0.921 |
| Unit | mm | mm | mm | mm | |

In Table 5.3 to Table 5.5, f1 is a focal length of the positive lens L01, f2 is a focal length of the first lens L11, f3 is a focal length of the negative lens L121, f4 is a focal length of the positive lens L122, f34 is a combined focal length of the negative lens L121 and the positive lens L122, f5 is a focal length of the third lens L13, f6 is a focal length of the fourth lens L14, f7 is a focal length of the fifth lens L15, and f_{A} is an effective focal length of the optical lens assembly in a state of focusing on a distant scene. f_{B} is an effective focal length of the optical lens assembly in a state of focusing on a near scene, f_{g0} is an effective focal length of the front lens group G0, and f_{g1} is an effective focal length of the rear lens group G1. d_{A} is a distance between an image-space principal plane of the front lens group G0 and an object-space principal plane of the rear lens group G1 when the optical lens assembly is in a state of focusing on a distant scene (the object distance is infinite); and d_{B} is a distance between the image-space principal plane of the front lens group G0 and the object-space principal plane of the rear lens group G1 when the optical lens assembly is in a state of focusing on a near scene (the object distance is 250 mm).

It can be learned from the data in Table 5.4 and Table 5.5 that (f_{A}-f_{B})/f_{A}=0.0192.

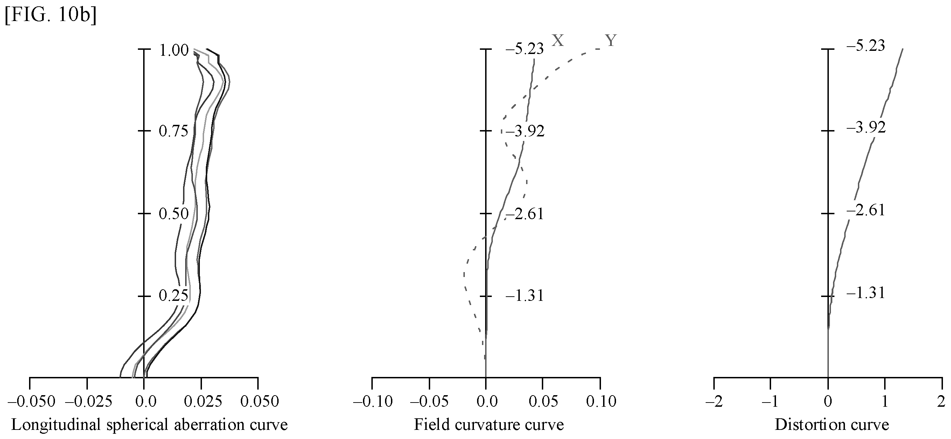

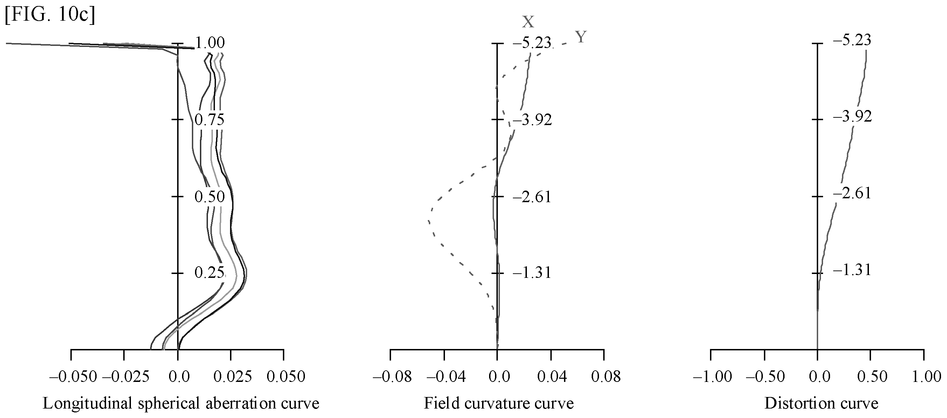

FIG. 10b is a simulation effect diagram of an optical system of a camera module in Embodiment 5 of this application when an object distance is infinite, and FIG. 10c is a simulation effect diagram of the optical system of the camera module in Embodiment 5 of this application when the object distance is 250 mm. FIG. 10b and FIG. 10c show longitudinal spherical aberration (LONGITUDINAL SPHERICAL ABERRATION) curves, astigmatism and field curvature curves for each image height, and optical distortion (DISTORTION) curves of the optical lens assembly. The longitudinal spherical aberration curve includes spherical aberration curves corresponding to different bands (including 656.2725 nm, 587.5618 nm, and 486.1327 nm in the figure) of the system. A physical meaning of the longitudinal spherical aberration curve is a deviation relative to an ideal image point after light of a corresponding wavelength emitted in a 0-degree field of view passes through the optical system. A horizontal coordinate of the longitudinal spherical aberration curve is a deviation value in a direction of an optical axis, and a vertical coordinate is a normalized coordinate at an optical pupil. The values shown in FIG. 10b and FIG. 10c are small, and a longitudinal spherical aberration of the optical lens assembly is well corrected. The astigmatism and field curvature curve diagram shows deviations between convergence points of fine light beams in different fields of view and an ideal imaging surface, where x is a light beam in a sagittal direction, and y is a light beam in a meridian direction. A horizontal coordinate of the astigmatism and field curvature curve diagram is a deviation value in a direction of an optical axis, and a vertical coordinate of the astigmatism and field curvature curve diagram is a corresponding field of view. When a value of a field of view is excessively large, image quality in the field of view is poor or a high-order aberration exists. As shown in FIG. 10b and FIG. 10c, field curvatures in the two directions are small, and the system has a good depth of focus. The distortion diagram is used to represent relative deviations of convergence points of light beams in different fields of view (actual image heights) from an ideal image height. The deviations shown in FIG. 10b and FIG. 10c are small, so that it can be ensured that there is no obvious picture deformation. Therefore, in the optical system of the camera module in Embodiment 5 of this application, a low light aberration is controlled by using a proper surface type and gap design, and the like, to obtain clear image quality.

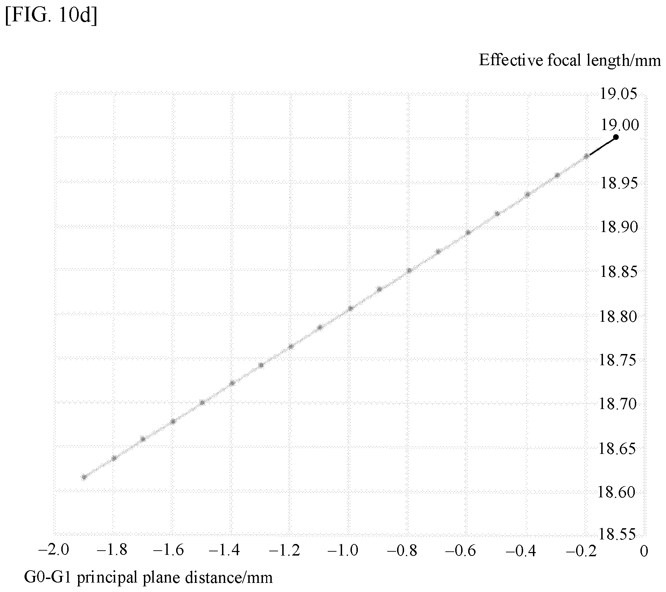

FIG. 10d shows a curve of a relationship between an effective focal length and a distance between the image-space principal plane of the front lens group G0 and the object-space principal plane of the rear lens group G1 in a focusing process of the optical lens assembly according to Embodiment 5 of this application. As shown in FIG. 10d, in a process in which the optical lens assembly is switched from a state of focusing on a near scene to a state of focusing on a distant scene, the distance between the image-space principal plane of the front lens group G0 and the object-space principal plane of the rear lens group G1 continuously increases, and the effective focal length of the optical lens assembly continuously increases. The distance between the image-space principal plane of the front lens group G0 and the object-space principal plane of the rear lens group G1 changes linearly with the effective focal length of the optical lens assembly.

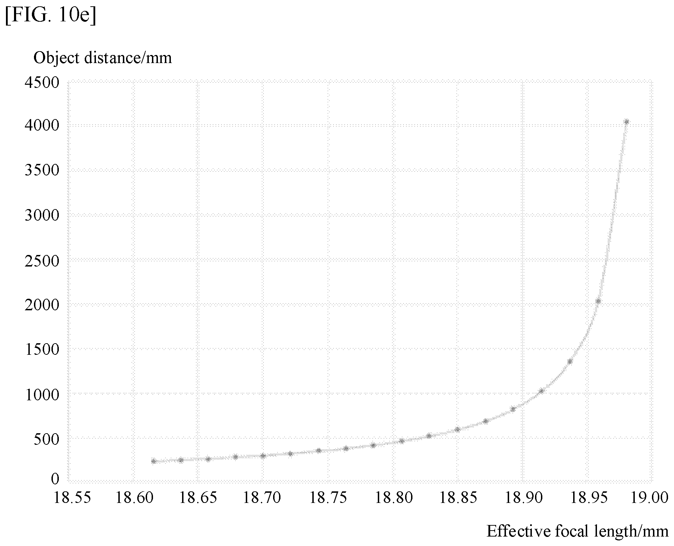

FIG. 10e shows a curve of a relationship between an object distance and an effective focal length in a focusing process of the optical lens assembly according to Embodiment 5 of this application. As shown in FIG. 10e, in a process in which the optical lens assembly switches from a state of focusing on a near scene to a state of focusing on a distant scene, the effective focal length of the optical lens assembly continuously increases as the object distance increases.

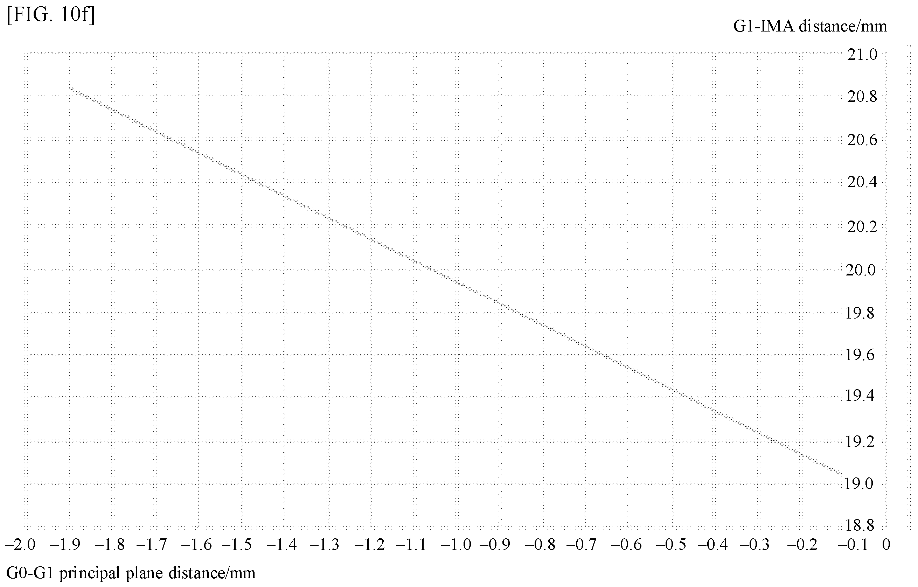

FIG. 10f shows a curve of a relationship between a distance between the image-space principal plane of the rear lens group G1 and an image plane IMA and a distance between the image-space principal plane of the front lens group G0 and the object-space principal plane of the rear lens group G1 in a focusing process of the optical lens assembly according to Embodiment 5 of this application. As shown in FIG. 10f, in a process in which the optical lens assembly is switched from a state of focusing on a near scene to a state of focusing on a distant scene, the image-space principal plane of the front lens group G0 and the object-space principal plane of the rear lens group G1 continuously increase, the distance from the image-space principal plane of the rear lens group G1 to the image plane IMA continuously decreases, and a total track length of the optical lens assembly remains unchanged.

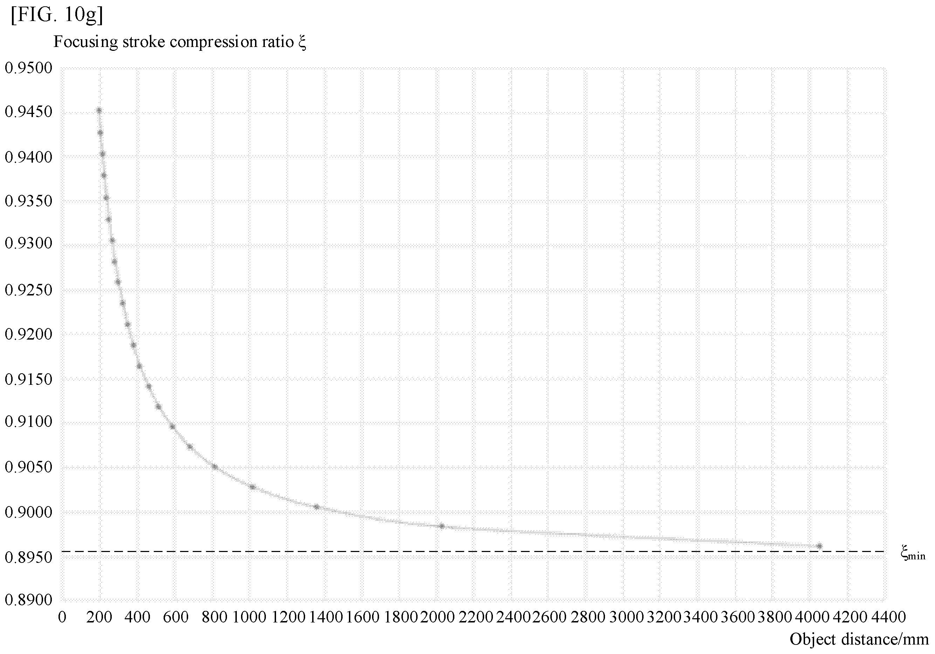

FIG. 10g shows a curve of a relationship between a focusing stroke compression ratio and an object distance in a focusing process of an optical lens assembly according to Embodiment 5 of this application. As shown in FIG. 10g, in a process in which the optical lens assembly is switched from a state of focusing on a near scene to a state of focusing on a distant scene, as the object distance increases, the focusing stroke compression ratio continuously decreases, and a lower side of the curve of the relationship between the focusing stroke compression ratio and the object distance approaches a line infinitely, where a value corresponding to an intersection point of the line and a vertical axis is the minimum value ξₘᵢₙ of the focusing stroke compression ratio.

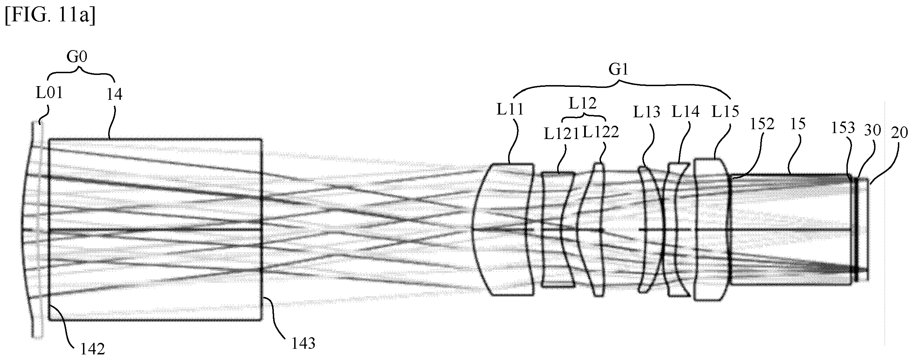

FIG. 11a is a diagram of an optical system of a camera module according to Embodiment 6 of this application. Both a first turning element and a second turning element in FIG. 11a are prisms, and the prisms are equivalently replaced with parallel plates in an optical path. A main difference between the optical lens assembly shown in FIG. 11a and the optical lens assembly shown in FIG. 4 lies in that a composition of the rear lens group G1 is different. Details are as follows:

As shown in FIG. 11a, the rear lens group G1 includes a first lens L11, a second lens L12, a third lens L13, a fourth lens L14, and a fifth lens L15 in a direction from an object side to an image side. The first lens L11 has a positive focal power, the second lens L12 has a negative focal power, the third lens has a positive focal power, the fourth lens L14 has a negative focal power, and the fifth lens L15 has a negative focal power.

Setting focal powers of lenses in the rear lens group G1 to positive and negative respectively can balance some aberrations, thereby helping reduce aberrations of the optical lens assembly and ensuring imaging quality of the optical lens assembly. In addition, this avoids an excessive quantity of lenses in the rear lens group G1, thereby helping reduce a weight of the optical lens assembly.

In some embodiments, as shown in FIG. 11a, the second lens L12 includes a positive lens L122 and a negative lens L121 that are spaced apart. This helps increase a quantity of surfaces of a lens in the rear lens group G1, and increases a degree of freedom of design of the rear lens group G1, thereby helping correct an aberration of the optical lens assembly.

The following specifically describes the optical system of the camera module shown in FIG. 11a in combination with specific parameters and simulation results.

As shown in Table 6.1 and Table 6.2, Table 6.1 shows some main parameters of the optical system of the camera module in Embodiment 6 of this application, and Table 6.2 shows aspheric coefficients of surfaces of the optical system of the camera module Embodiment 6 of this application.

**Table 6.1**

| Surface number | Surface type | Optical element | Curvatuer radius | Thicknes (INF) | Thickness (macro) | Material | Refractive index | Abbe number | Light transmission radius |
|---|---|---|---|---|---|---|---|---|---|
| OBJ | Spherical | | INFINITY | 1.00E+10 | 59.385 | | | | 0.00 |
| S1 | Aspheric | L01 | 19.3365 | 0.7797 | | Resin | 1.5272 | 56.085 | 4.50 |
| S2 | Aspheric | | 43.8011 | 0.5645 | | | | | 5.38 |
| S3 | Spherical | Prism1 | INFINIT Y | 10.5846 | | Glass | 1.4875 | 70.441 | 4.50 |
| S4 | Spherical | | INFINIT Y | 0.0000 | -6.000 | | | | 3.81 |
| S5 | Spherical | | INFINITY | 10.5115 | 10.5115 | | | | 3.80 |
| S6 | Asphe ric | L11 | 5.4763 | 2.6584 | | Resi n | 1.5346 | 55.695 | 3.25 |
| S7 | Asphe ric | | 7.7700 | 0.8202 | | | | | 2.88 |
| S8 | Asphe ric | L121 | 15.2102 | 0.9282 | | Resi n | 1.6707 | 30.271 4 | 2.78 |
| S9 | Asphe ric | | 3.7445 | 0.8052 | | | | | 2.84 |
| S10 | Asphe ric | L122 | 3.7634 | 1.1821 | | Resi n | 1.5901 | 61.996 6 | 3.26 |
| S11 | Asphe ric | | 10.2970 | 2.2436 | | | | | 3.30 |
| S12 | Asphe ric | L13 | -33.6987 | 0.8956 | | Resi n | 1.66869 | 34.760 6 | 3.48 |
| S13 | Asphe ric | | -7.0741 | 0.0500 | | | | | 3.12 |
| S14 | Asphe ric | L14 | -7.0100 | 0.6039 | | Resi n | 1.67 | 30 | 2.86 |
| S15 | Asphe ric | | -7.5385 | 0.9824 | | | | | 3.30 |
| S16 | Asphe ric | L15 | 13.0003 | 1.5085 | | Resi n | 1.5444 | 55.815 | 2.64 |
| S17 | Asphe ric | | 6.8028 | 0.2000 | | | | | 3.51 |
| S18 | Spheri cal | Prism2 | INFINIT Y | 6.0000 | | Glas s | 1.8052 | 25.456 | 2.73 |
| S19 | Spheri cal | | INFINIT Y | 0.2000 | | | | | 2.57 |
| S20 | Spheri cal | IRCF | INFINIT Y | 0.1100 | | Resi n | 1.514 | 55.1 | 2.57 |
| S21 | Spherical | | INFINITY | 0.5235 | 6.524 | | | | 2.56 |
| S22 | Spheri cal | IMA | INFINIT Y | 0.0000 | | | | | 2.54 |

In the table, S1 represents an object-side surface of the positive lens L01, and S2 represents an image-side surface of the positive lens L01. PRISM1 represents the first turning element 14, where the first turning element 14 is a prism and has a light deflection function. S3 represents the first light entrance surface 142 of the first turning element 14, S5 represents the first light exit surface 143 of the first turning element 14, S6 represents an object-side surface of the first lens L11, and S7 represents an image-side surface of the first lens L11. S8 represents an object-side surface of the negative lens L121, and S9 represents an image-side surface of the negative lens L121. S10 represents an object-side surface of the positive lens L122, and S11 represents an image-side surface of the positive lens L122. S12 represents an object-side surface of the third lens L13, and S13 represents an image-side surface of the third lens L13. S14 represents an object-side surface of the fourth lens L14, and S15 represents an image-side surface of the fourth lens L14. S16 represents an object-side surface of the fifth lens L15, and S17 represents an image-side surface of the fifth lens L15. PRISM2 represents the second turning element 15, where the second turning element 15 is a prism and has a light deflection function. S18 represents the second light entrance surface 152 of the second turning element 15, and S19 represents the second light exit surface 153 of the second turning element 15. IRCF represents a light filter, where the light filter is an infrared light filter. S20 represents an object-side surface of the light filter, and S21 represents an image-side surface of the light filter. IMA represents an image plane IMAGE, and the image plane IMAGE may be a photosensitive surface of a photosensitive element.

In the "thickness" parameter column in the table, a value corresponding to a surface number Sₙ represents a distance between a surface with the surface number Sₙ and a surface with a surface number Sₙ₊₁ on an optical axis. Rules for positive and negative signs in front of the thickness parameter are as follows: A vertex (an intersection point with the optical axis) of the surface Sₙ is used as a calculation origin, and a vertex of the surface Sₙ₊₁ is positive on the right and negative on the left.

The curvature radius in the table is a curvature radius of a surface corresponding to a surface number on the optical axis. A rule of positive and negative signs in front of the curvature radius parameter is as follows: A vertex of the surface Sₙ is used as a calculation origin, and a sphere center is positive on the right, and negative on the left. If the curvature radius is INF, it indicates that a surface corresponding to the parameter is a plane, and the curvature radius is infinite.

**Table 6.2**

| Surface number | K | Type | Norm radius | A₀ | A₁ | A₂ |
|---|---|---|---|---|---|---|
| OBJ | 0.00E+00 | 0.00 | 0.00 | 0.000E+00 | 0.000E+00 | 0.000E+00 |
| S1 | 0.00E+00 | 1.00 | 4.86 | -8.493E-03 | -1.960E-02 | 2.671E-03 |
| S2 | 0.00E+00 | 1.00 | 4.46 | -3.217E-03 | -1.430E-02 | 2.501E-03 |
| S3 | 0.00E+00 | 0.00 | 0.00 | 0.000E+00 | 0.000E+00 | 0.000E+00 |
| S4 | 0.00E+00 | 0.00 | 0.00 | 0.000E+00 | 0.000E+00 | 0.000E+00 |
| S5 | 0.00E+00 | 0.00 | 0.00 | 0.000E+00 | 0.000E+00 | 0.000E+00 |
| S6 | 0.00E+00 | 1.00 | 3.45 | -1.092E-01 | -1.669E-03 | -3.077E-03 |
| S7 | 0.00E+00 | 1.00 | 3.03 | -2.020E-01 | -1.794E-02 | -7.907E-03 |
| S8 | 0.00E+00 | 1.00 | 2.90 | -3.281E-01 | -3.169E-02 | 7.529E-03 |
| S9 | 0.00E+00 | 1.00 | 2.84 | -5.780E-01 | -5.150E-02 | 1.701E-02 |
| S10 | 0.00E+00 | 1.00 | 3.02 | -6.491E-01 | -4.581E-02 | 3.919E-03 |
| S11 | 0.00E+00 | 1.00 | 3.30 | -4.388E-01 | 2.677E-03 | -2.321E-03 |
| S12 | 0.00E+00 | 1.00 | 3.10 | -2.924E-01 | -3.367E-02 | -1.734E-02 |
| S13 | 0.00E+00 | 1.00 | 3.12 | -1.042E-01 | -2.049E-02 | -7.909E-03 |
| S14 | 0.00E+00 | 1.00 | 3.23 | 1.266E+00 | -1.071E-01 | 3.543E-03 |
| S15 | 0.00E+00 | 1.00 | 3.30 | 1.544E+00 | -1.138E-01 | -2.018E-03 |
| S16 | 0.00E+00 | 1.00 | 3.11 | -6.932E-01 | 2.980E-02 | -2.115E-02 |
| S17 | 0.00E+00 | 1.00 | 3.51 | -1.381E+00 | 8.580E-02 | -2.522E-02 |
| S18 | 0.00E+00 | 0.00 | 0.00 | 0.000E+00 | 0.000E+00 | 0.000E+00 |
| S19 | 0.00E+00 | 0.00 | 0.00 | 0.000E+00 | 0.000E+00 | 0.000E+00 |
| S20 | 0.00E+00 | 0.00 | 0.00 | 0.000E+00 | 0.000E+00 | 0.000E+00 |
| S21 | 0.00E+00 | 0.00 | 0.00 | 0.000E+00 | 0.000E+00 | 0.000E+00 |
| S22 | 0.00E+00 | 0.00 | 0.00 | 0.000E+00 | 0.000E+00 | 0.000E+00 |

| Surface number | A₃ | A₄ | A₅ | A₆ | A₇ | A₈ |
|---|---|---|---|---|---|---|
| OBJ | 0.000E+00 | 0.000E+00 | 0.000E+00 | 0.000E+00 | 0.000E+00 | 0.000E+00 |
| S1 | -1.177E-03 | 1.027E-03 | -2.939E-04 | 2.090E-04 | 0.000E+00 | 0.000E+00 |
| S2 | -1.340E-03 | 7.147E-04 | -2.900E-04 | 8.702E-05 | -9.448E-06 | -1.514E-06 |
| S3 | 0.000E+00 | 0.000E+00 | 0.000E+00 | 0.000E+00 | 0.000E+00 | 0.000E+00 |
| S4 | 0.000E+00 | 0.000E+00 | 0.000E+00 | 0.000E+00 | 0.000E+00 | 0.000E+00 |
| S5 | 0.000E+00 | 0.000E+00 | 0.000E+00 | 0.000E+00 | 0.000E+00 | 0.000E+00 |
| S6 | 5.302E-04 | -2.265E-04 | 1.853E-04 | -4.352E-05 | 1.252E-05 | 0.000E+00 |
| S7 | 2.253E-03 | -1.550E-03 | 7.961E-04 | -8.462E-05 | 0.000E+00 | 0.000E+00 |
| S8 | -1.146E-03 | -3.856E-04 | 6.182E-05 | 1.584E-04 | -4.618E-05 | 0.000E+00 |
| S9 | -6.928E-03 | 2.679E-03 | -9.164E-04 | 2.229E-04 | -3.580E-05 | 0.000E+00 |
| S10 | -4.896E-03 | 2.364E-04 | 1.328E-03 | -5.033E-04 | 3.568E-05 | 0.000E+00 |
| S11 | 2.047E-03 | -1.572E-03 | 3.901E-03 | -2.129E-03 | 6.206E-04 | 0.000E+00 |
| S12 | 1.791E-02 | -1.496E-02 | 6.155E-03 | -1.745E-03 | 4.216E-04 | 0.000E+00 |
| S13 | 2.080E-03 | -1.437E-03 | 2.636E-04 | -6.083E-05 | 4.603E-05 | 0.000E+00 |
| S14 | -1.257E-02 | 1.097E-02 | -4.250E-03 | 2.892E-03 | -1.331E-03 | 0.000E+00 |
| S15 | 1.954E-02 | -6.304E-03 | 2.689E-03 | -4.171E-03 | -4.324E-03 | 0.000E+00 |
| S16 | 2.086E-02 | -1.292E-02 | 6.360E-03 | -6.614E-04 | 1.689E-04 | -8.284E-05 |
| S17 | 8.374E-03 | -6.669E-03 | 3.919E-03 | -1.931E-03 | 5.561E-04 | -1.610E-04 |
| S18 | 0.000E+00 | 0.000E+00 | 0.000E+00 | 0.000E+00 | 0.000E+00 | 0.000E+00 |
| S19 | 0.000E+00 | 0.000E+00 | 0.000E+00 | 0.000E+00 | 0.000E+00 | 0.000E+00 |
| S20 | 0.000E+00 | 0.000E+00 | 0.000E+00 | 0.000E+00 | 0.000E+00 | 0.000E+00 |
| S21 | 0.000E+00 | 0.000E+00 | 0.000E+00 | 0.000E+00 | 0.000E+00 | 0.000E+00 |
| S22 | 0.000E+00 | 0.000E+00 | 0.000E+00 | 0.000E+00 | 0.000E+00 | 0.000E+00 |

**Table 6.3**

| Para meter | TTL | ImgH | EFL | F/# | f1 | f2 | f3 | f4 | f5 | f6 | f7 | f34 |
|---|---|---|---|---|---|---|---|---|---|---|---|---|
| Value | 42.152 | 5.11 | 19.176 | 2.2 | 65 | 24.601 | -7.6099 | 9.3902 | 13.1428 | -274.8037 | -28.5801 | -45.721 |
| Unit | mm | mm | mm | / | mm | mm | mm | mm | mm | mm | mm | mm |

**Table 6.4 Object distance: INFINITY**

| Parameter | f_{A} | f_{g0} | f_{g1} | d_{A} | ξₘᵢₙ | f_{A}/f_{g0} | f_{A}/f_{g1} |
|---|---|---|---|---|---|---|---|
| Value | 19.176 | 65.000 | 18.507 | 20.7738 | 0.913 | 0.295 | 1.036 |
| Unit | mm | mm | mm | mm | | | |

**Table 6.5 Object distance: Macro=59.385 mm**

| Parameter | f_{B} | f_{g0} | f_{g1} | d_{B} | ξ |
|---|---|---|---|---|---|
| Value | 17.502 | 65.000 | 18.507 | 14.7739 | 1.139 |
| Unit | mm | mm | mm | mm | |

In Table 6.3 to Table 6.5, f1 is a focal length of the positive lens L01, f2 is a focal length of the first lens L11, f3 is a focal length of the negative lens L121, f4 is a focal length of the positive lens L122, f34 is a combined focal length of the negative lens L121 and the positive lens L122, f5 is a focal length of the third lens L13, f6 is a focal length of the fourth lens L14, f7 is a focal length of the fifth lens L15, and f_{A} is an effective focal length of the optical lens assembly in a state of focusing on a distant scene. f_{B} is an effective focal length of the optical lens assembly in a state of focusing on a near scene, f_{g0} is an effective focal length of the front lens group G0, and f_{g1} is an effective focal length of the rear lens group G1. d_{A} is a distance between an image-space principal plane of the front lens group G0 and an object-space principal plane of the rear lens group G1 when the optical lens assembly is in a state of focusing on a distant scene (the object distance is infinite); and d_{B} is a distance between the image-space principal plane of the front lens group G0 and the object-space principal plane of the rear lens group G1 when the optical lens assembly is in a state of focusing on a near scene (the object distance is 59.385 mm).

It can be learned from the data in Table 6.4 and Table 6.5 that (f_{A}-f_{B})/f_{A}=0.087.

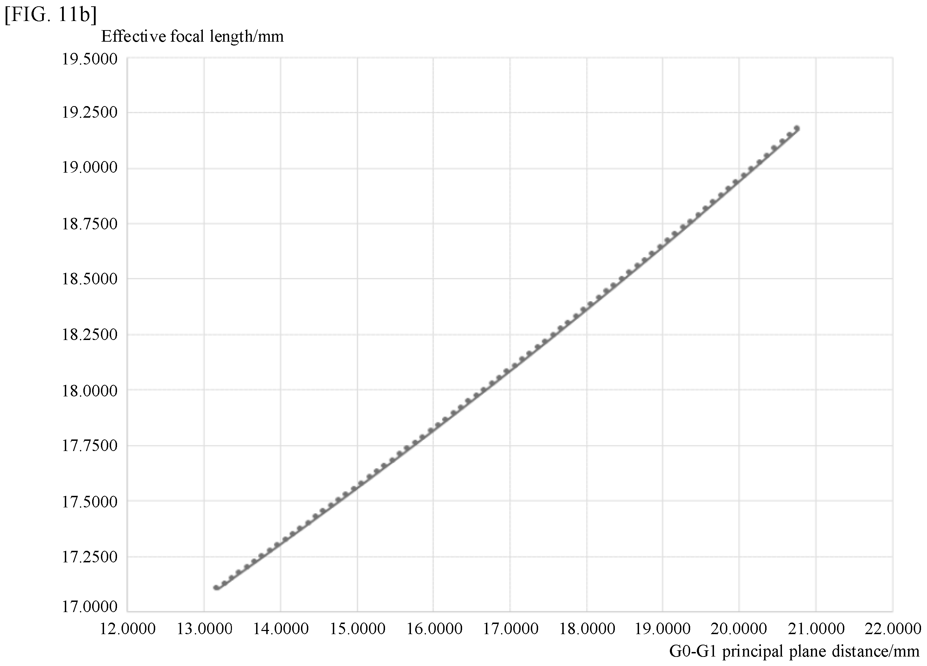

FIG. 11b shows a curve of a relationship between an effective focal length and a distance between the image-space principal plane of the front lens group G0 and the object-space principal plane of the rear lens group G1 in a focusing process of the optical lens assembly according to Embodiment 6 of this application. As shown in FIG. 11b, in a process in which the optical lens assembly is switched from a state of focusing on a near scene to a state of focusing on a distant scene, the distance between the image-space principal plane of the front lens group G0 and the object-space principal plane of the rear lens group G1 continuously increases, and the effective focal length of the optical lens assembly continuously increases. The distance between the image-space principal plane of the front lens group G0 and the object-space principal plane of the rear lens group G1 changes linearly with the effective focal length of the optical lens assembly.

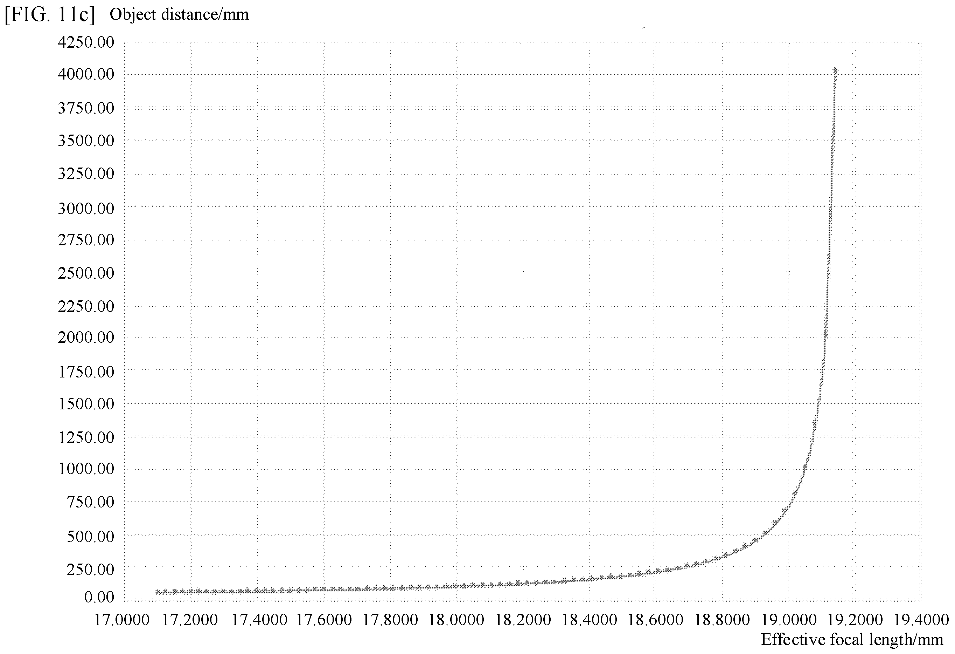

FIG. 11c shows a curve of a relationship between an object distance and an effective focal length in a focusing process of the optical lens assembly according to Embodiment 6 of this application. As shown in FIG. 11c, in a process in which the optical lens assembly switches from a state of focusing on a near scene to a state of focusing on a distant scene, the effective focal length of the optical lens assembly continuously increases as the object distance increases.

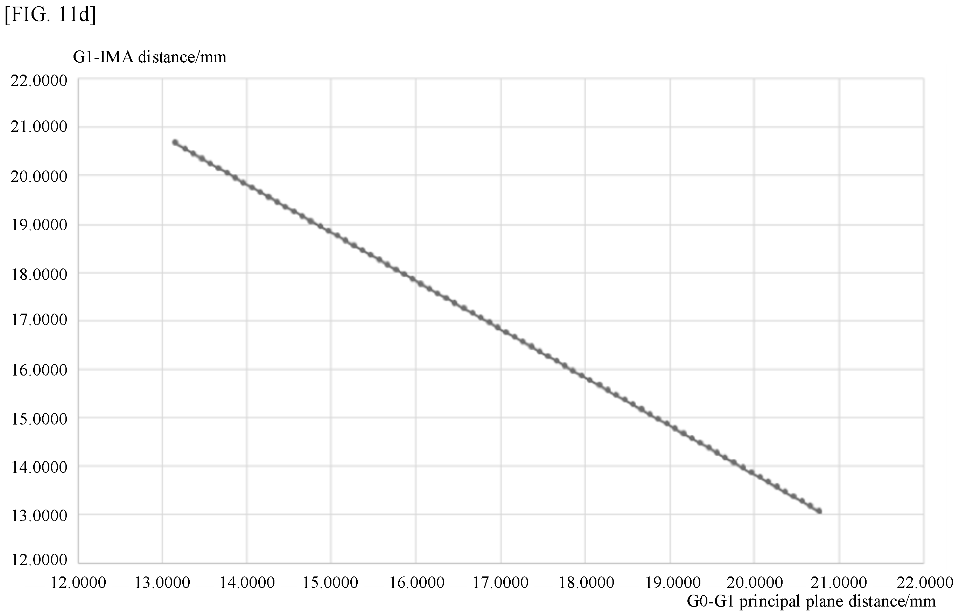

FIG. 11d shows a curve of a relationship between a distance between the image-space principal plane of the rear lens group G1 and an image plane IMA and a distance between the image-space principal plane of the front lens group G0 and the object-space principal plane of the rear lens group G1 in a focusing process of the optical lens assembly according to Embodiment 6 of this application. As shown in FIG. 11d, in a process in which the optical lens assembly is switched from a state of focusing on a near scene to a state of focusing on a distant scene, the image-space principal plane of the front lens group G0 and the object-space principal plane of the rear lens group G1 continuously increase, the distance from the image-space principal plane of the rear lens group G1 to the image plane IMA continuously decreases, and a total track length of the optical lens assembly remains unchanged.

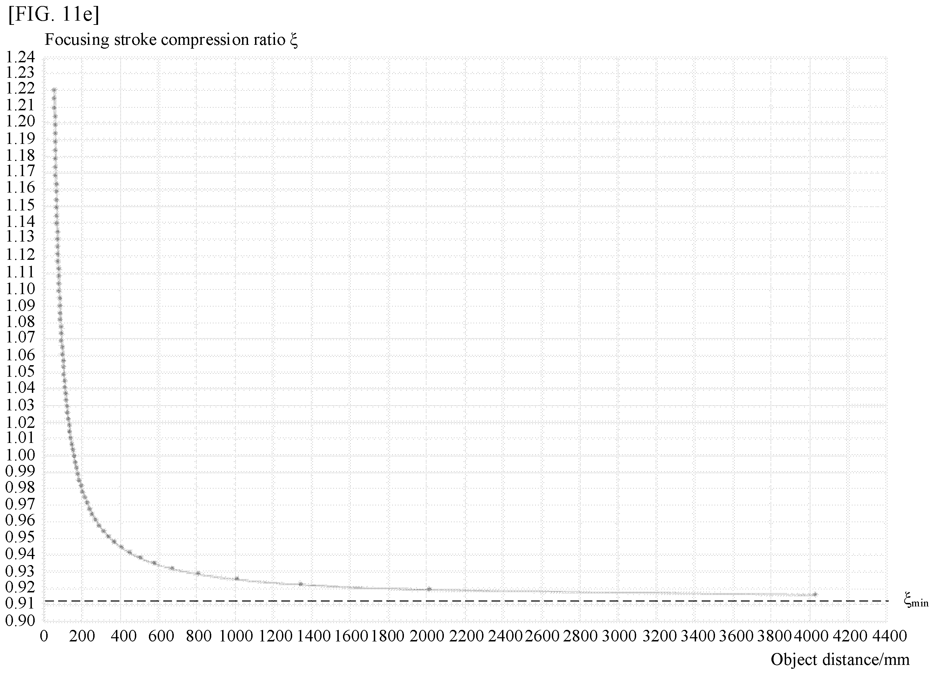

FIG. 11e shows a curve of a relationship between a focusing stroke compression ratio and an object distance in a focusing process of an optical lens assembly according to Embodiment 6 of this application. As shown in FIG. 11e, in a process in which the optical lens assembly is switched from a state of focusing on a near scene to a state of focusing on a distant scene, as the object distance increases, the focusing stroke compression ratio continuously decreases, and a lower side of the curve of the relationship between the focusing stroke compression ratio and the object distance approaches a line infinitely, where a value corresponding to an intersection point of the line and a vertical axis is the minimum value ξₘᵢₙ of the focusing stroke compression ratio.

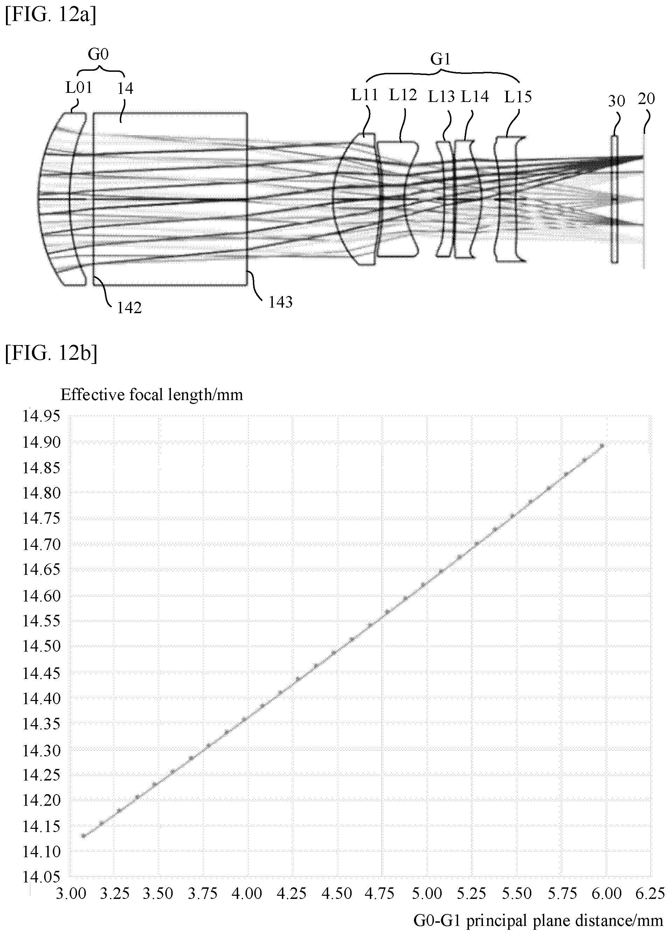

FIG. 12a is a diagram of an optical system of a camera module according to Embodiment 7 of this application. A first turning element in FIG. 12a is a prism, and the prism is equivalently replaced with parallel plates in an optical path. A main difference between the optical lens assembly shown in FIG. 12a and the optical lens assembly shown in FIG. 11a is that: The optical lens assembly in FIG. 12a is not provided with a second turning element 15, and the photosensitive element and the optical lens assembly are arranged along the second optical axis 12.

The following specifically describes the optical system of the camera module shown in FIG. 12a in combination with specific parameters and simulation results.

As shown in Table 7.1 and Table 7.2, Table 7.1 shows some main parameters of the optical system of the camera module in Embodiment 7 of this application, and Table 7.2 shows aspheric coefficients of surfaces of the optical system of the camera module in Embodiment 7 of this application.

**Table 7.1**

| Surface number | Optical element | Surface type | Curvature radius | Thickness (INF) | Thickness (macro) | Material | Refractive index | Abbe number | Light transmission radius |
|---|---|---|---|---|---|---|---|---|---|
| OBJ | | | INFINIT Y | 1.00E+10 | | | | | 0.0000 |
| S1 | L01 | Aspheric | 6.5197 | 1.1648 | | Resin | 1.5339 | 55.8284 | 3.2256 |
| S2 | | Aspheric | 8.8413 | 0.8960 | | | | | 2.9568 |
| S3 (STO) | Prism | Spherical | INFINITY | 5.7344 | | Glass | 1.9229 | 20.8799 | 3.2256 |
| S4 | | Spherical | INFINIT Y | 3.2704 | 1.7472 | | | | 2.5459 |
| S5 | | Spherical | INFINIT Y | -0.0701 | -0.0701 | | | | 2.2673 |
| S6 | | | INFINIT Y | 0.0000 | | | | | 2.2732 |
| S7 | L11 | Aspheric | 3.6085 | 1.7750 | | Resin | 1.5339 | 55.8284 | 2.4550 |
| S8 | | Aspheric | -7.9978 | 0.0896 | | | | | 1.9712 |
| S9 | L12 | Aspheric | -10.8922 | 0.8021 | | Resin | 1.6142 | 25.5765 | 1.9712 |
| S10 | | Aspheric | 3.2801 | 1.4963 | | | | | 2.1504 |
| S11 | L13 | Aspheric | -17.3832 | 0.3569 | | Resin | 1.5434 | 56.4893 | 2.1504 |
| S12 | | Aspheric | -24.7308 | 0.0860 | | | | | 2.0608 |
| S13 | L14 | Aspheric | -9.3451 | 0.9524 | | Resin | 1.6599 | 20.3704 | 1.9712 |
| S14 | | Aspheric | -3.0539 | 0.6756 | | | | | 2.1952 |
| S15 | L15 | Aspheric | -11.6273 | 0.5914 | | Resin | 1.6385 | 23.5074 | 2.1504 |
| S16 | | Aspheric | 10.8638 | 3.5840 | | | | | 2.3296 |
| S17 | IRCF | Spherical | INFINITY | 0.21 | | Glass | 1.5168 | 64.1670 | 2.3483 |
| S18 | | Spherical | INFINITY | 0.9986 | 2.5217 | | | | 2.3748 |
| S19 | IMA | Spherical | INFINITY | 0.0000 | | | | | 2.6051 |

In the table, S1 represents an object-side surface of the positive lens L01, and S2 represents an image-side surface of the positive lens L01. PRISM represents the first turning element 14, where the first turning element 14 is a prism and has a light deflection function. S3 represents the first light entrance surface 142 of the first turning element 14, S5 represents the first light exit surface 143 of the first turning element 14, S7 represents an object-side surface of the first lens L11, and S8 represents an image-side surface of the first lens L11. S9 represents an object-side surface of the second lens L12, and S10 represents an image-side surface of the second lens L12. S11 represents an object-side surface of the third lens L13, and S12 represents an image-side surface of the third lens L13. S13 represents an object-side surface of the fourth lens L14, and S14 represents an image-side surface of the fourth lens L14. S15 represents an object-side surface of the fifth lens L15, and S16 represents an image-side surface of the fifth lens L15. IRCF represents a light filter, where the light filter is an infrared light filter. S17 is an object-side surface of the light filter, and S18 is an image-side surface of the light filter. IMA represents an image plane IMAGE, and the image plane IMAGE may be a photosensitive surface of a photosensitive element.

In the "thickness" parameter column in the table, a value corresponding to a surface number Sₙ represents a distance between a surface with the surface number Sₙ and a surface with a surface number Sₙ₊₁ on an optical axis. Rules for positive and negative signs in front of the thickness parameter are as follows: A vertex (an intersection point with the optical axis) of the surface Sₙ is used as a calculation origin, and a vertex of the surface Sₙ₊₁ is positive on the right and negative on the left.

The curvature radius in the table is a curvature radius of a surface corresponding to a surface number on the optical axis. A rule of positive and negative signs in front of the curvature radius parameter is as follows: A vertex of the surface Sₙ is used as a calculation origin, and a sphere center is positive on the right, and negative on the left. If the curvature radius is INF, it indicates that a surface corresponding to the parameter is a plane, and the curvature radius is infinite.

**Table 7.2**

| Surface number | K | A₂ | A₄ | A₆ | A₈ |
|---|---|---|---|---|---|
| OBJ | 0.00E+00 | 0.00E+00 | 0.00E+00 | 0.00E+00 | 0.00E+00 |
| S1 | 0.00E+00 | 0.00E+00 | 2.47E-03 | -1.34E-03 | 4.75E-04 |
| S2 | 0.00E+00 | 0.00E+00 | 2.85E-03 | -1.88E-03 | 8.32E-04 |
| S3 (STO) | 0.00E+00 | 0.00E+00 | 0.00E+00 | 0.00E+00 | 0.00E+00 |
| S4 | 0.00E+00 | 0.00E+00 | 0.00E+00 | 0.00E+00 | 0.00E+00 |
| S5 | 0.00E+00 | 0.00E+00 | 0.00E+00 | 0.00E+00 | 0.00E+00 |
| S6 | 0.00E+00 | 0.00E+00 | 0.00E+00 | 0.00E+00 | 0.00E+00 |
| S7 | 0.00E+00 | 0.00E+00 | 2.88E-04 | 3.60E-04 | -6.96E-04 |
| S8 | 0.00E+00 | 0.00E+00 | 8.92E-04 | 4.33E-03 | -4.60E-03 |
| S9 | 0.00E+00 | 0.00E+00 | -4.02E-03 | 3.00E-03 | -1.88E-03 |
| S10 | 0.00E+00 | 0.00E+00 | 4.91E-04 | -7.89E-03 | 1.18E-02 |
| S11 | 0.00E+00 | 0.00E+00 | 7.53E-03 | -2.89E-02 | 3.05E-02 |
| S12 | 0.00E+00 | 0.00E+00 | 2.14E-02 | -2.96E-02 | 2.33E-02 |
| S13 | 0.00E+00 | 0.00E+00 | 2.34E-02 | 6.08E-03 | -1.58E-02 |
| S14 | 0.00E+00 | 0.00E+00 | 2.66E-02 | 1.96E-03 | -6.80E-03 |
| S15 | 0.00E+00 | 0.00E+00 | 5.92E-03 | -9.26E-03 | 2.13E-05 |
| S16 | 0.00E+00 | 0.00E+00 | -1.46E-02 | -4.34E-03 | 2.73E-03 |
| S17 | 0.00E+00 | 0.00E+00 | 0.00E+00 | 0.00E+00 | 0.00E+00 |
| S18 | 0.00E+00 | 0.00E+00 | 0.00E+00 | 0.00E+00 | 0.00E+00 |
| S19 | 0.00E+00 | 0.00E+00 | 0.00E+00 | 0.00E+00 | 0.00E+00 |

| Surface number | A₁₀ | A₁₂ | A₁₄ | A₁₆ |
|---|---|---|---|---|
| OBJ | 0.00E+00 | 0.00E+00 | 0.00E+00 | 0.00E+00 |
| S1 | -9.08E-05 | 9.71E-06 | -5.40E-07 | 1.21E-08 |
| S2 | -1.94E-04 | 2.50E-05 | -1.68E-06 | 4.57E-08 |
| S3 (STO) | 0.00E+00 | 0.00E+00 | 0.00E+00 | 0.00E+00 |
| S4 | 0.00E+00 | 0.00E+00 | 0.00E+00 | 0.00E+00 |
| S5 | 0.00E+00 | 0.00E+00 | 0.00E+00 | 0.00E+00 |
| S6 | 0.00E+00 | 0.00E+00 | 0.00E+00 | 0.00E+00 |
| S7 | 4.08E-04 | -1. 13E-04 | 1.52E-05 | -7.79E-07 |
| S8 | 2.83E-03 | -1.02E-03 | 1.91E-04 | -1.39E-05 |
| S9 | 1.03E-03 | -4.73E-04 | 1.17E-04 | -1.06E-05 |
| S10 | -8.66E-03 | 3.12E-03 | -5.41E-04 | 3.43E-05 |
| S11 | -1.43E-02 | 2.90E-03 | -2.18E-04 | 1.40E-06 |
| S12 | -8.77E-03 | 1.25E-03 | 1.17E-05 | -1.16E-05 |
| S13 | 9.26E-03 | -2.67E-03 | 3.99E-04 | -2.46E-05 |
| S14 | 2.59E-03 | -3.20E-04 | -4.73E-06 | 3.65E-06 |
| S15 | 1.40E-03 | -4.10E-04 | 5.18E-05 | -2.15E-06 |
| S16 | -7.03E-04 | 1.13E-04 | -1.08E-05 | 1.06E-06 |
| S17 | 0.00E+00 | 0.00E+00 | 0.00E+00 | 0.00E+00 |
| S18 | 0.00E+00 | 0.00E+00 | 0.00E+00 | 0.00E+00 |
| S19 | 0.00E+00 | 0.00E+00 | 0.00E+00 | 0.00E+00 |

**Table 7.3**

| Parameter | TTL | ImgH | EFL | F/# | f1 | f2 | f3 | f4 | f5 | f6 |
|---|---|---|---|---|---|---|---|---|---|---|
| Value | 22.613 | 4 | 14.8913 | 2.6 | 39.4525 | 4.9041 | -3.9892 | -109.1950 | 6.4249 | -8.6398 |
| Unit | mm | mm | mm | / | mm | mm | mm | mm | mm | mm |

**Table 7.4 Object distance: INFINITY**

| Parameter | f_{A} | f_{g0} | f_{g1} | d_{A} | ξ ₘᵢₙ | f_{A}/f_{g0} | f_{A}/f_{g1} |
|---|---|---|---|---|---|---|---|
| Value | 14.8913 | 39.4525 | 20.2938 | 5.9806 | 0.858 | 0.377 | 0.734 |
| Unit | mm | mm | mm | mm | | | |

**Table 7.5 Object distance: Macro=172.928 mm**

| Parameter | f_{B} | f_{g0} | f_{g1} | d_{B} | ξ |
|---|---|---|---|---|---|
| Value | 14.4811 | 39.4525 | 20.2938 | 4.4574 | 0.913 |
| Unit | mm | mm | mm | mm | |

In Table 7.3 to Table 7.5, f1 is a focal length of the positive lens L01, f2 is a focal length of the first lens L11, f3 is a focal length of the second lens L12, f4 is a focal length of the third lens L13, f5 is a focal length of the fourth lens L14, f6 is a focal length of the fifth lens L15, f_{A} is an effective focal length of the optical lens assembly in a state of focusing on a distant scene, f_{B} is an effective focal length of the optical lens assembly in a state of focusing on a near scene, f_{g0} is an effective focal length of the front lens group G0, and f_{g1} is an effective focal length of the rear lens group G1. d_{A} is a distance between an image-space principal plane of the front lens group G0 and an object-space principal plane of the rear lens group G1 when the optical lens assembly is in a state of focusing on a distant scene (the object distance is infinite); and d_{B} is a distance between the image-space principal plane of the front lens group G0 and the object-space principal plane of the rear lens group G1 when the optical lens assembly is in a state of focusing on a near scene (the object distance is 172.928 mm).

It can be learned from the data in Table 7.4 and Table 7.5 that (f_{A}-f_{B})/f_{A}=0.0275.

FIG. 12b shows a curve of a relationship between an effective focal length and a distance between the image-space principal plane of the front lens group G0 and the object-space principal plane of the rear lens group G1 in a focusing process of the optical lens assembly according to Embodiment 7 of this application. As shown in FIG. 12b, in a process in which the optical lens assembly is switched from a state of focusing on a near scene to a state of focusing on a distant scene, the distance between the image-space principal plane of the front lens group G0 and the object-space principal plane of the rear lens group G1 continuously increases, and the effective focal length of the optical lens assembly continuously increases. The distance between the image-space principal plane of the front lens group G0 and the object-space principal plane of the rear lens group G1 changes linearly with the effective focal length of the optical lens assembly.

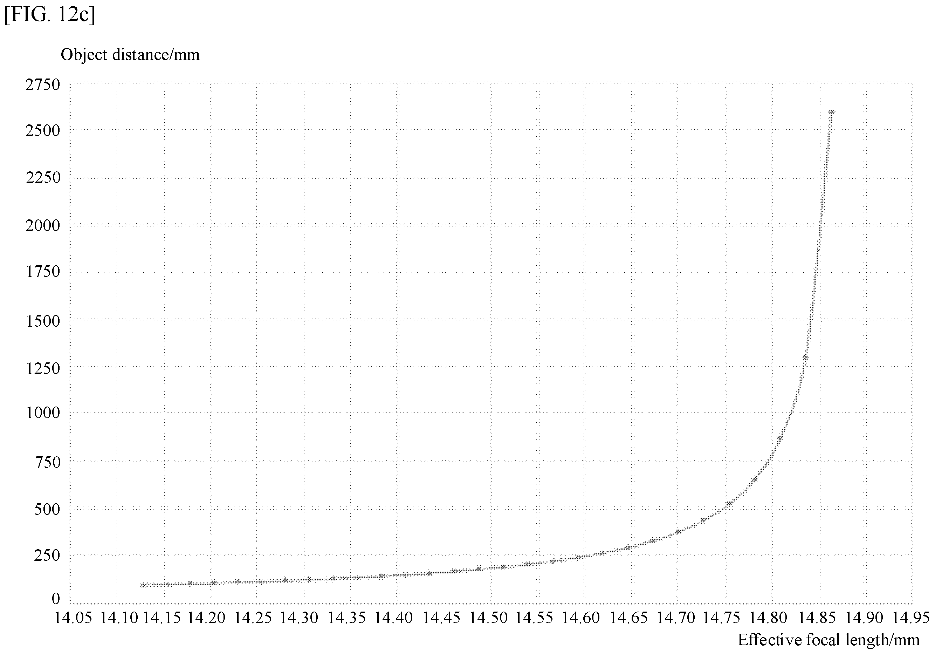

FIG. 12c shows a curve of a relationship between an object distance and an effective focal length in a focusing process of the optical lens assembly according to Embodiment 7 of this application. As shown in FIG. 12c, in a process in which the optical lens assembly switches from a state of focusing on a near scene to a state of focusing on a distant scene, the effective focal length of the optical lens assembly continuously increases as the object distance increases.

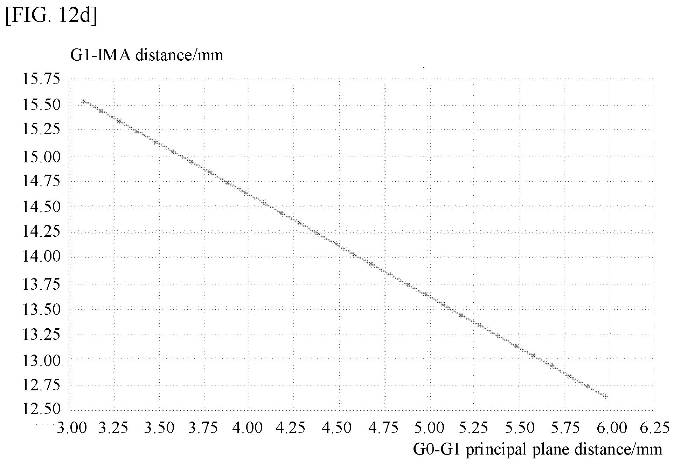

FIG. 12d shows a curve of a relationship between a distance between the image-space principal plane of the rear lens group G1 and an image plane IMA and a distance between the image-space principal plane of the front lens group G0 and the object-space principal plane of the rear lens group G1 in a focusing process of the optical lens assembly according to Embodiment 7 of this application. As shown in FIG. 12d, in a process in which the optical lens assembly is switched from a state of focusing on a near scene to a state of focusing on a distant scene, the image-space principal plane of the front lens group G0 and the object-space principal plane of the rear lens group G1 continuously increase, the distance from the image-space principal plane of the rear lens group G1 to the image plane IMA continuously decreases, and a total track length of the optical lens assembly remains unchanged.

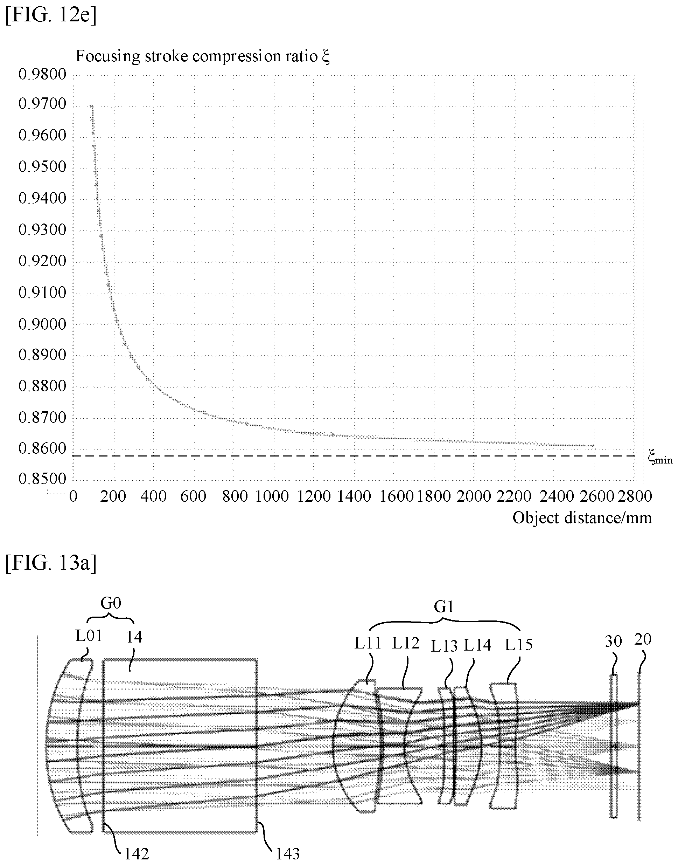

FIG. 12e shows a curve of a relationship between a focusing stroke compression ratio and an object distance in a focusing process of an optical lens assembly according to Embodiment 7 of this application. As shown in FIG. 12e, in a process in which the optical lens assembly is switched from a state of focusing on a near scene to a state of focusing on a distant scene, as the object distance increases, the focusing stroke compression ratio continuously decreases, and a lower side of the curve of the relationship between the focusing stroke compression ratio and the object distance approaches a line infinitely, where a value corresponding to an intersection point of the line and a vertical axis is the minimum value ξₘᵢₙ of the focusing stroke compression ratio.

FIG. 13a is a diagram of an optical system of a camera module according to Embodiment 8 of this application. A first turning element in FIG. 13a is a prism, and the prism is equivalently replaced with parallel plates in an optical path. A main difference between the optical lens assembly shown in FIG. 13a and the optical lens assembly shown in FIG. 11a is that: The optical lens assembly in FIG. 13a is not provided with a second turning element 15, and the photosensitive element and the optical lens assembly are arranged along the second optical axis 12.

The following specifically describes the optical system of the camera module shown in FIG. 13a in combination with specific parameters and simulation results.

As shown in Table 8.1 and Table 8.2, Table 8.1 shows some main parameters of the optical system of the camera module in Embodiment 8 of this application, and Table 8.2 shows aspheric coefficients of surfaces of the optical system of the camera module in Embodiment 8 of this application.

**Table 8.1**

| Surface number | Optical element | Surface type | Curvature radius | Thickness (INF) | Thickness (macro) | Material | Refractive index | Abbe number | Light transmission radius |
|---|---|---|---|---|---|---|---|---|---|
| OBJ | | | INFINITY | 1.00E+10 | 174.0400 | | | | 0.0000 |
| S1 | L01 | Aspheric | 6.8493 | 1.1648 | | Resin | 1.5339 | 55.8284 | 3.2256 |
| S2 | | Aspheric | 9.7505 | 0.9856 | | | | | 2.9568 |
| S3 (STO) | Prism | Spherical | 0.0000 | 5.7344 | | Glass | 1.9229 | 20.8799 | 3.2256 |
| S4 | | Spherical | 0.0000 | 3.1808 | 1.8368 | | | | 2.5366 |
| S5 | | Spherical | 0.0000 | -0.3237 | -0.3237 | | | | 2.2601 |
| S6 | | | 0.0000 | 0.0000 | | | | | 2.2883 |
| S7 | L11 | Aspheric | 3.6430 | 1.7750 | | Resin | 1.5339 | 55.8284 | 2.4550 |
| S8 | | Aspheric | -7.9317 | 0.0896 | | | | | 1.9712 |
| S9 | L12 | Aspheric | -10.7871 | 0.8021 | | Resin | 1.6142 | 25.5765 | 1.9712 |
| S10 | | Aspheric | 3.2885 | 1.4963 | | | | | 2.1504 |
| S11 | L13 | Aspheric | -39.4281 | 0.3569 | | Resin | 1.5434 | 56.4893 | 2.1504 |
| S12 | | Aspheric | -81.9549 | 0.0860 | | | | | 2.0608 |
| S13 | L14 | Aspheric | -10.1271 | 0.9524 | | Resin | 1.6599 | 20.3704 | 1.9712 |
| S14 | | Aspheric | -3.0772 | 0.6756 | | | | | 2.1952 |
| S15 | L15 | Aspheric | -16.7502 | 0.5914 | | Resin | 1.6385 | 23.5074 | 2.1504 |
| S16 | | Aspheric | 7.4007 | 3.5840 | | | | | 2.3296 |
| S17 | IRCF | Spherical | INFINITY | 0.2100 | | Glass | 1.5168 | 64.1670 | 2.6542 |
| S18 | | Spherical | INFINITY | 0.8362 | 2.3594 | | | | 2.6754 |
| S19 | IMA | Spherical | INFINITY | 0.0000 | | | | | 2.8051 |

In the table, S1 represents an object-side surface of the positive lens L01, and S2 represents an image-side surface of the positive lens L01. PRISM represents the first turning element 14, where the first turning element 14 is a prism and has a light deflection function. S3 represents the first light entrance surface 142 of the first turning element 14, S5 represents the first light exit surface 143 of the first turning element 14, S7 represents an object-side surface of the first lens L11, and S8 represents an image-side surface of the first lens L11. S9 represents an object-side surface of the second lens L12, and S10 represents an image-side surface of the second lens L12. S11 represents an object-side surface of the third lens L13, and S12 represents an image-side surface of the third lens L13. S13 represents an object-side surface of the fourth lens L14, and S14 represents an image-side surface of the fourth lens L14. S15 represents an object-side surface of the fifth lens L15, and S16 represents an image-side surface of the fifth lens L15. IRCF represents a light filter, where the light filter is an infrared light filter. S17 is an object-side surface of the light filter, and S18 is an image-side surface of the light filter. IMA represents an image plane IMAGE, and the image plane IMAGE may be a photosensitive surface of a photosensitive element.

In the "thickness" parameter column in the table, a value corresponding to a surface number Sₙ represents a distance between a surface with the surface number Sₙ and a surface with a surface number Sₙ₊₁ on an optical axis. Rules for positive and negative signs in front of the thickness parameter are as follows: A vertex (an intersection point with the optical axis) of the surface Sₙ is used as a calculation origin, and a vertex of the surface Sₙ₊₁ is positive on the right and negative on the left.

The curvature radius in the table is a curvature radius of a surface corresponding to a surface number on the optical axis. A rule of positive and negative signs in front of the curvature radius parameter is as follows: A vertex of the surface Sₙ is used as a calculation origin, and a sphere center is positive on the right, and negative on the left. If the curvature radius is INF, it indicates that a surface corresponding to the parameter is a plane, and the curvature radius is infinite.

**Table 8.2**

| Surface number | K | A₂ | A₄ | A₆ | A₈ |
|---|---|---|---|---|---|
| OBJ | 0.000E+00 | 0.000E+00 | 0.000E+00 | 0.000E+00 | 0.000E+00 |
| S1 | 0.000E+00 | 0.000E+00 | 2.405E-03 | -1.328E-03 | 4.750E-04 |
| S2 | 0.000E+00 | 0.000E+00 | 2.920E-03 | -1.888E-03 | 8.317E-04 |
| S3 (STO) | 0.000E+00 | 0.000E+00 | 0.000E+00 | 0.000E+00 | 0.000E+00 |
| S4 | 0.000E+00 | 0.000E+00 | 0.000E+00 | 0.000E+00 | 0.000E+00 |
| S5 | 0.000E+00 | 0.000E+00 | 0.000E+00 | 0.000E+00 | 0.000E+00 |
| S6 | 0.000E+00 | 0.000E+00 | 0.000E+00 | 0.000E+00 | 0.000E+00 |
| S7 | 0.000E+00 | 0.000E+00 | 1.780E-04 | 4.275E-04 | -6.889E-04 |
| S8 | 0.000E+00 | 0.000E+00 | 9.713E-04 | 4.327E-03 | -4.593E-03 |
| S9 | 0.000E+00 | 0.000E+00 | -4.139E-03 | 2.999E-03 | -1.889E-03 |
| S10 | 0.000E+00 | 0.000E+00 | 1.130E-03 | -7.871E-03 | 1.186E-02 |
| S11 | 0.000E+00 | 0.000E+00 | 7.179E-03 | -2.872E-02 | 3.051E-02 |
| S12 | 0.000E+00 | 0.000E+00 | 2.153E-02 | -2.980E-02 | 2.326E-02 |
| S13 | 0.000E+00 | 0.000E+00 | 2.336E-02 | 6.096E-03 | -1.587E-02 |
| S14 | 0.000E+00 | 0.000E+00 | 2.630E-02 | 1.757E-03 | -6.818E-03 |
| S15 | 0.000E+00 | 0.000E+00 | 5.092E-03 | -9.215E-03 | -6.644E-05 |
| S16 | 0.000E+00 | 0.000E+00 | -1.474E-02 | -4.646E-03 | 2.700E-03 |
| S17 | 0.000E+00 | 0.000E+00 | 0.000E+00 | 0.000E+00 | 0.000E+00 |
| S18 | 0.000E+00 | 0.000E+00 | 0.000E+00 | 0.000E+00 | 0.000E+00 |
| S19 | 0.000E+00 | 0.000E+00 | 0.000E+00 | 0.000E+00 | 0.000E+00 |

| Surface number | A₁₀ | A₁₂ | A₁₄ | A₁₆ | |
|---|---|---|---|---|---|
| OBJ | 0.000E+00 | 0.000E+00 | 0.000E+00 | 0.000E+00 | |
| S1 | -9.085E-05 | 9.705E-06 | -5.397E-07 | 1.216E-08 | |
| S2 | -1.938E-04 | 2.505E-05 | -1.680E-06 | 4.563E-08 | |
| S3 (STO) | 0.000E+00 | 0.000E+00 | 0.000E+00 | 0.000E+00 | |
| S4 | 0.000E+00 | 0.000E+00 | 0.000E+00 | 0.000E+00 | |
| S5 | 0.000E+00 | 0.000E+00 | 0.000E+00 | 0.000E+00 | |
| S6 | 0.000E+00 | 0.000E+00 | 0.000E+00 | 0.000E+00 | |
| S7 | 4.077E-04 | -1.133E-04 | 1.518E-05 | -7.839E-07 | |
| S8 | 2.834E-03 | -1.022E-03 | 1.905E-04 | -1.387E-05 | |
| S9 | 1.032E-03 | -4.724E-04 | 1.168E-04 | -1.061E-05 | |
| S10 | -8.644E-03 | 3.123E-03 | -5.406E-04 | 3.526E-05 | |
| S11 | -1.427E-02 | 2.910E-03 | -2.171E-04 | 3.976E-07 | |
| S12 | -8.777E-03 | 1.246E-03 | 1.159E-05 | -1.173E-05 | |
| S13 | 9.247E-03 | -2.677E-03 | 3.984E-04 | -2.430E-05 | |
| S14 | 2.595E-03 | -3.196E-04 | -5.449E-06 | 2.824E-06 | |
| S15 | 1.354E-03 | -4.269E-04 | 4.850E-05 | -1.144E-06 | |
| S16 | -7.070E-04 | 1.105E-04 | -1.239E-05 | 9.441E-07 | |
| S17 | 0.000E+00 | 0.000E+00 | 0.000E+00 | 0.000E+00 | |
| S18 | 0.000E+00 | 0.000E+00 | 0.000E+00 | 0.000E+00 | |
| S19 | 0.000E+00 | 0.000E+00 | 0.000E+00 | 0.000E+00 | |

**Table 8.3**

| Parameter | TTL | ImgH | EFL | F/# | f1 | f2 | f3 | f4 | f5 | f6 |
|---|---|---|---|---|---|---|---|---|---|---|
| Value | 22.197 | 4 | 14.7892 | 2.6 | 37.7004 | 4.9243 | -3.9875 | -139.7923 | 6.2993 | -7.9016 |
| Unit | mm | mm | mm | / | mm | mm | mm | mm | mm | mm |

**Table 8.4 Object distance: INFINITY**

| Parameter | f_{A} | f_{g0} | f_{g1} | d_{A} | ξₘᵢₙ | f_{A}/f_{g0} | f_{A}/f_{g1} |
|---|---|---|---|---|---|---|---|
| Value | 14.7892 | 37.7004 | 21.577 | 4.2738 | 0.846 | 0.392 | 0.685 |
| Unit | mm | mm | mm | mm | | | |

**Table 8.5 Object distance: Macro=174.04 mm**

| Parameter | f_{B} | f_{g0} | f_{g1} | d_{B} | ξ |
|---|---|---|---|---|---|
| Value | 14.3907 | 37.7004 | 21.5770 | 2.7506 | 0.900 |
| Unit | mm | mm | mm | mm | |

In Table 8.3 to Table 8.5, f1 is a focal length of the positive lens L01, f2 is a focal length of the first lens L11, f3 is a focal length of the second lens L12, f4 is a focal length of the third lens L13, f5 is a focal length of the fourth lens L14, f6 is a focal length of the fifth lens L15, f_{A} is an effective focal length of the optical lens assembly in a state of focusing on a distant scene, f_{B} is an effective focal length of the optical lens assembly in a state of focusing on a near scene, f_{g0} is an effective focal length of the front lens group G0, and f_{g1} is an effective focal length of the rear lens group G1. d_{A} is a distance between an image-space principal plane of the front lens group G0 and an object-space principal plane of the rear lens group G1 when the optical lens assembly is in a state of focusing on a distant scene (the object distance is infinite); and d_{B} is a distance between the image-space principal plane of the front lens group G0 and the object-space principal plane of the rear lens group G1 when the optical lens assembly is in a state of focusing on a near scene (the object distance is 174.04 mm).

It can be learned from the data in Table 8.4 and Table 8.5 that (f_{A}-f_{B})/f_{A}=0.0269.

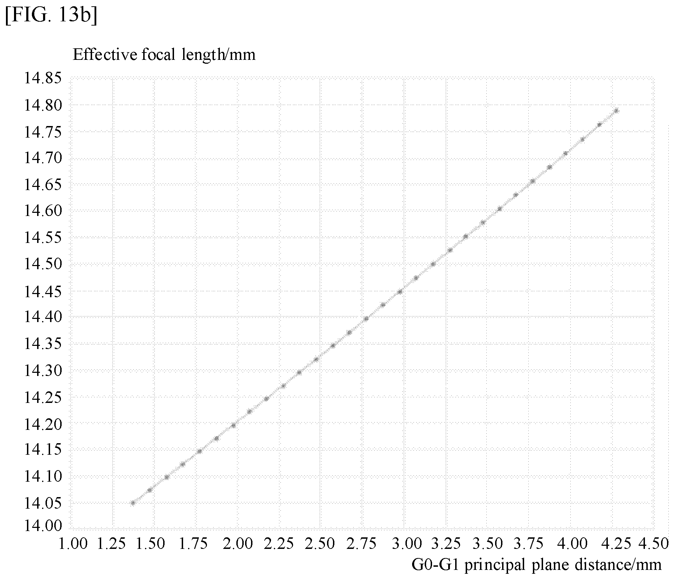

FIG. 13b shows a curve of a relationship between an effective focal length and a distance between the image-space principal plane of the front lens group G0 and the object-space principal plane of the rear lens group G1 in a focusing process of the optical lens assembly according to Embodiment 8 of this application. As shown in FIG. 13b, in a process in which the optical lens assembly is switched from a state of focusing on a near scene to a state of focusing on a distant scene, the distance between the image-space principal plane of the front lens group G0 and the object-space principal plane of the rear lens group G1 continuously increases, and the effective focal length of the optical lens assembly continuously increases. The distance between the image-space principal plane of the front lens group G0 and the object-space principal plane of the rear lens group G1 changes linearly with the effective focal length of the optical lens assembly.

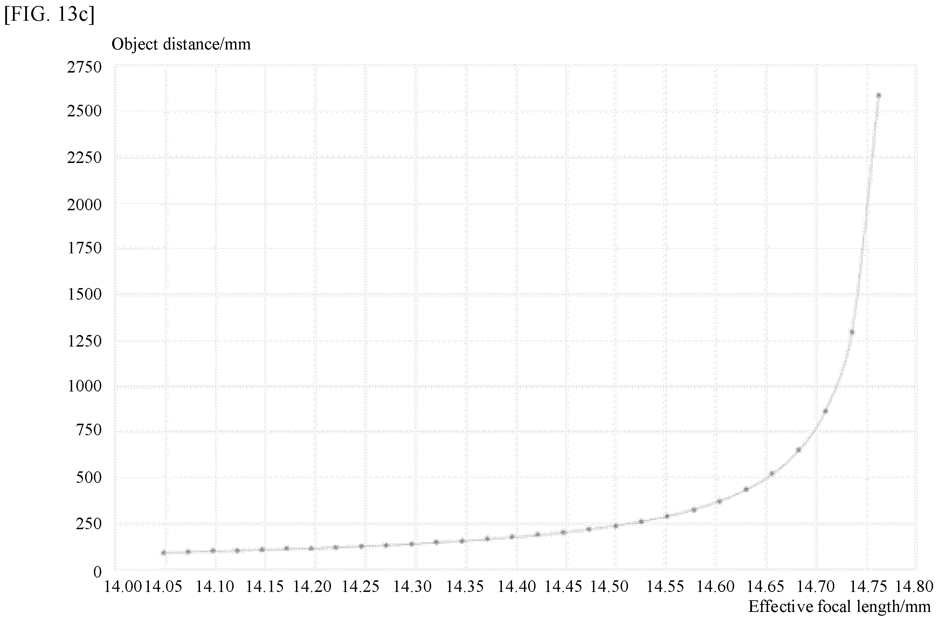

FIG. 13c shows a curve of a relationship between an object distance and an effective focal length in a focusing process of the optical lens assembly according to Embodiment 8 of this application. As shown in FIG. 13c, in a process in which the optical lens assembly switches from a state of focusing on a near scene to a state of focusing on a distant scene, the effective focal length of the optical lens assembly continuously increases as the object distance increases.

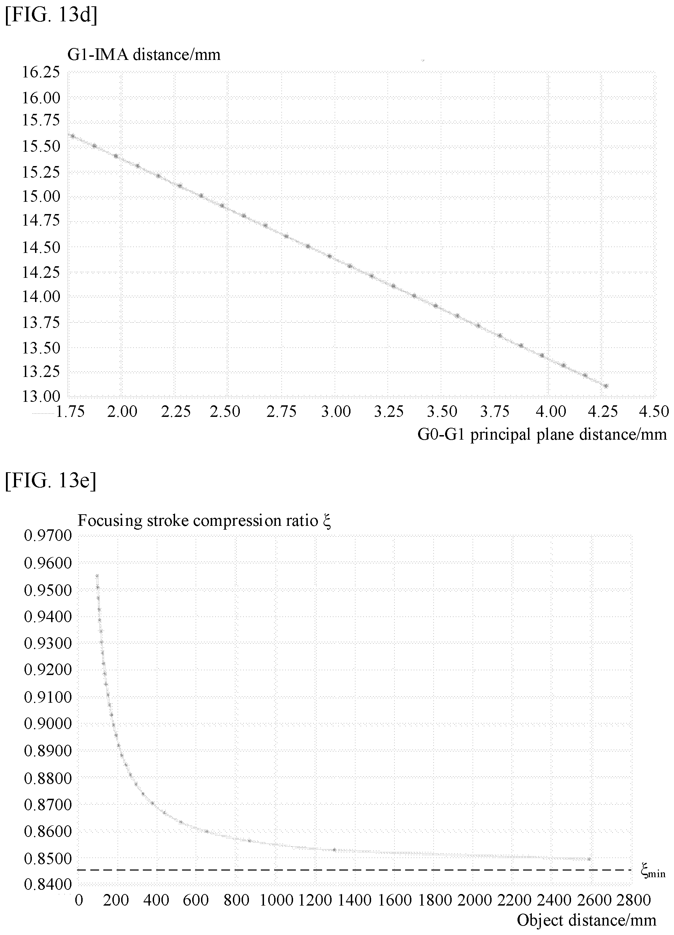

FIG. 13d shows a curve of a relationship between a distance between the image-space principal plane of the rear lens group G1 and an image plane IMA and a distance between the image-space principal plane of the front lens group G0 and the object-space principal plane of the rear lens group G1 in a focusing process of the optical lens assembly according to Embodiment 8 of this application. As shown in FIG. 13d, in a process in which the optical lens assembly is switched from a state of focusing on a near scene to a state of focusing on a distant scene, the image-space principal plane of the front lens group G0 and the object-space principal plane of the rear lens group G1 continuously increase, the distance from the image-space principal plane of the rear lens group G1 to the image plane IMA continuously decreases, and a total track length of the optical lens assembly remains unchanged.

FIG. 13e shows a curve of a relationship between a focusing stroke compression ratio and an object distance in a focusing process of an optical lens assembly according to Embodiment 8 of this application. As shown in FIG. 13e, in a process in which the optical lens assembly is switched from a state of focusing on a near scene to a state of focusing on a distant scene, as the object distance increases, the focusing stroke compression ratio continuously decreases, and a lower side of the curve of the relationship between the focusing stroke compression ratio and the object distance approaches a line infinitely, where a value corresponding to an intersection point of the line and a vertical axis is the minimum value ξₘᵢₙ of the focusing stroke compression ratio.

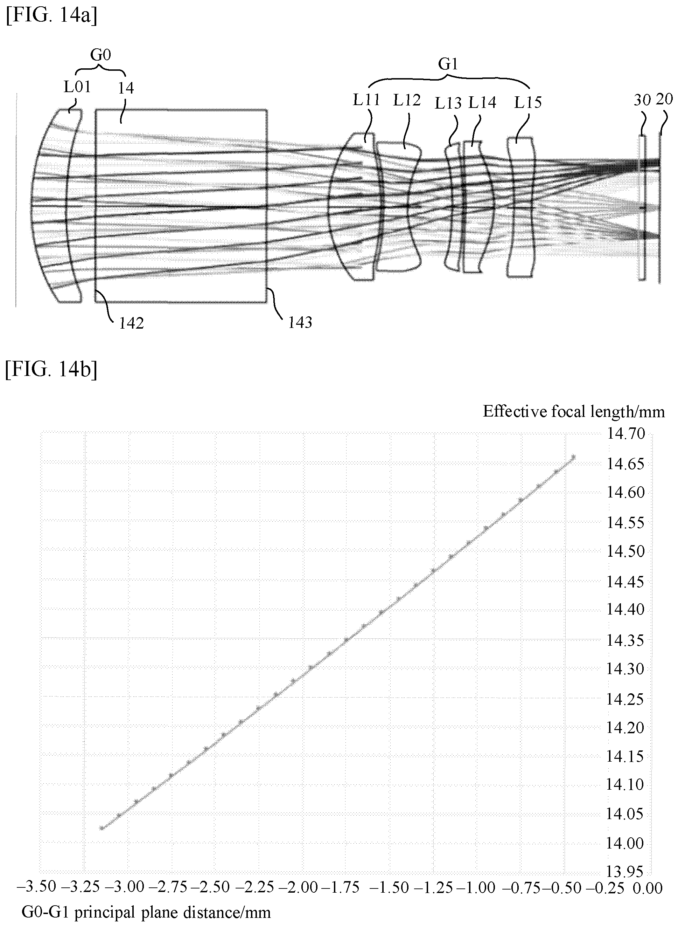

FIG. 14a is a diagram of an optical system of a camera module according to Embodiment 9 of this application. A first turning element in FIG. 14a is a prism, and the prism is equivalently replaced with parallel plates in an optical path. A main difference between the optical lens assembly shown in FIG. 14a and the optical lens assembly shown in FIG. 11a is that: The optical lens assembly in FIG. 14a is not provided with a second turning element 15, and the photosensitive element 20 and the optical lens assembly are arranged along the second optical axis 12.

The following specifically describes the optical system of the camera module shown in FIG. 14a in combination with specific parameters and simulation results.

As shown in Table 9.1 and Table 9.2, Table 9.1 shows some main parameters of the optical system of the camera module in Embodiment 9 of this application, and Table 9.2 shows aspheric coefficients of surfaces of the optical system of the camera module in Embodiment 9 of this application.

**Table 9.1**

| Surface number | Optical element | Surface type | Curvature radius | Thickness (INF) | Thickness (macro) | Materi al | Refracti ve index | Abbe number | Light transmis sion radius |
|---|---|---|---|---|---|---|---|---|---|
| OBJ | | | INFINIT Y | 1.0000E+1 0 | 170.191 0 | | | | 0.00 |
| S1 | L01 | Aspheric | 6.5747 | 1.1440 | | Resin | 1.5339 | 55.8284 | 3.17 |
| S2 | | Aspheric | 10.7571 | 0.9680 | | | | | 2.90 |
| S3 (STO) | Prism | Spherical | INFINIT Y | 5.6320 | | Glass | 1.9229 | 20.8799 | 3.17 |
| S4 | | Spherical | INFINIT Y | 3.1240 | 1.3640 | | | | 2.44 |
| S5 | | Spherical | INFINIT Y | -1.1067 | -1.1067 | | | | 2.10 |
| S6 | | | INFINIT Y | 0.0000 | | | | | 2.21 |
| S7 | L11 | Aspheric | 3.8400 | 1.7433 | | Resin | 1.5339 | 55.8284 | 2.41 |
| S8 | | Aspheric | -6.9905 | 0.0880 | | | | | 1.94 |
| S9 | L12 | Aspheric | -9.8216 | 0.7877 | | Resin | 1.6142 | 25.5765 | 1.94 |
| S10 | | Aspheric | 3.2900 | 1.4696 | | | | | 2.11 |
| S11 | L13 | Aspheric | -9.6748 | 0.3505 | | Resin | 1.5434 | 56.4893 | 2.11 |
| S12 | | Aspheric | -10.6313 | 0.0845 | | | | | 2.02 |
| S13 | L14 | Aspheric | -8.7596 | 0.9354 | | Resin | 1.6599 | 20.3704 | 1.94 |
| S14 | | Aspheric | -2.8961 | 0.6635 | | | | | 2.16 |
| S15 | L15 | Aspheric | -18.6139 | 0.5808 | | Resin | 1.6385 | 23.5074 | 2.11 |
| S16 | | Aspheric | 5.8254 | 3.5200 | | | | | 2.29 |
| S17 | IRCF | Spherical | INFINIT Y | 0.2100 | | Glass | 1.5168 | 64.1670 | 2.34 |
| S18 | | Spherical | INFINIT Y | 0.4746 | 2.2347 | | | | 2.37 |
| S19 | IMA | Spherical | INFINIT Y | 0.0000 | | | | | 2.50 |

In the table, S1 represents an object-side surface of the positive lens L01, and S2 represents an image-side surface of the positive lens L01. PRISM represents the first turning element 14, where the first turning element 14 is a prism and has a light deflection function. S3 represents the first light entrance surface 142 of the first turning element 14, S5 represents the first light exit surface 143 of the first turning element 14, S7 represents an object-side surface of the first lens L11, and S8 represents an image-side surface of the first lens L11. S9 represents an object-side surface of the second lens L12, and S10 represents an image-side surface of the second lens L12. S11 represents an object-side surface of the third lens L13, and S12 represents an image-side surface of the third lens L13. S13 represents an object-side surface of the fourth lens L14, and S14 represents an image-side surface of the fourth lens L14. S15 represents an object-side surface of the fifth lens L15, and S16 represents an image-side surface of the fifth lens L15. IRCF represents a light filter, where the light filter is an infrared light filter. S17 is an object-side surface of the light filter, and S18 is an image-side surface of the light filter. IMA represents an image plane IMAGE, and the image plane IMAGE may be a photosensitive surface of a photosensitive element.

In the "thickness" parameter column in the table, a value corresponding to a surface number Sₙ represents a distance between a surface with the surface number Sₙ and a surface with a surface number Sₙ₊₁ on an optical axis. Rules for positive and negative signs in front of the thickness parameter are as follows: A vertex (an intersection point with the optical axis) of the surface Sₙ is used as a calculation origin, and a vertex of the surface Sₙ₊₁ is positive on the right and negative on the left.

The curvature radius in the table is a curvature radius of a surface corresponding to a surface number on the optical axis. A rule of positive and negative signs in front of the curvature radius parameter is as follows: A vertex of the surface Sₙ is used as a calculation origin, and a sphere center is positive on the right, and negative on the left. If the curvature radius is INF, it indicates that a surface corresponding to the parameter is a plane, and the curvature radius is infinite.

**Table 9.2**

| Surface number | K | A₂ | A₄ | A₆ | A₈ |
|---|---|---|---|---|---|
| OBJ | 0.000E+00 | 0.000E+00 | 0.000E+00 | 0.000E+00 | 0.000E+00 |
| S1 | 0.000E+00 | 0.000E+00 | 2.405E-03 | -1.439E-03 | 5.391E-04 |
| S2 | 0.000E+00 | 0.000E+00 | 3.231E-03 | -2.086E-03 | 9.432E-04 |
| S3 (STO) | 0.000E+00 | 0.000E+00 | 0.000E+00 | 0.000E+00 | 0.000E+00 |
| S4 | 0.000E+00 | 0.000E+00 | 0.000E+00 | 0.000E+00 | 0.000E+00 |
| S5 | 0.000E+00 | 0.000E+00 | 0.000E+00 | 0.000E+00 | 0.000E+00 |
| S6 | 0.000E+00 | 0.000E+00 | 0.000E+00 | 0.000E+00 | 0.000E+00 |
| S7 | 0.000E+00 | 0.000E+00 | -2.378E-04 | 5.837E-04 | -7.796E-04 |
| S8 | 0.000E+00 | 0.000E+00 | 1.235E-03 | 4.660E-03 | -5.203E-03 |
| S9 | 0.000E+00 | 0.000E+00 | -4.618E-03 | 3.389E-03 | -2.145E-03 |
| S10 | 0.000E+00 | 0.000E+00 | 2.611E-03 | -9.330E-03 | 1.336E-02 |
| S11 | 0.000E+00 | 0.000E+00 | 6.275E-03 | -3.086E-02 | 3.448E-02 |
| S12 | 0.000E+00 | 0.000E+00 | 2.380E-02 | -3.310E-02 | 2.646E-02 |
| S13 | 0.000E+00 | 0.000E+00 | 2.408E-02 | 7.140E-03 | -1.802E-02 |
| S14 | 0.000E+00 | 0.000E+00 | 2.843E-02 | 1.633E-03 | -7.692E-03 |
| S15 | 0.000E+00 | 0.000E+00 | 4.952E-03 | -9.393E-03 | -1.922E-04 |
| S16 | 0.000E+00 | 0.000E+00 | -1.556E-02 | -5.363E-03 | 3.235E-03 |
| S17 | 0.000E+00 | 0.000E+00 | 0.000E+00 | 0.000E+00 | 0.000E+00 |
| S18 | 0.000E+00 | 0.000E+00 | 0.000E+00 | 0.000E+00 | 0.000E+00 |
| S19 | 0.000E+00 | 0.000E+00 | 0.000E+00 | 0.000E+00 | 0.000E+00 |

| Surface number | A₁₀ | A₁₂ | A₁₄ | A₁₆ |
|---|---|---|---|---|
| OBJ | 0.000E+00 | 0.000E+00 | 0.000E+00 | 0.000E+00 |
| S1 | -1.069E-04 | 1.183E-05 | -6.820E-07 | 1.591E-08 |
| S2 | -2.278E-04 | 3.055E-05 | -2.125E-06 | 5.968E-08 |
| S3 (STO) | 0.000E+00 | 0.000E+00 | 0.000E+00 | 0.000E+00 |
| S4 | 0.000E+00 | 0.000E+00 | 0.000E+00 | 0.000E+00 |
| S5 | 0.000E+00 | 0.000E+00 | 0.000E+00 | 0.000E+00 |
| S6 | 0.000E+00 | 0.000E+00 | 0.000E+00 | 0.000E+00 |
| S7 | 4.759E-04 | -1.390E-04 | 1.913E-05 | -9.922E-07 |
| S8 | 3.337E-03 | -1.246E-03 | 2.404E-04 | -1.828E-05 |
| S9 | 1.210E-03 | -5.765E-04 | 1.474E-04 | -1.418E-05 |
| S10 | -1.016E-02 | 3.811E-03 | -6.863E-04 | 4.209E-05 |
| S11 | -1.688E-02 | 3.527E-03 | -2.696E-04 | 5.979E-06 |
| S12 | -1.027E-02 | 1.526E-03 | 1.442E-05 | -1.448E-05 |
| S13 | 1.086E-02 | -3.261E-03 | 5.065E-04 | -3.223E-05 |
| S14 | 3.071E-03 | -3.901E-04 | -8.243E-06 | 4.755E-06 |
| S15 | 1.542E-03 | -5.109E-04 | 7.794E-05 | -4.563E-06 |
| S16 | -7.959E-04 | 1.095E-04 | -2.180E-05 | 2.750E-06 |
| S17 | 0.000E+00 | 0.000E+00 | 0.000E+00 | 0.000E+00 |
| S18 | 0.000E+00 | 0.000E+00 | 0.000E+00 | 0.000E+00 |
| S19 | 0.000E+00 | 0.000E+00 | 0.000E+00 | 0.000E+00 |

**Table 9.3**

| Parameter | TTL | ImgH | EFL | F/# | f1 | f2 | f3 | f4 | f5 | f6 |
|---|---|---|---|---|---|---|---|---|---|---|
| Value | 20.669 | 3.51 | 14.6592 | 2.7 | 28.8216 | 4.9028 | -3.8949 | -226.5383 | 6.1091 | -6.8321 |
| Unit | mm | mm | mm | / | mm | mm | mm | mm | mm | mm |

**Table 9.4 Object distance: INFINITY**

| Parameter | f_{A} | f_{g0} | f_{g1} | d_{A} | ξₘᵢₙ | f_{A}/f_{g0} | f_{A}/f_{g1} |
|---|---|---|---|---|---|---|---|
| Value | 14.6592 | 28.8216 | 30.2968 | -0.4483 | 0.741 | 0.509 | 0.484 |
| Unit | mm | mm | mm | mm | | | |

**Table 9.5 Object distance: Macro=170.191 mm**

| Parameter | f_{B} | f_{g0} | f_{g1} | d_{B} | ξ |
|---|---|---|---|---|---|
| Value | 14.2385 | 28.8216 | 30.2968 | -2.2083 | 0.796 |
| Unit | mm | mm | mm | mm | |

In Table 9.3 to Table 9.5, f1 is a focal length of the positive lens L01, f2 is a focal length of the first lens L11, f3 is a focal length of the second lens L12, f4 is a focal length of the third lens L13, f5 is a focal length of the fourth lens L14, f6 is a focal length of the fifth lens L15, f_{A} is an effective focal length of the optical lens assembly in a state of focusing on a distant scene, f_{B} is an effective focal length of the optical lens assembly in a state of focusing on a near scene, f_{g0} is an effective focal length of the front lens group G0, and f_{g1} is an effective focal length of the rear lens group G1. d_{A} is a distance between an image-space principal plane of the front lens group G0 and an object-space principal plane of the rear lens group G1 when the optical lens assembly is in a state of focusing on a distant scene (the object distance is infinite); and d_{B} is a distance between the image-space principal plane of the front lens group G0 and the object-space principal plane of the rear lens group G1 when the optical lens assembly is in a state of focusing on a near scene (the object distance is 170.191 mm).

It can be learned from the data in Table 9.4 and Table 9.5 that (f_{A}-f_{B})/f_{A}=0.0286.

FIG. 14b shows a curve of a relationship between an effective focal length and a distance between the image-space principal plane of the front lens group G0 and the object-space principal plane of the rear lens group G1 in a focusing process of the optical lens assembly according to Embodiment 9 of this application. As shown in FIG. 14b, in a process in which the optical lens assembly is switched from a state of focusing on a near scene to a state of focusing on a distant scene, the distance between the image-space principal plane of the front lens group G0 and the object-space principal plane of the rear lens group G1 continuously increases, and the effective focal length of the optical lens assembly continuously increases. The distance between the image-space principal plane of the front lens group G0 and the object-space principal plane of the rear lens group G1 changes linearly with the effective focal length of the optical lens assembly.

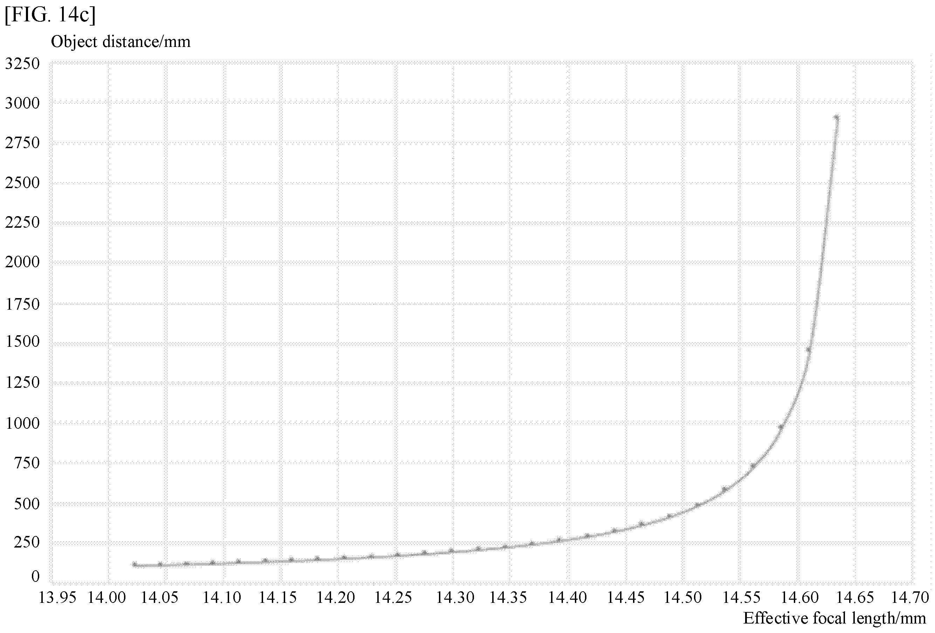

FIG. 14c shows a curve of a relationship between an object distance and an effective focal length in a focusing process of the optical lens assembly according to Embodiment 9 of this application. As shown in FIG. 14c, in a process in which the optical lens assembly switches from a state of focusing on a near scene to a state of focusing on a distant scene, the effective focal length of the optical lens assembly continuously increases as the object distance increases.

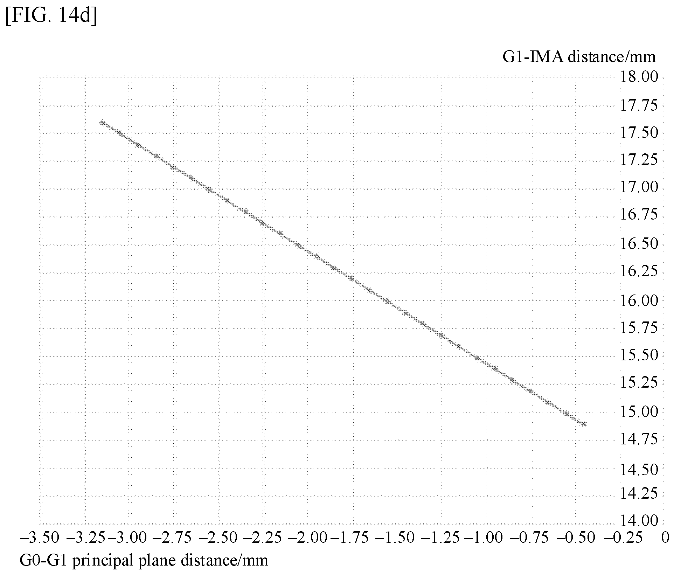

FIG. 14d shows a curve of a relationship between a distance between the image-space principal plane of the rear lens group G1 and an image plane IMA and a distance between the image-space principal plane of the front lens group G0 and the object-space principal plane of the rear lens group G1 in a focusing process of the optical lens assembly according to Embodiment 9 of this application. As shown in FIG. 14d, in a process in which the optical lens assembly is switched from a state of focusing on a near scene to a state of focusing on a distant scene, the image-space principal plane of the front lens group G0 and the object-space principal plane of the rear lens group G1 continuously increase, the distance from the image-space principal plane of the rear lens group G1 to the image plane IMA continuously decreases, and a total track length of the optical lens assembly remains unchanged.

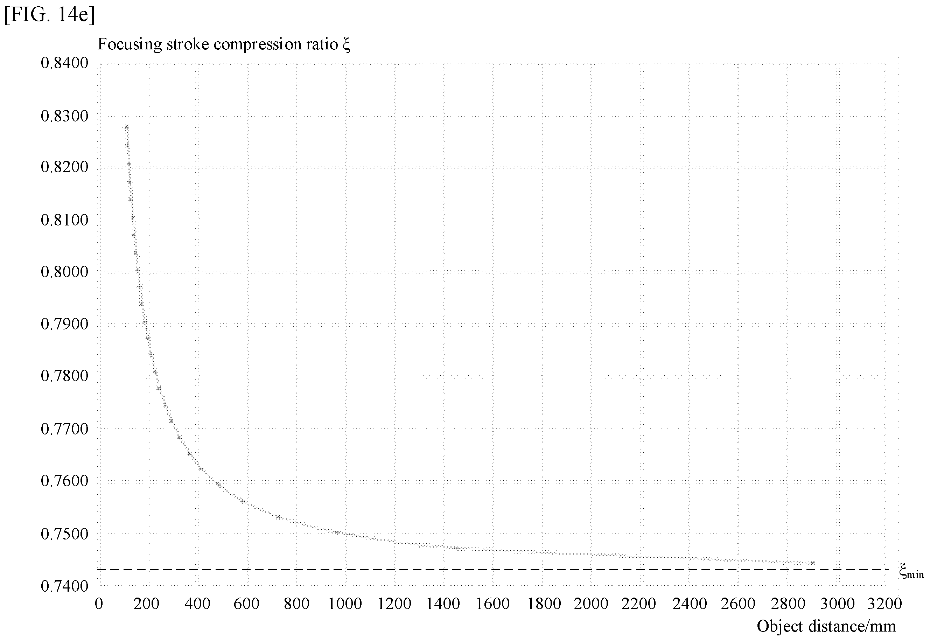

FIG. 14e shows a curve of a relationship between a focusing stroke compression ratio and an object distance in a focusing process of an optical lens assembly according to Embodiment 9 of this application. As shown in FIG. 14e, in a process in which the optical lens assembly is switched from a state of focusing on a near scene to a state of focusing on a distant scene, as the object distance increases, the focusing stroke compression ratio continuously decreases, and a lower side of the curve of the relationship between the focusing stroke compression ratio and the object distance approaches a line infinitely, where a value corresponding to an intersection point of the line and a vertical axis is the minimum value ξₘᵢₙ of the focusing stroke compression ratio.

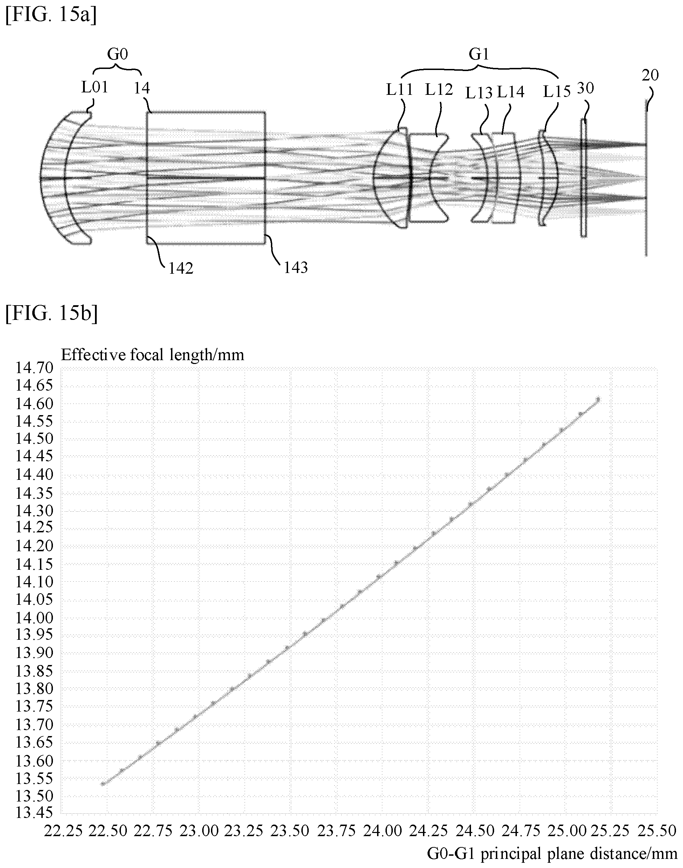

FIG. 15a is a diagram of an optical system of a camera module according to Embodiment 10 of this application. A first turning element in FIG. 15a is a prism, and the prism is equivalently replaced with parallel plates in an optical path. A main difference between the optical lens assembly shown in FIG. 15a and the optical lens assembly shown in FIG. 11a is that: The optical lens assembly in FIG. 15a is not provided with a second turning element 15, and the photosensitive element and the optical lens assembly are arranged along the second optical axis 12.

The following specifically describes the optical system of the camera module shown in FIG. 15a in combination with specific parameters and simulation results.

As shown in Table 10.1 and Table 10.2, Table 10.1 shows some main parameters of the optical system of the camera module in Embodiment 10 of this application, and Table 10.2 shows aspheric coefficients of surfaces of the optical system of the camera module in Embodiment 10 of this application.

**Table 10.1**

| Surface number | Optical element | Surface type | Curvature radius | Thickness (INF) | Thickness (macro) | Material | Refractive index | Abbe number | Light transmiss ion radius |
|---|---|---|---|---|---|---|---|---|---|
| OBJ | | | INFINITY | 1.00E+10 | 118.6000 | | | | 0.00 |
| S1 | L01 | Aspheric | 3.932 | 1.032 | | Resin | 1.5339 | 55.8284 | 2.84 |
| S2 | | Aspheric | 4.193 | 3.528 | | | | | 2.60 |
| S3 (STO) | Prism | Spherical | INFINIT Y | 5.046 | | Glass | 1.9229 | 20.8799 | 2.84 |
| S4 | | Spherical | INFINIT Y | 3.3904 | 1.790 | | | | 2.86 |
| S5 | | Spherical | INFINIT Y | 1.251 | 1.251 | | | | 3.07 |
| S6 | | | INFINIT Y | 0.000 | | | | | 3.16 |
| S7 | L11 | Aspheric | 2.376 | 1.571 | | Resin | 1.5339 | 55.8284 | 2.16 |
| S8 | | Aspheric | -8.681 | 0.079 | | | | | 1.73 |
| S9 | L12 | Aspheric | -9.859 | 0.762 | | Resin | 1.6142 | 25.5765 | 1.73 |
| S10 | | Aspheric | 2.099 | 2.463 | | | | | 1.89 |
| S11 | L13 | Aspheric | -2.974 | 0.415 | | Resin | 1.5434 | 56.4893 | 1.89 |
| S12 | | Aspheric | -6.884 | 0.076 | | | | | 1.81 |
| S13 | L14 | Aspheric | -3.203 | 0.912 | | Resin | 1.6599 | 20.3704 | 1.73 |
| S14 | | Aspheric | -3.160 | 1.000 | | | | | 1.93 |
| S15 | L15 | Aspheric | -8.730 | 0.608 | | Resin | 1.6385 | 23.5074 | 1.89 |
| S16 | | Aspheric | -3.199 | 1.000 | | | | | 2.05 |
| S17 | IRCF | Spherical | INFINIT Y | 0.210 | | Glass | 1.5168 | 64.1670 | 2.50 |
| S18 | | Spherical | INFINITY | 2.577 | 4.177 | | | | 2.54 |
| S19 | IMA | Spherical | INFINITY | 0.000 | | | | | 3.38 |

In the table, S1 represents an object-side surface of the positive lens L01, and S2 represents an image-side surface of the positive lens L01. PRISM represents the first turning element 14, where the first turning element 14 is a prism and has a light deflection function. S3 represents the first light entrance surface 142 of the first turning element 14, S5 represents the first light exit surface 143 of the first turning element 14, S7 represents an object-side surface of the first lens L11, and S8 represents an image-side surface of the first lens L11. S9 represents an object-side surface of the second lens L12, and S10 represents an image-side surface of the second lens L12. S11 represents an object-side surface of the third lens L13, and S12 represents an image-side surface of the third lens L13. S13 represents an object-side surface of the fourth lens L14, and S14 represents an image-side surface of the fourth lens L14. S15 represents an object-side surface of the fifth lens L15, and S16 represents an image-side surface of the fifth lens L15. IRCF represents a light filter, where the light filter is an infrared light filter. S17 is an object-side surface of the light filter, and S18 is an image-side surface of the light filter. IMA represents an image plane IMAGE, and the image plane IMAGE may be a photosensitive surface of a photosensitive element.

In the "thickness" parameter column in the table, a value corresponding to a surface number Sₙ represents a distance between a surface with the surface number Sₙ and a surface with a surface number Sₙ₊₁ on an optical axis. Rules for positive and negative signs in front of the thickness parameter are as follows: A vertex (an intersection point with the optical axis) of the surface Sₙ is used as a calculation origin, and a vertex of the surface Sₙ₊₁ is positive on the right and negative on the left.

The curvature radius in the table is a curvature radius of a surface corresponding to a surface number on the optical axis. A rule of positive and negative signs in front of the curvature radius parameter is as follows: A vertex of the surface Sₙ is used as a calculation origin, and a sphere center is positive on the right, and negative on the left. If the curvature radius is INF, it indicates that a surface corresponding to the parameter is a plane, and the curvature radius is infinite.

**Table 10.2**

| Surface number | K | A₂ | A₄ | A₆ | A₈ |
|---|---|---|---|---|---|
| OBJ | 0.000E+00 | 0.00E+00 | 0.00E+00 | 0.00E+00 | 0.00E+00 |
| S1 | 0.000E+00 | 3.07E-04 | 3.62E-03 | -2.57E-03 | 1.16E-03 |
| S2 | 0.000E+00 | 7.65E-05 | 4.44E-03 | -3.53E-03 | 2.03E-03 |
| S3 (STO) | 0.000E+00 | 0.00E+00 | 0.00E+00 | 0.00E+00 | 0.00E+00 |
| S4 | 0.000E+00 | 0.00E+00 | 0.00E+00 | 0.00E+00 | 0.00E+00 |
| S5 | 0.000E+00 | 0.00E+00 | 0.00E+00 | 0.00E+00 | 0.00E+00 |
| S6 | 0.000E+00 | 0.00E+00 | 0.00E+00 | 0.00E+00 | 0.00E+00 |
| S7 | 0.000E+00 | -1.54E-03 | -5.20E-03 | 6.11E-04 | -1.80E-03 |
| S8 | 0.000E+00 | -1.23E-03 | -5.20E-04 | 7.96E-03 | -1.12E-02 |
| S9 | 0.000E+00 | 9.02E-04 | -4.00E-03 | 6.32E-03 | -4.50E-03 |
| S10 | 0.000E+00 | 3.96E-03 | -1.71E-03 | -1.42E-02 | 2.97E-02 |
| S11 | 0.000E+00 | 6.45E-03 | 2.48E-02 | -5.48E-02 | 7.35E-02 |
| S12 | 0.000E+00 | -3.81E-03 | 2.13E-02 | -5.65E-02 | 5.74E-02 |
| S13 | 0.000E+00 | 1.50E-03 | 3.53E-02 | 1.23E-02 | -3.86E-02 |
| S14 | 0.000E+00 | -2.11E-03 | 4.57E-02 | 3.38E-03 | -1.65E-02 |
| S15 | 0.000E+00 | 3.66E-03 | 2.89E-03 | -1.59E-02 | 1.42E-04 |
| S16 | 0.000E+00 | -7.61E-03 | -1.02E-02 | -9.88E-03 | 6.75E-03 |
| S17 | 0.000E+00 | 0.00E+00 | 0.00E+00 | 0.00E+00 | 0.00E+00 |
| S18 | 0.000E+00 | 0.00E+00 | 0.00E+00 | 0.00E+00 | 0.00E+00 |
| S19 | 0.000E+00 | 0.00E+00 | 0.00E+00 | 0.00E+00 | 0.00E+00 |

| Surface number | A₁₀ | A₁₂ | A14 | A₁₆ |
|---|---|---|---|---|
| OBJ | 0.00E+00 | 0.00E+00 | 0.00E+00 | 0.00E+00 |
| S1 | -2.87E-04 | 3.97E-05 | -2.83E-06 | 8.46E-08 |
| S2 | -6.12E-04 | 1.02E-04 | -8.80E-06 | 3.25E-07 |
| S3 (STO) | 0.00E+00 | 0.00E+00 | 0.00E+00 | 0.00E+00 |
| S4 | 0.00E+00 | 0.00E+00 | 0.00E+00 | 0.00E+00 |
| S5 | 0.00E+00 | 0.00E+00 | 0.00E+00 | 0.00E+00 |
| S6 | 0.00E+00 | 0.00E+00 | 0.00E+00 | 0.00E+00 |
| S7 | 1.25E-03 | -4.69E-04 | 7.98E-05 | -4.80E-06 |
| S8 | 8.97E-03 | -4.16E-03 | 1.01E-03 | -9.37E-05 |
| S9 | 3.28E-03 | -1.92E-03 | 6.16E-04 | -7.18E-05 |
| S10 | -2.72E-02 | 1.27E-02 | -2.87E-03 | 2.26E-04 |
| S11 | -4.54E-02 | 1.18E-02 | -1.14E-03 | 1.74E-05 |
| S12 | -2.76E-02 | 5.08E-03 | 5.70E-05 | -8.07E-05 |
| S13 | 2.93E-02 | -1.09E-02 | 2.11E-03 | -1.68E-04 |
| S14 | 8.25E-03 | -1.31E-03 | -3.63E-05 | 1.92E-05 |
| S15 | 4.42E-03 | -1.68E-03 | 2.70E-04 | -1.56E-05 |
| S16 | -2.13E-03 | 4.79E-04 | -5.71E-05 | 5.46E-06 |
| S17 | 0.00E+00 | 0.00E+00 | 0.00E+00 | 0.00E+00 |
| S18 | 0.00E+00 | 0.00E+00 | 0.00E+00 | 0.00E+00 |
| S19 | 0.00E+00 | 0.00E+00 | 0.00E+00 | 0.00E+00 |

**Table 10.3**

| Parameter | TTL | ImgH | EFL | F/# | f1 | f2 | f3 | f4 | f5 | f6 |
|---|---|---|---|---|---|---|---|---|---|---|
| Value | 25.921 | 3.51 | 14.6122 | 2.75 | 48.9535 | 3.6713 | -2.7038 | -11.2436 | 31.5748 | 6.7886 |
| Unit | mm | mm | mm | / | mm | mm | mm | mm | mm | mm |

Table 10.4 Object distance: INFINITY

| Parameter | f_{A} | f_{g0} | f_{g1} | d_{A} | ξₘᵢₙ | f_{A}/f_{g0} | f_{A}/f_{g1} |
|---|---|---|---|---|---|---|---|
| Value | 14.6122 | 48.9535 | 10.1137 | 25.1844 | 0.911 | 0.298 | 1.445 |
| Unit | mm | mm | mm | mm | | | |

**Table 10.5 Object distance: Macro=118.60 mm**

| Parameter | f_{B} | f_{g0} | f_{g1} | d_{B} | ξ |
|---|---|---|---|---|---|
| Value | 13.9533 | 48.9535 | 10.1137 | 23.5844 | 1.008 |
| Unit | mm | mm | mm | mm | |

In Table 10.3 to Table 10.5, f1 is a focal length of the positive lens L01, f2 is a focal length of the first lens L11, f3 is a focal length of the second lens L12, f4 is a focal length of the third lens L13, f5 is a focal length of the fourth lens L14, f6 is a focal length of the fifth lens L15, f_{A} is an effective focal length of the optical lens assembly in a state of focusing on a distant scene, f_{B} is an effective focal length of the optical lens assembly in a state of focusing on a near scene, f_{g0} is an effective focal length of the front lens group G0, and f_{g1} is an effective focal length of the rear lens group G1. dA is a distance between the image-space principal plane of the front lens group G0 and the object-space principal plane of the rear lens group G1 when the optical lens assembly is in a state of focusing on a distant scene (the object distance is infinite); d_{B} is a distance between the image-space principal plane of the front lens group G0 and the object-space principal plane of the rear lens group G1 when the optical lens assembly is in a state of focusing on a near scene (the object distance is 118.60 mm).

It can be learned from the data in Table 10.4 and Table 10.5 that (f_{A}-f_{B})/f_{A}=0.045.

FIG. 15b shows a curve of a relationship between an effective focal length and a distance between the image-space principal plane of the front lens group G0 and the object-space principal plane of the rear lens group G1 in a focusing process of the optical lens assembly according to Embodiment 10 of this application. As shown in FIG. 15b, in a process in which the optical lens assembly is switched from a state of focusing on a near scene to a state of focusing on a distant scene, the distance between the image-space principal plane of the front lens group G0 and the object-space principal plane of the rear lens group G1 continuously increases, and the effective focal length of the optical lens assembly continuously increases. The distance between the image-space principal plane of the front lens group G0 and the object-space principal plane of the rear lens group G1 changes linearly with the effective focal length of the optical lens assembly.

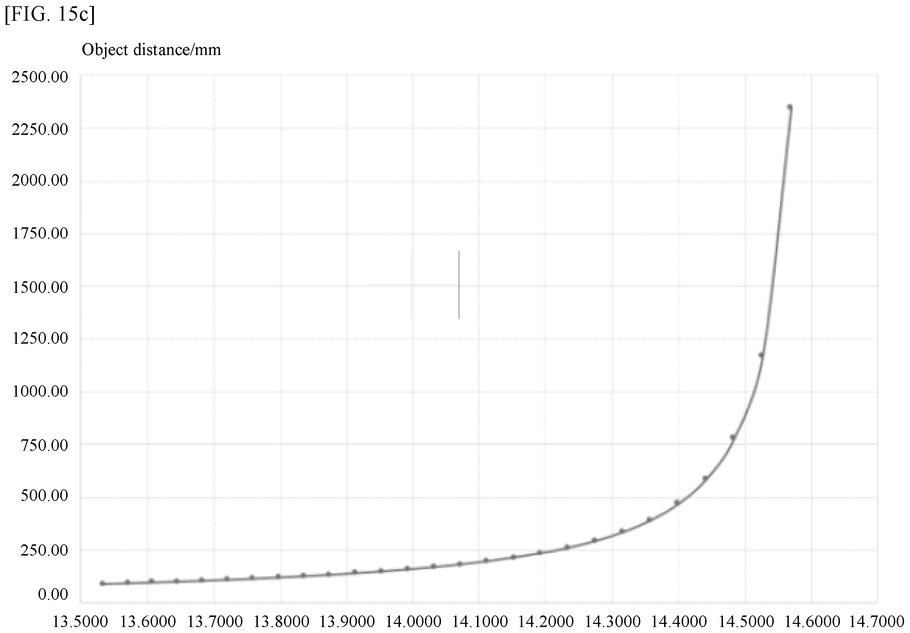

FIG. 15c shows a curve of a relationship between an object distance and an effective focal length in a focusing process of the optical lens assembly according to Embodiment 10 of this application. As shown in FIG. 15c, in a process in which the optical lens assembly switches from a state of focusing on a near scene to a state of focusing on a distant scene, the effective focal length of the optical lens assembly continuously increases as the object distance increases.

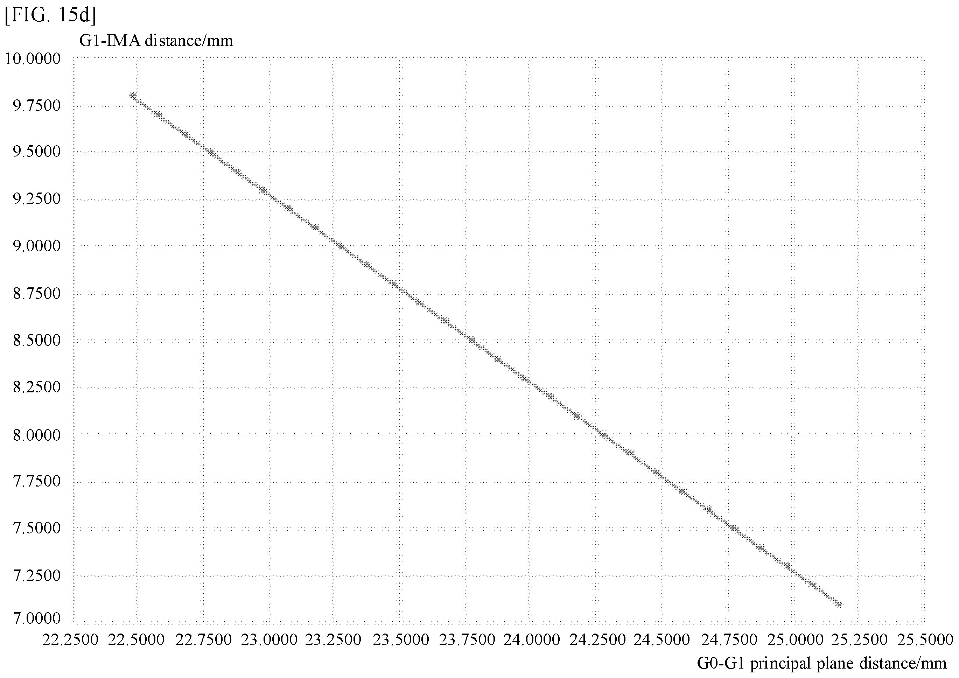

FIG. 15d shows a curve of a relationship between a distance between the image-space principal plane of the rear lens group G1 and an image plane IMA and a distance between the image-space principal plane of the front lens group G0 and the object-space principal plane of the rear lens group G1 in a focusing process of the optical lens assembly according to Embodiment 10 of this application. As shown in FIG. 15d, in a process in which the optical lens assembly is switched from a state of focusing on a near scene to a state of focusing on a distant scene, the image-space principal plane of the front lens group G0 and the object-space principal plane of the rear lens group G1 continuously increase, the distance from the image-space principal plane of the rear lens group G1 to the image plane IMA continuously decreases, and a total track length of the optical lens assembly remains unchanged.

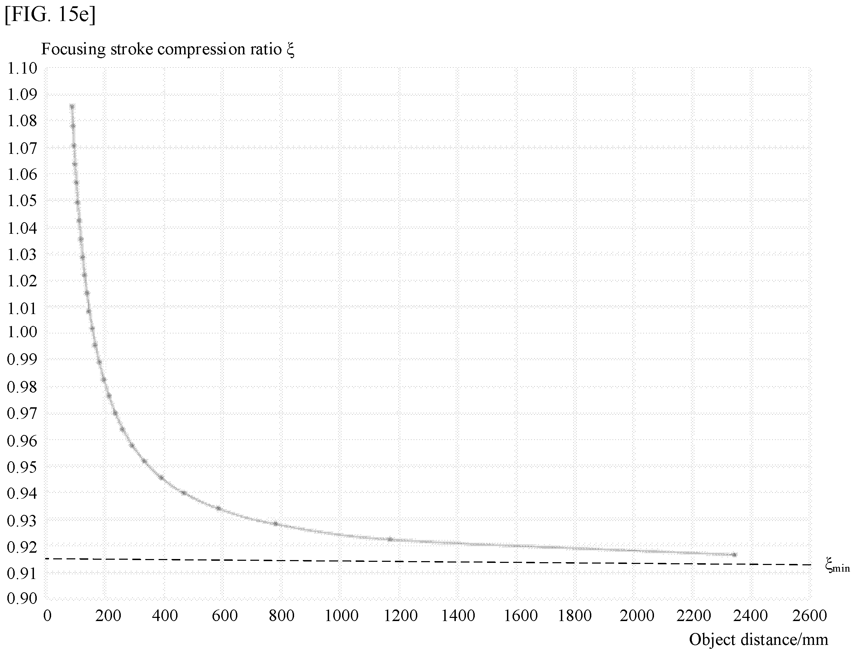

FIG. 15e shows a curve of a relationship between a focusing stroke compression ratio and an object distance in a focusing process of an optical lens assembly according to Embodiment 10 of this application. As shown in FIG. 15e, in a process in which the optical lens assembly is switched from a state of focusing on a near scene to a state of focusing on a distant scene, as the object distance increases, the focusing stroke compression ratio continuously decreases, and a lower side of the curve of the relationship between the focusing stroke compression ratio and the object distance approaches a line infinitely, where a value corresponding to an intersection point of the line and a vertical axis is the minimum value ξₘᵢₙ of the focusing stroke compression ratio.

A type of sectional line in the accompanying drawings of this application is used to distinguish between different components, and should not be understood as a limitation on a component material. The accompanying drawings of this application are intended to show structural composition, and are not shown according to a proportion of an actual product.

Although this application is described with reference to some embodiments, this does not mean that features of this application are limited only to the implementations. On the contrary, a purpose of describing this application with reference to an implementation is to cover another option or modification that may be derived based on claims of this application. To provide an in-depth understanding of this application, the following descriptions include a plurality of specific details. This application may be alternatively implemented without using these details. In addition, to avoid confusion or blurring a focus of this application, some specific details are omitted from the description. It should be noted that embodiments in this application and the features in embodiments may be mutually combined in the case of no conflict.

The terms "first", "second", "third", "fourth", and "fifth" in embodiments of this application are merely intended for a purpose of description, and shall not be understood as an indication or implication of relative importance or implicit indication of a quantity of indicated technical features. Therefore, a feature limited by "first", "second", "third", "fourth", or "fifth" may explicitly or implicitly include one or more features.

The term "and/or" in embodiments of this application describes only an association relationship for describing associated objects and indicates that three relationships may exist. For example, A and/or B may indicate the following three cases: Only A exists, both A and B exist, and only B exists. In addition, the character "/" in this specification generally indicates an "or" relationship between the associated objects.

In the descriptions of embodiments of this application, it should be noted that terms "mounting" and "connection" should be understood in a broad sense unless there is a clear stipulation and limitation. For example, "connection" may be a detachable connection, a nondetachable connection, a direct connection, or an indirect connection through an intermediate medium. The orientation terms mentioned in embodiments of this application, for example, "up", "down", "left", "right", "inside", and "outside", are merely directions based on the accompanying drawings. Therefore, the orientation terms are used to better and more clearly describe and understand embodiments of this application, instead of indicating or implying that a specified apparatus or element should have a specific orientation and be constructed and operated in a specific orientation. Therefore, this cannot be understood as a limitation on embodiments of this application. "A plurality of" means at least two.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

Finally, it should be noted that the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. An optical lens assembly, comprising a front lens group (G0) and a rear lens group (G1) located on an image side of the front lens group (G0), wherein
the front lens group (G0) comprises a first turning element (14) and at least one positive lens located on an object side of the first turning element (14), the first turning element (14) has a first reflective surface (141), the first reflective surface (141) is configured to reflect a light beam passing through the at least one positive lens to the rear lens group (G1), and the rear lens group (G1) is a focusing lens group and is movable relative to the front lens group (G0) along an optical axis of the rear lens group (G1); and
an effective focal length f_{g0} of the front lens group (G0) and an effective focal length f_{A} of the optical lens assembly in a state of focusing on a distant scene satisfy: f_{A}/f_{g0}<1.0.

2. The optical lens assembly according to claim 1, wherein${f}_{A} / {f}_{g 0} \leq 0.38 .$

3. The optical lens assembly according to claim 1, wherein${f}_{A} / {f}_{g 0} \geq 0.392 .$

4. The optical lens assembly according to any one of claims 1 to 3, wherein
a minimum value of a focusing stroke compression ratio of the rear lens group $\left(G1\right) is {ξ}_{min} = \left|1-{\left({f}_{A}/{f}_{g 0}\right)}^{2}\right| ,$
ξₘᵢₙ satisfies: ξₘᵢₙ<1.0.

5. The optical lens assembly according to claim 4, wherein${ξ}_{min} \geq 0.855 .$

6. The optical lens assembly according to claim 4, wherein${ξ}_{min} \leq 0.846 .$

7. The optical lens assembly according to any one of claims 1 to 6, wherein
the focusing stroke compression ratio ξ of the rear lens group (G1) satisfies: $0.74 \leq ξ \leq 1.15 .$

8. The optical lens assembly according to claim 7, wherein
when the optical lens assembly is in a state of focusing on a near scene, ξ satisfies: $ξ \geq 0.9 .$

9. The optical lens assembly according to any one of claims 1 to 8, wherein
an effective focal length f_{g1} of the rear lens group (G1) and the effective focal length f_{A} of the optical lens assembly in the state of focusing on a distant scene satisfy: ${f}_{A} / {f}_{g 1} \geq 0.47 .$

10. The optical lens assembly according to claim 9, wherein${f}_{A} / {f}_{g 1} \leq 1.5 .$

11. The optical lens assembly according to any one of claims 1 to 10, wherein
the effective focal length f_{A} of the optical lens assembly in the state of focusing on a distant scene and an effective focal length f_{B} of the optical lens assembly in the state of focusing on a near scene satisfy: (f_{A}-f_{B})/f_{A}<0.09.

12. The optical lens assembly according to any one of claims 1 to 11, wherein
both the front lens group (G0) and the rear lens group (G1) have positive focal powers.

13. The optical lens assembly according to claim 12, wherein
the rear lens group (G1) comprises a first lens (L11), a second lens (L12), a third lens (L13), a fourth lens (L14), and a fifth lens (L15) in a direction from an object side to an image side, wherein the first lens (L11) has a positive focal power, the second lens (L12) has a negative focal power, one of the third lens (L13) and the fourth lens (L14) has a positive focal power, the other of the third lens (L13) and the fourth lens (L14) has a negative focal power, and the fifth lens (L15) has a negative focal power or a positive focal power.

14. The optical lens assembly according to claim 13, wherein
the second lens (L12) comprises one positive lens and one negative lens that are spaced apart.

15. The optical lens assembly according to any one of claims 1 to 14, wherein
the first turning element (14) is a reflector; or
the first turning element (14) is a prism and has a first light entrance surface (142) and a first light exit surface (143), the first light entrance surface (142) is disposed facing a side on which the at least one positive lens is located, and the first light exit surface (143) is disposed facing a side on which the rear lens group (G1) is located; and in the at least one positive lens, a positive lens adjacent to the first turning element (14) and the first light entrance surface (142) are spaced apart.

16. The optical lens assembly according to any one of claims 1 to 15, wherein
the optical lens assembly further comprises a second turning element (15), the second turning element (15) is disposed on the image side of the rear lens group (G1), the second turning element (15) has a second reflective surface (151), and the second reflective surface (151) is configured to reflect a light beam passing through the rear lens group (G1) to a side of the optical axis of the rear lens group (G1).

17. The optical lens assembly according to claim 16, wherein
the second turning element (15) is a reflector; or
the second turning element (15) is a prism and has a second light entrance surface (152) and a second light exit surface (153), the second light entrance surface (152) is disposed facing the side on which the rear lens group (G1) is located, and the second light exit surface (153) is located on the side of the optical axis of the rear lens group (G1).

18. A camera module, comprising a photosensitive element (20) and the optical lens assembly (10) according to any one of claims 1 to 17, wherein the photosensitive element (20) is disposed on an image side of the optical lens assembly (10).

19. An electronic device, comprising a housing (200) and the camera module (100) according to claim 18, wherein the camera module (100) is mounted on the housing (200).
